(19) Europäisches Patentamt
European Patent Office
Office européen des brevets

(11) **EP 4 648 339 A1**

(12) **EUROPEAN PATENT APPLICATION**

(43) Date of publication:
**12.11.2025 Bulletin 2025/46**

(51) International Patent Classification (IPC):
*H04L 5/00* (2006.01)   *H04B 7/08* (2006.01)
*H04W 72/23* (2023.01)   *H04L 5/14* (2006.01)

(21) Application number: **25171753.4**

(22) Date of filing: **22.04.2025**

(52) Cooperative Patent Classification (CPC):
**H04L 5/0053; H04B 7/088; H04L 5/0005;**
**H04L 5/0023; H04L 5/0044; H04L 5/0048;**
**H04L 5/0051; H04L 5/0094; H04L 5/14;**
H04L 5/001; H04W 72/23

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.05.2024   US 202463645152 P**
**10.05.2024   US 202463645159 P**
**18.04.2025   US 202519182624**

(71) Applicant: **Acer Incorporated**
**New Taipei City 221 (TW)**

(72) Inventors:
• **LO, Li-Chung**
**New Taipei City (TW)**

• **LEE, Chien-Min**
**New Taipei City (TW)**
• **CHEN, Jen-Hsien**
**New Taipei City (TW)**

(74) Representative: **Haseltine Lake Kempner LLP**
**One Portwall Square**
**Portwall Lane**
**Bristol BS1 6BH (GB)**

Remarks:
A request for correction of the description has been filed pursuant to Rule 139 EPC. A decision on the request will be taken during the proceedings before the Examining Division (Guidelines for Examination in the EPO, A-V, 3.).

(54) **METHOD USED BY USER EQUIPMENT, METHOD USED BY NETWORK DEVICE, AND USER EQUIPMENT**

(57) A method used by a user equipment (UE), a method used by a network device (NW), and a user equipment (UE) are provided. The method includes: receiving a downlink, DL, information configuration, wherein the DL information configuration is associated with time and frequency domain information for receiving DL information; receiving the DL information for scheduling physical downlink shared channel, PDSCH; and receiving the PDSCH according to the DL information and a first TCI stat. The first TCI state comprises parameters for configuring a relationship between downlink reference signal and at least one demodulation reference signal, DM-RS, port of the PDSCH.

```
┌─────────────────────────────────────────────┐
│   receiving a DL information configuration    │──── S1210
└─────────────────────────────────────────────┘
                     │
                     ▼
┌─────────────────────────────────────────────┐
│  receiving the DL information for scheduling  │──── S1220
│                  PDSCH                        │
└─────────────────────────────────────────────┘
                     │
                     ▼
┌─────────────────────────────────────────────┐
│ receiving the PDSCH according to the DL       │──── S1230
│ information and a first TCI state             │
└─────────────────────────────────────────────┘
```

**FIG. 12**

EP 4 648 339 A1

**Description**

TECHNICAL FIELD

The present disclosure generally relates to a method used by a user equipment, a method used by a network device, and a user equipment.

BACKGROUND

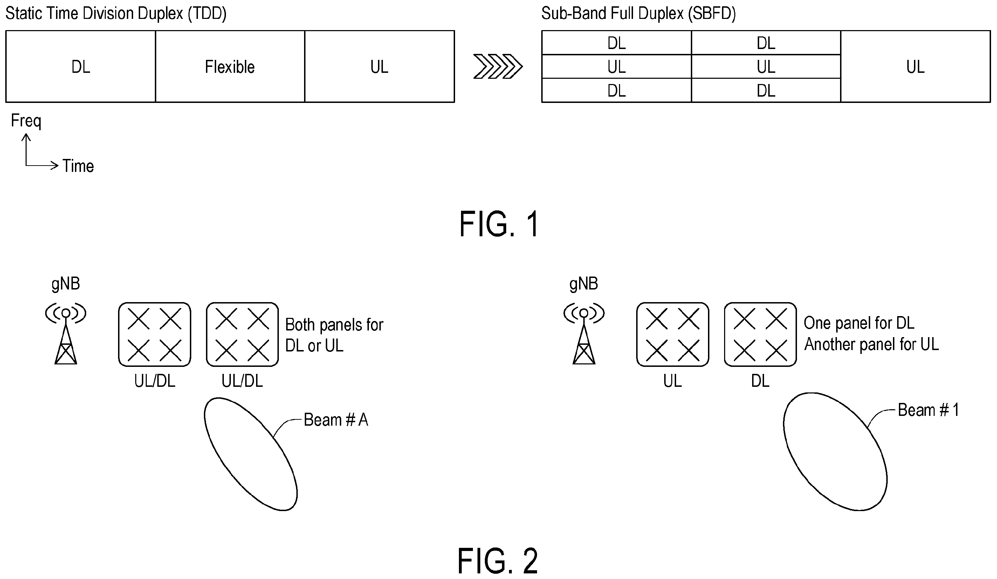

FIG. 1 is a schematic diagram that illustrates static time division duplex (TDD) and sub-band full duplex (SBFD). Referring to FIG. 1, on duplex operation, a new time resource type that is SBFD was introduced. In SBFD, downlink (DL) and uplink (UL) sub-bands would be allocated in the same symbols. However, in the time division duplex (TDD), DL and UL bands would be not allocated in the same symbol.

FIG. 2 is a schematic diagram that illustrates simultaneous transmit (Tx) and receive (Rx) in a multi-panel transmission scheme. Referring to FIG. 2, for simultaneous Tx/Rx and reducing adjacent channel interference, separate antenna panels may be supported. For example, panel 1 for UL transmission, and panel 2 for DL reception. However, the same beam (e.g., beam #A) for DL reception may be not only in SBFD resources but also in non-SBFD resources, and result in performance loss due to improper beam application for DL reception in both SBFD and non-SBFD resources.

SUMMARY

Accordingly, the present disclosure is directed to a method used by a user equipment (UE), a method used by a network device, and a UE.

According to one or more exemplary embodiments of the disclosure, a method used by user equipment (UE) in a wireless communication system is provided. The method includes: receiving a downlink (DL) information configuration, wherein the DL information configuration is associated with time and frequency domain information for receiving DL information; receiving the DL information for scheduling physical downlink shared channel (PDSCH); and receiving the PDSCH according to the DL information and a first TCI stat. The first TCI state comprises parameters for configuring a relationship between a downlink reference signal and at least one demodulation reference signal (DM-RS) port of the PDSCH.

According to one or more exemplary embodiments of the disclosure, a UE includes a transceiver, a memory, and a processor. The transceiver is used for transmitting or receiving signals. The memory is used for storing a program code. The processor is coupled to the transceiver and the memory. The processor is configured for executing the program to: receiving a DL information configuration through the transceiver, wherein the DL information configuration is associated with time and frequency domain information for receiving DL information; receiving the DL information for scheduling PDSCH through the transceiver; and receiving the PDSCH through the transceiver according to the DL information and a first TCI stat. The first TCI state comprises parameters for configuring a relationship between a downlink reference signal and at least one DM-RS port of the PDSCH.

According to one or more exemplary embodiments of the disclosure, a method used by a network device in a wireless communication system is provided. The method includes: transmitting a DL information configuration, wherein the DL information configuration is associated with time and frequency domain information for receiving DL information; transmitting the DL information for scheduling PDSCH; and transmitting the PDSCH according to the DL information and a first TCI stat. The first TCI state comprises parameters for configuring a relationship between a downlink reference signal and at least one DM-RS port of the PDSCH.

To make the aforementioned more comprehensible, several embodiments accompanied with drawings are described in detail as follows.

BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 is a schematic diagram that illustrates static time division duplex (TDD) and sub-band full duplex (SBFD).

FIG. 2 is a schematic diagram that illustrates simultaneous transmit (Tx) and receive (Rx) in a multi-panel transmission scheme.

FIG. 3A is a schematic diagram that illustrates search space SS set monitoring for DCI reception.

FIG. 3B is a schematic diagram that illustrates a transmission configuration indication (TCI) state in a medium access

EP 4 648 339 A1

control (MAC) control element (CE).

FIG. 4A is a schematic diagram that illustrates a common type SS set.

FIG. 4B is a schematic diagram that illustrates a UE-specific SS set.

FIG. 5A is a schematic diagram that illustrates downlink (DL) scheduling on non-unified transmission configuration indication (TCI) framework.

FIG. 5B is a schematic diagram that illustrates codepoints of TCI field.

FIG. 6A is a schematic diagram that illustrates two TCI states for DL receptions.

FIG. 6B is a schematic diagram that illustrates a resource allocation of control resource set (CORESET) for PDSCH with TCI field.

FIG. 7A is a schematic diagram that illustrates two TCI states for DL receptions.

FIG. 7B is a schematic diagram that illustrates a resource allocation of CORESET for PDSCH without TCI field.

FIG. 8 is a schematic diagram that illustrates downlink (DL) scheduling TCI framework.

FIG. 9A is a schematic diagram that illustrates a resource allocation in TDD.

FIG. 9B is a schematic diagram that illustrates a resource allocation in SBFD.

FIG. 9C is a schematic diagram that illustrates a beam management for non-SBFD symbols.

FIG. 9D is a schematic diagram that illustrates a beam management for SBFD symbols.

FIG. 10 is a schematic diagram that illustrates a situation that scheduling DCI for determining time and frequency resources.

FIG. 11 is a schematic diagram that illustrates a radio communication network architecture according to an exemplary embodiment of the present disclosure.

FIG. 12 is a flow chart that illustrates a method according to an exemplary embodiment of the present disclosure.

FIG. 13A is a schematic diagram that illustrates an association of CORESETs and resource types according to an exemplary embodiment of the present disclosure.

FIG. 13B is a schematic diagram that illustrates a resource allocation of CORESETs according to an exemplary embodiment of the present disclosure.

FIG. 14A is a schematic diagram that illustrates an association of CORESETs and resource types according to an exemplary embodiment of the present disclosure.

FIG. 14B is a schematic diagram that illustrates a resource allocation of CORESETs according to an exemplary embodiment of the present disclosure.

FIG. 15A is a schematic diagram that illustrates an association of CORESET and resource types according to an exemplary embodiment of the present disclosure.

FIG. 15B is a schematic diagram that illustrates a resource allocation of CORESET according to an exemplary embodiment of the present disclosure.

FIG. 16A is a schematic diagram that illustrates an association of CORESETs and resource types according to an exemplary embodiment of the present disclosure.

FIG. 16B is a schematic diagram that illustrates a resource allocation of CORESETs according to an exemplary embodiment of the present disclosure.

FIG. 17A is a schematic diagram that illustrates an association of CORESETs and resource types according to an exemplary embodiment of the present disclosure.

FIG. 17B is a schematic diagram that illustrates a resource allocation of CORESETs according to an exemplary embodiment of the present disclosure.

FIG. 18 is a schematic diagram that illustrates an association of CORESETs and resource types and its resource allocation according to an exemplary embodiment of the present disclosure.

FIG. 19 is a schematic diagram that illustrates an association of CORESETs and resource types and its resource allocation according to an exemplary embodiment of the present disclosure.

FIG. 20A is a schematic diagram that illustrates a default TCI state determination considering SS set type according to an exemplary embodiment of the present disclosure.

FIG. 20B is a schematic diagram that illustrates a resource allocation of CORESETs according to an exemplary embodiment of the present disclosure.

FIG. 21 is a schematic diagram that illustrates a default TCI state determination considering SS set type according to an exemplary embodiment of the present disclosure.

FIG. 22A is a schematic diagram that illustrates a default TCI state determination considering SS set type according to an exemplary embodiment of the present disclosure.

FIG. 22B is a schematic diagram that illustrates a resource allocation of CORESETs according to an exemplary embodiment of the present disclosure.

FIG. 23 is a flow chart that illustrates a method of applying TCI state with a CORESET according to an exemplary embodiment of the present disclosure.

FIG. 24A is a schematic diagram that illustrates a default TCI state determination considering SS set type according to an exemplary embodiment of the present disclosure.

FIG. 24B is a schematic diagram that illustrates a resource allocation of CORESETs according to an exemplary embodiment of the present disclosure.

FIG. 25A is a schematic diagram that illustrates a default TCI state determination considering SS set type according to an exemplary embodiment of the present disclosure.

FIG. 25B is a schematic diagram that illustrates a resource allocation of CORESETs according to an exemplary embodiment of the present disclosure.

FIG. 26A is a schematic diagram that illustrates a default TCI state determination considering SS set type according to an exemplary embodiment of the present disclosure.

FIG. 26B is a schematic diagram that illustrates a resource allocation of CORESETs according to an exemplary embodiment of the present disclosure.

FIG. 27A is a schematic diagram that illustrates a default TCI state for physical downlink shared channel (PDSCH) scheduled by a downlink control information (DCI) from a Search Space (SS) associated with two CORESETs according to an exemplary embodiment of the present disclosure.

FIG. 27B is a schematic diagram that illustrates a resource allocation of SS sets according to an exemplary embodiment of the present disclosure.

FIG. 28A is a schematic diagram that illustrates a default TCI state for PDSCH scheduled by a DCI from a SS associated with two CORESETs according to an exemplary embodiment of the present disclosure.

FIG. 28B is a schematic diagram that illustrates a resource allocation of an SS set according to an exemplary embodiment of the present disclosure.

FIG. 29A is a schematic diagram that illustrates a latest slot/symbol associated with same resource type as potential PDSCH reception according to an exemplary embodiment of the present disclosure.

FIG. 29B is a schematic diagram that illustrates a resource allocation of CORESETs according to an exemplary embodiment of the present disclosure.

FIG. 30A is a schematic diagram that illustrates a TCI state associated with same resource type in the latest slot/symbol as potential PDSCH reception according to an exemplary embodiment of the present disclosure.

FIG. 30B is a schematic diagram that illustrates a resource allocation of CORESET according to an exemplary embodiment of the present disclosure.

FIG. 31A is a schematic diagram that illustrates a TCI state associated with same resource type in the latest slot/symbol as potential PDSCH reception according to an exemplary embodiment of the present disclosure.

FIG. 31B is a schematic diagram that illustrates a resource allocation of CORESET according to an exemplary embodiment of the present disclosure.

FIG. 32A is a schematic diagram that illustrates a TCI state associated with same resource type in the latest slot/symbol as potential PDSCH reception according to an exemplary embodiment of the present disclosure.

FIG. 32B is a schematic diagram that illustrates a resource allocation of CORESET according to an exemplary embodiment of the present disclosure.

FIG. 33 is a schematic diagram that illustrates selecting TCI state from TCI state pool associated with same resource type as potential PDSCH reception according to an exemplary embodiment of the present disclosure.

FIG. 34A is a schematic diagram that illustrates a default TCI state determination considering SS set type according to an exemplary embodiment of the present disclosure.

FIG. 34B is a schematic diagram that illustrates a resource allocation of SS sets according to an exemplary embodiment of the present disclosure.

FIG. 35 is a schematic diagram that illustrates a default TCI state determination considering SS set type according to an exemplary embodiment of the present disclosure.

FIG. 36A is a schematic diagram that illustrates a default TCI state determination considering SS set type according to an exemplary embodiment of the present disclosure.

FIG. 36B is a schematic diagram that illustrates a resource allocation of SS sets according to an exemplary embodiment of the present disclosure.

FIG. 37A is a schematic diagram that illustrates a default TCI state determination considering SS set type according to an exemplary embodiment of the present disclosure.

FIG. 37B is a schematic diagram that illustrates a resource allocation of an SS set according to an exemplary embodiment of the present disclosure.

FIG. 38A is a schematic diagram that illustrates a default TCI state determination considering SS set type according to an exemplary embodiment of the present disclosure.

FIG. 38B is a schematic diagram that illustrates a resource allocation of an SS set according to an exemplary embodiment of the present disclosure.

FIG. 39A is a schematic diagram that illustrates a latest slot/symbol associated with same resource type as potential PDSCH reception according to an exemplary embodiment of the present disclosure.

FIG. 39B is a schematic diagram that illustrates a resource allocation of CORESETs according to an exemplary embodiment of the present disclosure.

FIG. 40A is a schematic diagram that illustrates a reference RS associated with same resource type in the latest slot/symbol as potential PDSCH reception according to an exemplary embodiment of the present disclosure.

FIG. 40B is a schematic diagram that illustrates a resource allocation of CORESET according to an exemplary embodiment of the present disclosure.

FIG. 41A is a schematic diagram that illustrates a reference RS associated with same resource type in the latest slot/symbol as potential PDSCH reception according to an exemplary embodiment of the present disclosure.

FIG. 41B is a schematic diagram that illustrates a resource allocation of CORESET according to an exemplary embodiment of the present disclosure.

FIG. 42 is a schematic diagram that illustrates selecting reference RS from reference RS pool associated with same resource type as potential PDSCH reception according to an exemplary embodiment of the present disclosure.

FIG. 43A is a schematic diagram that illustrates a default TCI state determination considering SS set type according to an exemplary embodiment of the present disclosure.

FIG. 43B is a schematic diagram that illustrates a resource allocation of SS sets according to an exemplary embodiment of the present disclosure.

FIG. 44A is a schematic diagram that illustrates a default TCI state determination considering SS set type according to an exemplary embodiment of the present disclosure.

FIG. 44B is a schematic diagram that illustrates a resource allocation of SS sets according to an exemplary embodiment of the present disclosure.

FIG. 45A is a schematic diagram that illustrates a default TCI state determination considering SS set type according to an exemplary embodiment of the present disclosure.

FIG. 45B is a schematic diagram that illustrates a resource allocation of an SS set according to an exemplary embodiment of the present disclosure.

FIG. 46A is a schematic diagram that illustrates a default TCI state determination considering SS set type according to an exemplary embodiment of the present disclosure.

FIG. 46B is a schematic diagram that illustrates a resource allocation of an SS set according to an exemplary embodiment of the present disclosure.

FIG. 47A is a schematic diagram that illustrates a latest slot/symbol associated with same resource type as potential PDSCH reception according to an exemplary embodiment of the present disclosure.

FIG. 47B is a schematic diagram that illustrates a resource allocation of CORESETs according to an exemplary embodiment of the present disclosure.

FIG. 48A is a schematic diagram that illustrates a Rx associated with same resource type in the latest slot/symbol as potential PDSCH reception according to an exemplary embodiment of the present disclosure.

FIG. 48B is a schematic diagram that illustrates a resource allocation of CORESET according to an exemplary embodiment of the present disclosure.

FIG. 49A is a schematic diagram that illustrates a Rx associated with same resource type in the latest slot/symbol as potential PDSCH reception according to an exemplary embodiment of the present disclosure.

FIG. 49B is a schematic diagram that illustrates a resource allocation of CORESET according to an exemplary embodiment of the present disclosure.

FIG. 50 is a schematic diagram that illustrates selecting Rx from CSI report configuration associated with same resource type in the latest slot/symbol as potential PDSCH reception according to an exemplary embodiment of the present disclosure.

FIG. 51A is a schematic diagram that illustrates a default TCI state determination considering SS set type according to an exemplary embodiment of the present disclosure.

FIG. 51B is a schematic diagram that illustrates a resource allocation of SS sets according to an exemplary embodiment of the present disclosure.

FIG. 52A is a schematic diagram that illustrates a default TCI state determination considering SS set type according to an exemplary embodiment of the present disclosure.

FIG. 52B is a schematic diagram that illustrates a resource allocation of SS sets according to an exemplary embodiment of the present disclosure.

FIG. 53A is a schematic diagram that illustrates a default TCI state determination under scheduling offset larger than a threshold according to an exemplary embodiment of the present disclosure.

FIG. 53B is a schematic diagram that illustrates a resource allocation of an SS set according to an exemplary embodiment of the present disclosure.

FIG. 54A is a schematic diagram that illustrates a default TCI state determination under scheduling offset larger than a threshold according to an exemplary embodiment of the present disclosure.

FIG. 54B is a schematic diagram that illustrates a resource allocation of an SS set according to an exemplary embodiment of the present disclosure.

FIG. 55A is a schematic diagram that illustrates a default TCI state determination under scheduling offset larger than a threshold according to an exemplary embodiment of the present disclosure.

FIG. 55B is a schematic diagram that illustrates a resource allocation of CORESET according to an exemplary embodiment of the present disclosure.

FIG. 56 is a schematic diagram that illustrates a resource allocation of CORESET for a pre-determined default TCI state according to an exemplary embodiment of the present disclosure.

FIG. 57 is a schematic diagram that illustrates fields for indicating TCI states according to an exemplary embodiment of the present disclosure.

FIG. 58 is a schematic diagram that illustrates a resource allocation of CORESET for a pre-determined default TCI state according to an exemplary embodiment of the present disclosure.

FIG. 59 is a schematic diagram that illustrates fields for indicating TCI states according to an exemplary embodiment of the present disclosure.

FIG.60 is a schematic diagram that illustrates inappropriate TCI state according to an exemplary embodiment of the present disclosure.

FIG. 61A is a schematic diagram that illustrates fields of medium access control (MAC) control element (CE) for indicating TCI states according to an exemplary embodiment of the present disclosure.

FIG. 61B is a schematic diagram that illustrates TCI field of a downlink control information (DCI) according to an exemplary embodiment of the present disclosure.

FIG. 62A is a schematic diagram that illustrates fields of MAC CE for indicating TCI states according to an exemplary embodiment of the present disclosure.

FIG. 62B is a timing diagram that illustrates common beam activation for duplex operation according to an exemplary embodiment of the present disclosure.

FIG. 63 is a schematic diagram that illustrates selecting TCI state associated with same resource type according to an exemplary embodiment of the present disclosure.

FIG. 64 is a schematic diagram that illustrates selecting TCI state associated with same resource type according to an exemplary embodiment of the present disclosure.

FIG. 65 is a schematic diagram that illustrates selecting TCI state associated with same resource type according to an exemplary embodiment of the present disclosure.

FIG. 66 is a schematic diagram that illustrates selecting TCI state associated with same resource type according to an exemplary embodiment of the present disclosure.

FIG. 67 is a schematic diagram that illustrates per CSI-RS resource configuration for SBFD symbol according to an exemplary embodiment of the present disclosure.

FIG. 68 is a schematic diagram that illustrates per CSI-RS resource configuration in MAC CE according to an exemplary embodiment of the present disclosure.

FIG. 69A is a schematic diagram that illustrates frequency domain measurement restriction according to an exemplary embodiment of the present disclosure.

FIG. 69B is a schematic diagram that illustrates frequency domain measurement restriction according to an exemplary embodiment of the present disclosure.

FIG. 70A to FIG. 70C are schematic diagrams that illustrate frequency rotation of SBFD CSI-RS according to an exemplary embodiment of the present disclosure.

FIG. 71 is a schematic diagram that illustrates frequency rotation of SBFD CSI-RS according to an exemplary embodiment of the present disclosure.

FIG. 72 is a schematic diagram that illustrates frequency rotation of SBFD CSI-RS according to an exemplary embodiment of the present disclosure.

FIG. 73 is a schematic diagram that illustrates frequency rotation of SBFD CSI-RS according to an exemplary embodiment of the present disclosure.

FIG. 74 is a schematic diagram that illustrates a determination of SBFD CSI-RS frequency range according to an exemplary embodiment of the present disclosure.

FIG. 75A is a schematic diagram that illustrates the relation of multiple cases according to an exemplary embodiment of the present disclosure.

FIG. 75B is a schematic diagram that illustrates case (a) according to an exemplary embodiment of the present disclosure.

FIG. 75C is a schematic diagram that illustrates case (b) according to an exemplary embodiment of the present disclosure.

FIG. 75D is a schematic diagram that illustrates case (c) according to an exemplary embodiment of the present disclosure.

FIG. 75E is a schematic diagram that illustrates case (d) according to an exemplary embodiment of the present disclosure.

FIG. 75F is a schematic diagram that illustrates case (e) according to an exemplary embodiment of the present disclosure.

FIG. 75G is a schematic diagram that illustrates case (f) according to an exemplary embodiment of the present disclosure.

FIG. 76 is a schematic diagram that illustrates non-contiguous CSI-RS resource allocation of one CSI-RS resource according to an exemplary embodiment of the present disclosure.

FIG. 77 is a schematic diagram that illustrates two non-contiguous CSI-RS resources that are linked according to an exemplary embodiment of the present disclosure.

FIG. 78 is a schematic diagram that illustrates SBFD and Non-SBFD CSI-RS configuration according to an exemplary embodiment of the present disclosure.

FIG. 79 is a schematic diagram that illustrates SBFD and Non-SBFD CSI-RS configuration according to an exemplary embodiment of the present disclosure.

FIG. 80 is a schematic diagram that illustrates time restriction for channel measurement according to an exemplary embodiment of the present disclosure.

FIG. 81 is a schematic diagram that illustrates time restriction for channel measurement according to an exemplary embodiment of the present disclosure.

FIG. 82 is a schematic diagram that illustrates resource allocations for channel measurement according to an exemplary embodiment of the present disclosure.

FIG. 83 is a schematic diagram that illustrates subband precoder matrix indicator (PMI)/channel quality indicator (CQI) reporting according to an exemplary embodiment of the present disclosure.

FIG. 84 is a schematic diagram that illustrates resource allocations for channel measurement according to an exemplary embodiment of the present disclosure.

FIG. 85 is a schematic diagram that illustrates resource allocations for channel measurement according to an exemplary embodiment of the present disclosure.

FIG. 86 is a schematic diagram that illustrates time restriction for channel measurement according to an exemplary embodiment of the present disclosure.

FIG. 87 is a schematic diagram that illustrates resource allocations for channel measurement according to an exemplary embodiment of the present disclosure.

FIG. 88 is a schematic diagram that illustrates initial CSI reporting based on the first SBFD CSI-RS according to an exemplary embodiment of the present disclosure.

FIG. 89 is a schematic diagram that illustrates resource allocations for CSI reporting according to an exemplary embodiment of the present disclosure.

FIG. 90 is a schematic diagram that illustrates SBFD and Non-SBFD CSI-RS configuration according to an exemplary embodiment of the present disclosure.

FIG. 91 is a schematic diagram that illustrates per SBFD CSI-RS subband CSI reporting according to an exemplary embodiment of the present disclosure.

FIG. 92A to FIG. 92C are schematic diagrams that illustrate CSI selection indicator according to an exemplary embodiment of the present disclosure.

FIG. 93A to FIG. 93B are schematic diagrams that illustrate CSI selection indicator according to an exemplary embodiment of the present disclosure.

FIG. 94A to FIG. 94B are schematic diagrams that illustrate CSI selection indicator according to an exemplary embodiment of the present disclosure.

FIG. 95 is a timing diagram that illustrates CSI selection indication according to an exemplary embodiment of the present disclosure.

FIG. 96 is a flow chart that illustrates a method according to an exemplary embodiment of the present disclosure.

FIG. 97 is a block diagram that illustrates a communication device according to an exemplary embodiment of the present disclosure.

## DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

| Abbreviation | Full name |
|---|---|
| CQI | channel quality indicator |
| CSI | Channel state information |
| CSI-RS | Channel state information reference signal |
| CORESET | Control Resource Set |
| DCI | downlink control information |
| DL | downlink |
| DM-RS | Demodulation RS |
| gNodeB(gNB) | next Generation Node B |
| HARQ-ACK | Hybrid Automatic Repeat request- acknowledgment |
| ID | identity |
| L1 | layer 1 |
| MAC | medium access control |
| MAC CE | MAC control element |
| NW | Network |
| PDCCH | Physical downlink control channel |
| PDSCH | Physical downlink shared channel |
| PMI | Precoder matrix indicator |
| PUCCH | physical uplink control channel |
| PUSCH | physical uplink share channel |
| QCL | quasi co-located |
| RI | rank indictor |
| RRC | radio resource control |
| RS | reference signal |
| RSRP | Reference signal receiving power |
| RSRQ | Reference signal receiving quality |
| SINR | single to interference noise ratio |
| SFN | single frequency network |
| SRS | Sounding reference signal |
| SS | search space |
| SSB | Synchronization signal block |
| SSBRI | SSB resource indicator |
| SBFD | Sub-Band Full Duplex |
| TCI | Transmission configuration indication |
| TDD | Time Division Duplex |
| TRP | transmission reception point |
| Tx beam | transmitted beam |
| UE | user equipment |
| UL | uplink. |

Some related technologies are introduced first.

A cell in this disclosure may be a serving cell, a carrier or a CC (component carrier), a serving cell, MCG (master cell group), SCG (second cell group), etc, but not limited herein.

"Configured" in this disclosure may be default/predefined/fixed/configured/activated/indicated, etc., but not limited herein.

RRC in this disclosure may be MAC CE, DCI, etc., but not limited herein.

UL in this disclosure may be PUSCH, PUCCH, PRACH, SRS, RS, etc., but not limited herein.

DL in this disclosure may be PDSCH, PDCCH, SSB, CSI-RS, RS, etc., but not limited herein.

gNB in this disclosure may be a NCR, a NCR group, UE, TRP, gNB, panel, etc. , but not limited herein.

PDSCH in this disclosure may be aperiodic CSI-RS.

TCI state in this disclosure may be QCL assumption, QCL type, reference RS, channel property, etc., but not limited herein.

RS in this disclosure may be DL RS and/or UL RS.

A DL RS configuration in this disclosure may be:

a DM-RS group;
a DM-RS group index;
a DM-RS resource;
a DM-RS resource index;
a DM-RS port index;
a DM-RS port;
a CSI-RS resource set index;
a CSI-RS resource set;
a CSI-RS resource index;
a CSI-RS resource;
a CSI-RS port index;
a CSI-RS port;
an SSB resource set index;
an SSB resource set;
an SSB resource index;
an SSB resource;
an SSB port index;
an SSB port;
etc, but not limited herein.

A UL RS configuration in this disclosure may be:

a DM-RS group;
a DM-RS group index;
a DM-RS resource;
a DM-RS resource index;
a DM-RS port index;
a DM-RS port;
a RACH group;
a RACH group index;
a RACH resource;
a RACH resource index;
a SRS resource set index;
a SRS resource set;
a SRS resource index;
a SRS resource;
a SRS port index;
a SRS port;
etc, but not limited herein.

A beam in this disclosure may be represented by:

an antenna,
an antenna port,
an antenna element,
a group of antenna,
a group of antenna port,
a group of antenna element,
a spatial domain filter,
a reference signal resource,
a QCL assumption,
a TXRU,
etc, but not limited herein. For example, a first beam may be represented as a first antenna port, a first group of antenna port, or a first spatial domain filter. For example, a first beam direction may be represented as a QCL assumption or a spatial domain filter.

A Rx beam in configuration in this disclosure may be:

a spatial Rx parameter,
a spatial domain receive filter,
a panel,
etc, but not limited herein.

A Tx beam in configuration in this disclosure may be

a spatial Tx parameter,
a spatial domain transmission filter,
a panel,
etc, but not limited herein.

An index or an identity in this disclosure may be

CORESETPoolIndex,
TRP ID,
Panel ID,
etc, but not limited herein.

A Cell TRP (e.g., transmission reception point) in this disclosure may be:

a TRP,
a serving cell,
a gNodeB (e.g., next Generation Node B),
a panel,
an unlicensed cell,
an unlicensed serving cell,
an unlicensed TRP,
a gNodeB,
an eNodeB (evolved NodeB),
an eNB,
etc., but not limited herein.

Resource type in this disclosure may be:

DL;
UL;
SBFD;
Non-SBFD;
Special;
Flexible;
the symbols/slots with UL sub-band and/or UL sub-band.

SBFD in this disclosure may be:

Special;
the symbols/slots with UL sub-band and/or UL sub-band;
other than DL, UL, or flexible.

The communication device in this disclosure may be represented by UE, or gNodeB, but is not limited herein.
Combinations of embodiments disclosed in this disclosure are not precluded.
All steps in the embodiment may not be performed in a step-by-step way.
Embodiments disclosed in this disclosure may apply for unlicensed band, licensed band, non-DRX mode, DRX mode, or power saving, but are not limited herein.
In one example,

the UE may communicate with a gNB (or network) with a carrier aggregation (CA) system. In this case, the UE may be configured with multiple serving cells.

The UE may receive a PDSCH (or transmit a PUSCH) on a serving cell A of the gNB according to a DCI received in a serving cell B of the gNB.

The UE may receive a PDSCH (or transmit a PUSCH) on a serving cell of the gNB according to a DCI, wherein the DCI may indicate a priority index.

The UE may receive a PDSCH on a serving cell of the gNB according to a DCI, wherein the DCI may indicate a TCI state.

The UE may transmit a PUSCH on a serving cell of the gNB according to a DCI, wherein the DCI may indicate an SRI.

The UE may be configured with a configuration regarding a search space (or search space set) for receiving/monitoring the DCI.

The UE may be configured with a configuration regarding a control resource set (CORESET) for receiving/monitoring the DCI.

The UE may be configured with a configuration regarding the PDCCH repetition for receiving/monitoring the DCI, wherein each repetition of a DCI may be transmitted by different time domain resource, frequency domain resource, or TCI states.

In one example, gNB in this disclosure may be

disable/turn off at least one panel for Network energy saving (NES);
one panel may be for transmitting a signal for e.g., sensing, and another panel may be for receiving a reflection of the signal on integrated sensing and communication (ISAC).

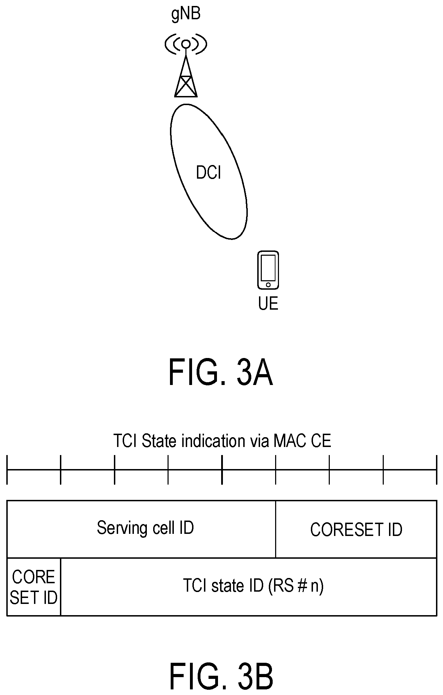

FIG. 3A is a schematic diagram that illustrates search space SS set monitoring for DCI reception. Referring FIG. 3A, UE may monitor SS set for DCI reception according to a TCI state associated with the corresponding CORESET. For example, a DCI is associated with an SS set ID in which the SS set is associated with the time domain-related parameter. The SS set ID may be further associated with a CORESET ID in which the CORESET is associated with the frequency domain-related parameter. Furthermore, the CORESET ID may be further associated with a TCI state ID in which the TCI state is associated with the spatial domain-related parameter.

FIG. 3B is a schematic diagram that illustrates a transmission configuration indication (TCI) state in a medium access control (MAC) control element (CE). Referring to FIG. 3B, in the TCI state indication, the SS set (ID) may be associated with a CORESET (ID). The CORESET may be activated with one TCI state.

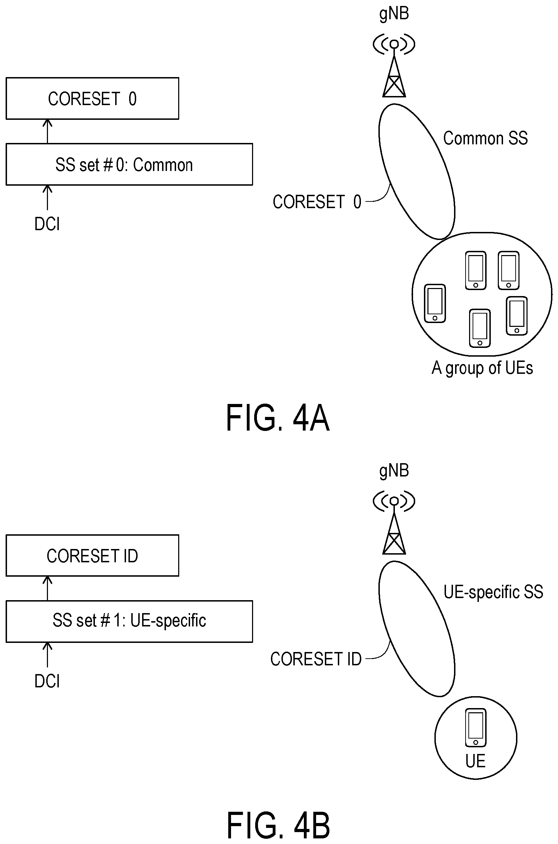

FIG. 4A is a schematic diagram that illustrates a common type SS set. Referring to FIG. 4A, an SS set for PDCCH may be a common type monitored by a group of UEs, e.g., CORESET zero comprising system information.

FIG. 4B is a schematic diagram that illustrates a UE-specific SS set. Referring to FIG. 4B, an SS set for PDCCH may be a UE-specific type monitored by a single UE, e.g., for DL/UL scheduling.

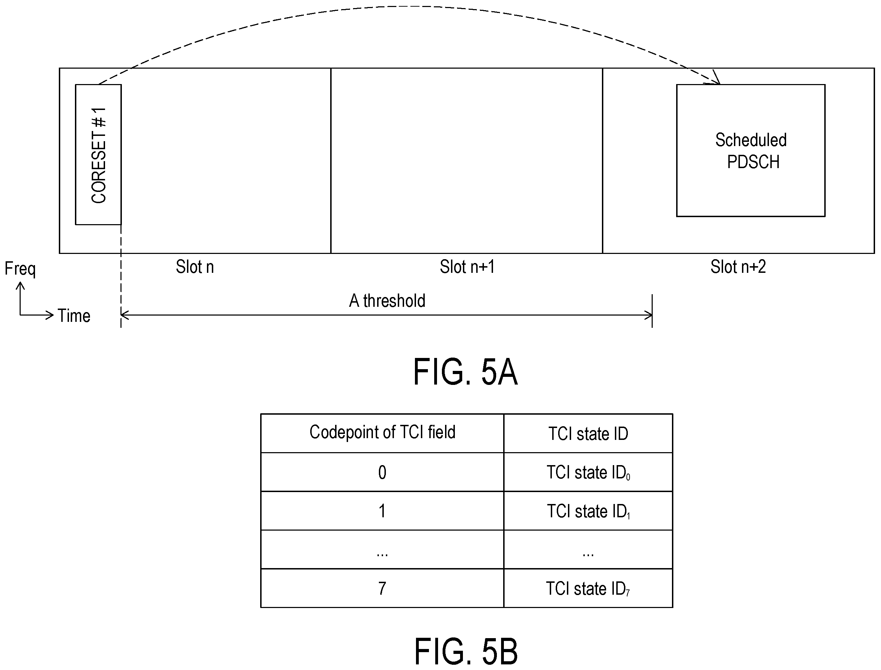

FIG. 5A is a schematic diagram that illustrates downlink (DL) scheduling on non-unified transmission configuration indication (TCI) framework. Referring to FIG. 5A, if the scheduling offset between the scheduling DCI and the scheduled PDSCH is large than or equal to a threshold, e.g., a time duration for decoding DCI, UE may assume that the QCL assumption of PDSCH indicated by TCI field in the scheduling DCI.

FIG. 5B is a schematic diagram that illustrates codepoints of TCI field. Referring to FIG. 5B, in the TCI field of DCI, the codepoint indicates TCI state ID. For example, codepoint "0" indicates CTI state $ID_0$.

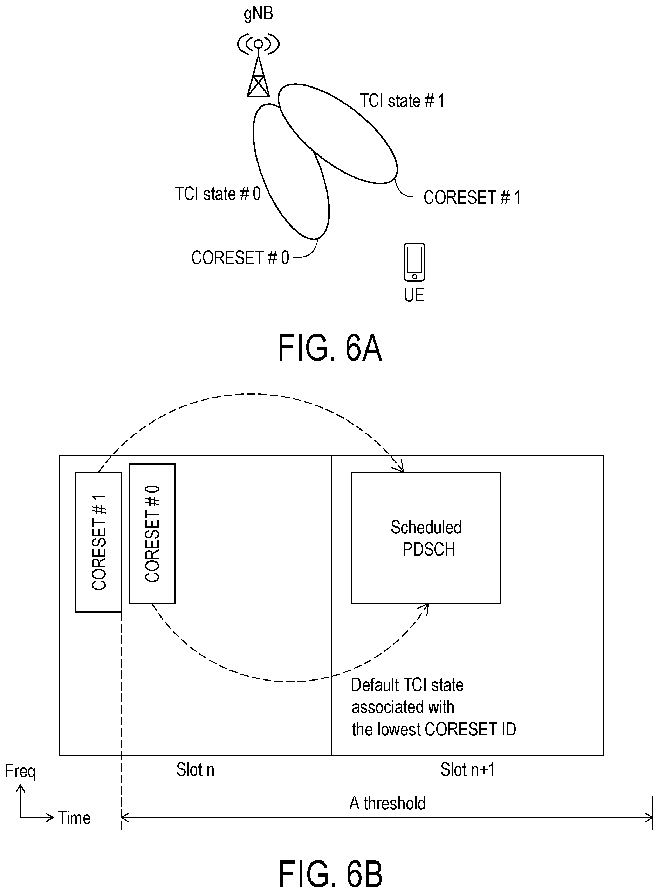

FIG. 6A is a schematic diagram that illustrates two TCI states for DL receptions, and FIG. 6B is a schematic diagram that illustrates a resource allocation of control resource set (CORESET) for PDSCH with TCI field. Referring to FIG. 6A and FIG. 6B, there may be two CORESETs respectively associated with two TCI states. If scheduling offset between the scheduling DCI and the scheduled PDSCI is less than a threshold, UE may assume that the QCL assumption of PDSCH used for the CORESET is associated with a monitored search space with the lowest CORESET ID in the latest slot. For example, the lowest CORESET ID is "#0".

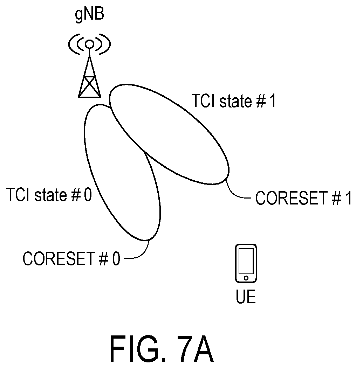

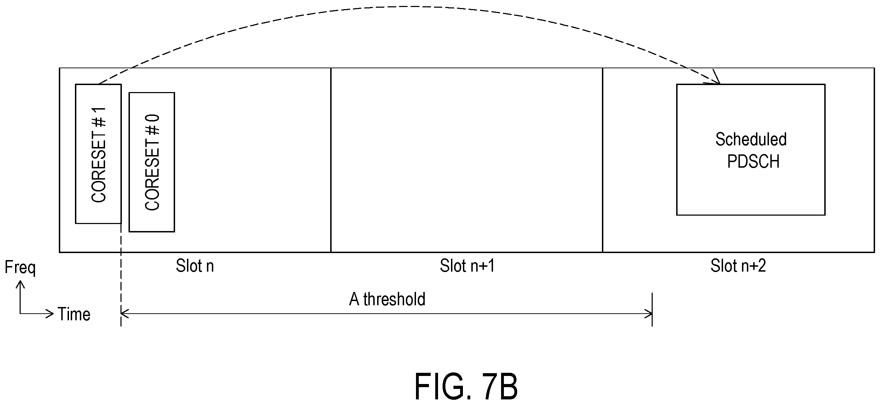

FIG. 7A is a schematic diagram that illustrates two TCI states for DL receptions, and FIG. 7B is a schematic diagram that illustrates a resource allocation of CORESET for PDSCH without TCI field. Referring to FIG. 7A and FIG. 7B, there may be two CORESETs respectively associated with two TCI states. If scheduling offset between the scheduling DCI and the scheduled PDSCI is larger than or equal to a threshold and if the TCI field is not presented in the DCI, UE may assume that the QCL assumption of PDSCH used for the CORESET associated with a monitored search space with the lowest CORESET ID in the latest slot. For example, the lowest CORESET ID is "#0".

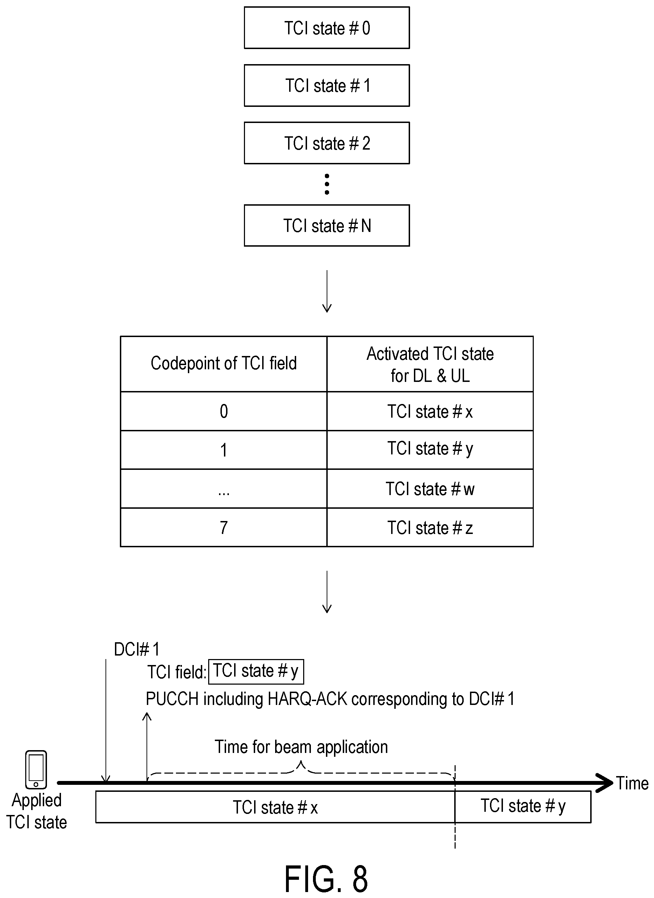

FIG. 8 is a schematic diagram that illustrates downlink (DL) scheduling TCI framework. Referring to FIG. 8, when the UE would transmit the last symbol of a PUCCH with HARQ-ACK information corresponding to the DCI carrying the *TCI-State* indication and without DL assignment, or corresponding to the PDSCH scheduling by the DCI carrying the *TCI-State* indication, and if the *indicated TCI-State* is different from the previously indicated one, the indicated *TCI-State* with *TCI-*

*State ID* may be applied starting from the first slot that may be at least symbols (e.g., a time for beam application) after the last symbol of the PUCCH. For example, if the TCI field of DCI#1 indicates TCI state #y, TCI state #y would be applied after the beam application using TCI state #x.

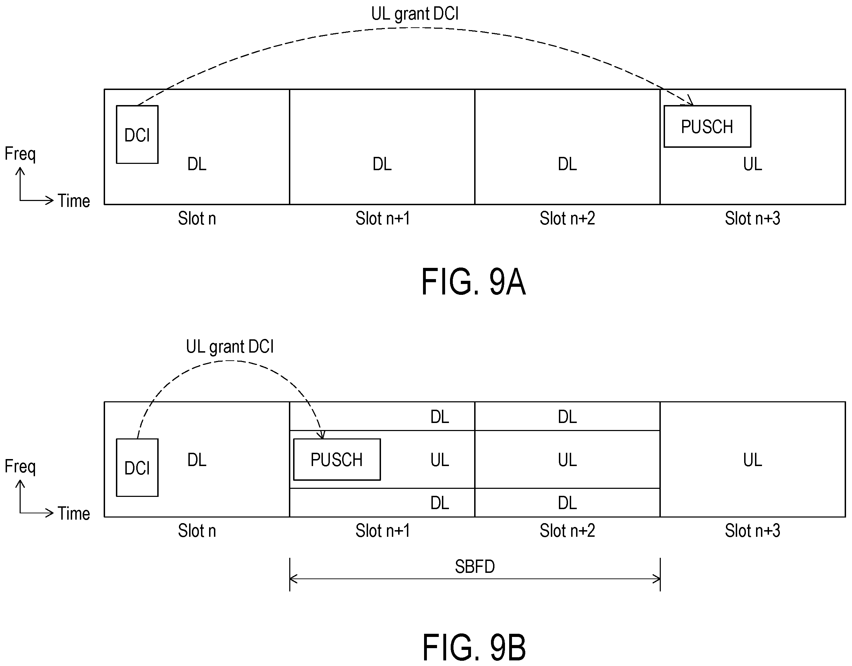

FIG. 9A is a schematic diagram that illustrates a resource allocation in TDD. Referring to FIG. 9A, in the time division duplex (TDD), the time domain resource may be split between downlink and uplink, and may result in increased UL latency.

FIG. 9B is a schematic diagram that illustrates a resource allocation in SBFD. Referring to FIG. 9B, in SBFD, the feasibility of allowing the simultaneous existence of downlink and uplink. The subbands do not overlap the full duplex at the gNB side within a conventional TDD band.

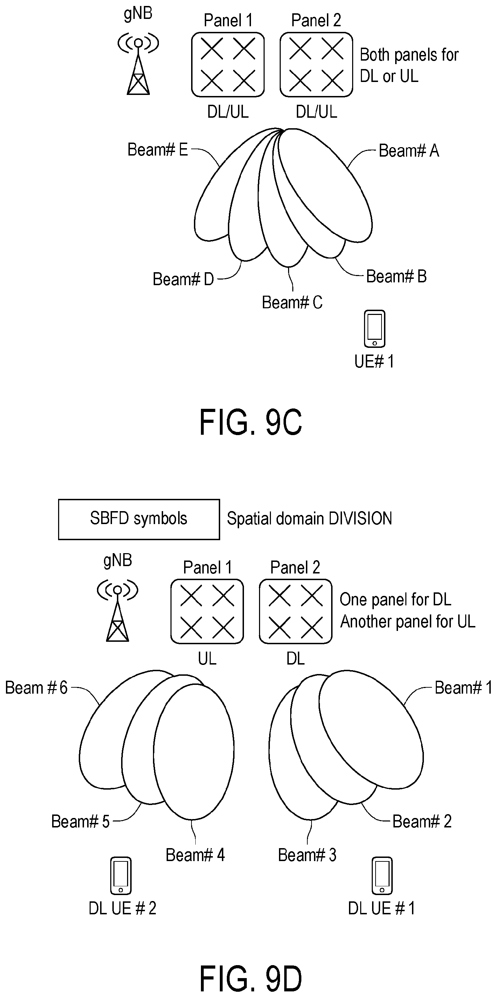

FIG. 9C is a schematic diagram that illustrates a beam management for non-SBFD symbols, and FIG. 9D is a schematic diagram that illustrates a beam management for SBFD symbols. Referring to FIG. 9C and FIG. 9D, an NW may prepare two sets of RSs for beam management, e.g.,

one set for non-SBFD, e.g., the first CSI report;
another set for SBFD, e.g., the second CSI report.

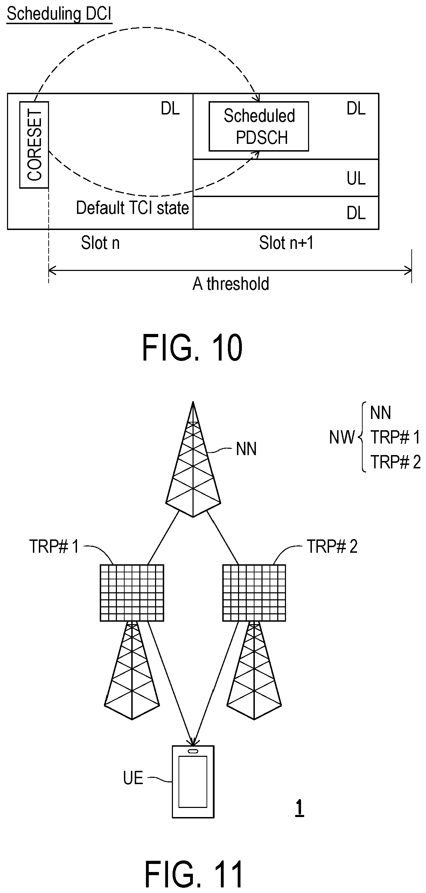

FIG. 10 is a schematic diagram that illustrates a situation that scheduling DCI for determining time and frequency resources. Referring to FIG. 10, a default TCI state for potential PDSCH reception is configured regardless of resource type. When scheduling DCI for determining time and/ or frequency resource. The default TCI state of non-SBFD symbols for CORESET reception may be used for potential PDSCH reception in SBFD symbols, and result in performance loss or reduction of scheduled PDSCH with inappropriate default TCI state. Therefore, for DL (e.g., PDCCH) reception on duplex operation, per-resource-type TCI state would be considered. A default TCI state determination for PDSCH reception on nonunified and unified TCI framework would be considered.

FIG. 11 is a schematic diagram that illustrates a radio communication network architecture 1 according to an exemplary embodiment of the present disclosure. Referring to FIG. 11, a radio communication network architecture 1 (e.g., a Long Term Evolution (LTE) system, an LTE-Advanced (LTE-A) system, an LTE-Advanced Pro system, or a 5G NR Radio Access Network (RAN)) typically includes at least one base station (BS) NW, at least one UE, and one or more optional network elements that provide connection towards a network. The UE communicates with the network (e.g., a Core Network (CN), an Evolved Packet Core (EPC) network, an Evolved Universal Terrestrial Radio Access Network (E-UTRAN), a 5G Core (5GC), or an internet), through a RAN established by one or more base stations.

It should be noted that, in the present disclosure, UE may include, but is not limited to, a mobile station, a mobile terminal or device, or a user communication radio terminal. For example, UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A base station NW may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A base station NW may include but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The BS NW may connect to serve one or more UEs through a radio interface to the network.

The base station (BS) NW (or called network device) may be operable to provide radio coverage to a specific geographical area using a plurality of cells included in the RAN. The BS NW may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The BS NW may communicate with one or more UEs in the radio communication system through the plurality of cells. It should be noted that for UL, a UE is a transmitter performing UL transmission, and a network (node) is a receiver performing UL reception. For DL, a UE is a receiver performing DL reception, and a network (node) is a transmitter performing DL transmission.

The base station NW may include a network node NN and one or more TRPs, such as TRP#1 and TRP#2.

A network node NN may be, but is not limited to, a node B (NB) as in the LTE, an evolved node B (eNB) as in the LTE-A, a radio network controller (RNC) as in the UMTS, a base station controller (BSC) as in the GSM/GERAN, a new radio evolved node B (NR eNB) as in the NR, a next generation node B (gNB) as in the NR, and any other apparatus capable of controlling radio communication and managing radio resources within one or more cells.

A TRP (e.g., TRP#1 or TRP#2), which may also be regarded as a remote radio head (RRH), maybe a transceiver under the protocols of 5G NR wireless communication system and/or the protocols of a 4G wireless communication system. A TRP may be communicatively connected to a network node NN. The network node NN may connect to serve one or more UEs through one or more TRPs in the radio communication system. For example, TRP#1 and TRP#2 serve one UE, and TRP#2 serves another UE, but is not limited thereto.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

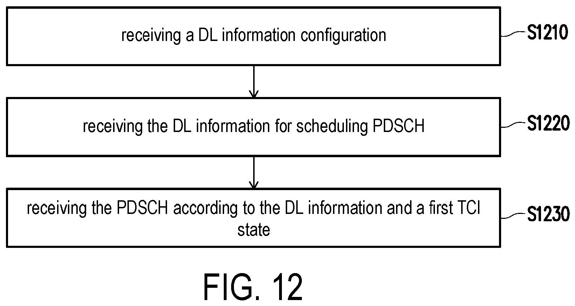

FIG. 12 is a flow chart that illustrates a method according to an exemplary embodiment of the present disclosure. Referring to FIG. 12, the method may be implemented by a UE. The UE receives a downlink (DL) information configuration (step S1210). Specifically, the DL information configuration is associated with time and frequency domain information for receiving DL information. The time domain information may indicate the resource allocation of the time domain. The frequency domain information may indicate the resource allocation of the frequency domain. In one embodiment, the DL information configuration may further be associated with the spatial domain information for receiving the DL information. The spatial domain information may indicate the resource allocation of the spatial domain.

The UE receives the DL information for scheduling physical downlink shared channel (PDSCH) (step S1220). The DL information may be, for example, CORESET ID, SS set ID or TCI state ID, reference RS ID, and/or spatial Rx parameter. The UE may receive the DL information according to the DL information configuration.

The UE receives the PDSCH according to the DL information and a first TCI state (step S1230). Specifically, the first TCI state includes one or more parameters for configuring the relationship between the downlink (DL) reference signal (RS) and one or more demodulation reference signal (DM-RS) ports of the PDSCH.

In one embodiment, UE may receive configuration to configure the DL information to be received in at least one of: a first resource type or a second resource type.

In one embodiment, the received DL information is associated with (both) the first resource type and the second resource type.

In one embodiment, a time offset of the DL information and the PDSCH is less than a threshold. The time unit of the time offset could be a slot, symbol, or other time unit.

In one embodiment, UE may assume a quasi-co-location (QCL) assumption used for a control resource set (CORESET) is associated with a monitored search space with a lowest CORESET identity (ID) in a latest slot.

In one embodiment, the latest slot is associated with the same resource type as a slot for receiving the PDSCH.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space (SS) with the lowest CORESET ID in the latest slot, where the latest slot may be associated with SBFD/non-SBFD symbols, respectively.

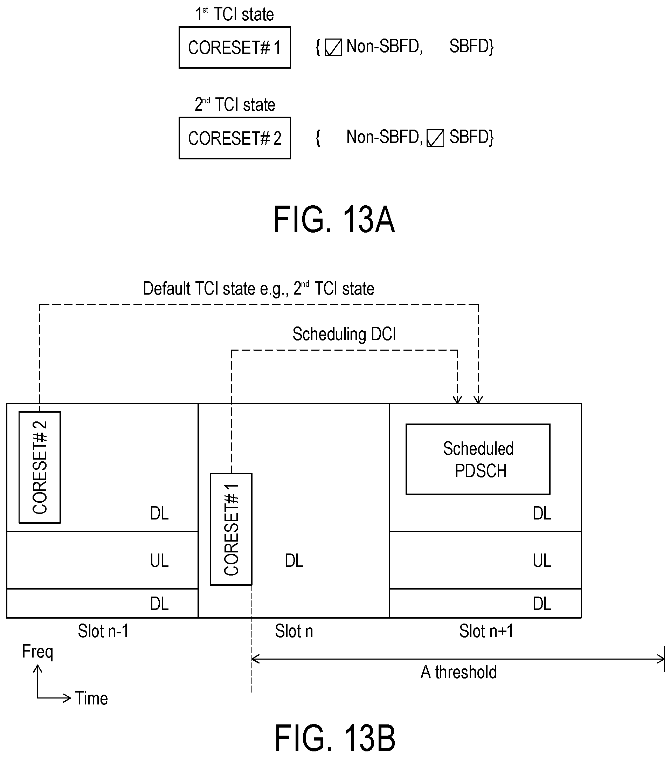

For example, FIG. 13A is a schematic diagram that illustrates an association of CORESETs and resource types according to an exemplary embodiment of the present disclosure. Referring to FIG. 13A, CORESET #1 associated with the first TCI state is configured with non-SBFD resource, and CORESET #2 associated with the second TCI state is configured with SBFD resource. FIG. 13B is a schematic diagram that illustrates a resource allocation of CORESETs according to an exemplary embodiment of the present disclosure. Referring to FIG. 13B, if the time offset of scheduling DCI by CORESET#1 and the scheduled PDSCH is less than the threshold, UE may assume the QCL assumption used for CORESET #1 in the latest slot.

In one embodiment, when (or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the lowest CORESET ID is selected from the CORESET associated with the same resource type as scheduled PDSCH and/or the CORESET associated with both resource types, and/ or the latest slot is selected from the slot associated with the CORESET associated with the same resource type as scheduled PDSCH and/or the CORESET associated with both resource types.

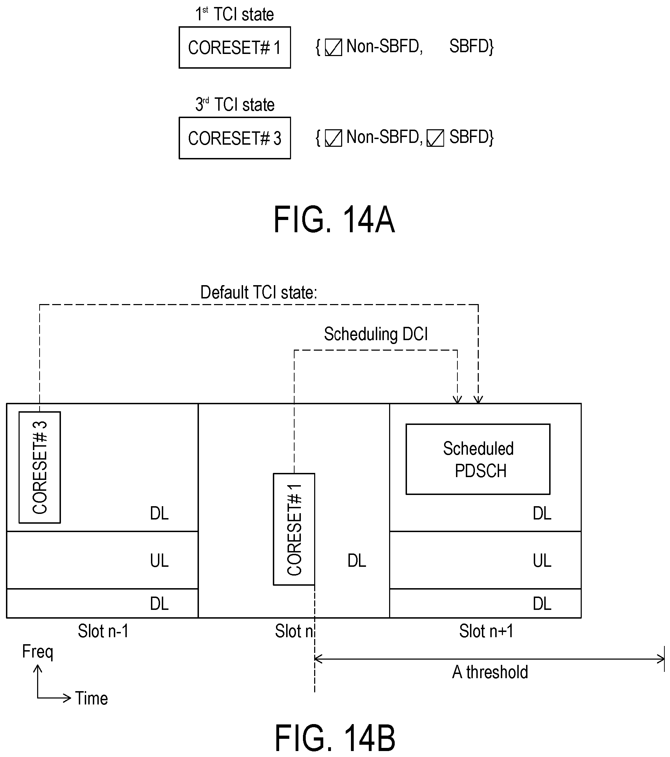

For example, FIG. 14A is a schematic diagram that illustrates an association of CORESETs and resource types according to an exemplary embodiment of the present disclosure. Referring to FIG. 14A, the CORESET #1 associated with the first TCI state is configured with non-SBFD resource, and the CORESET #3 associated with the third TCI state is configured with SBFD resource and non-SBFD resource. FIG. 14B is a schematic diagram that illustrates a resource allocation of CORESETs according to an exemplary embodiment of the present disclosure. Referring to FIG. 14B, if the time offset of scheduling DCI by CORESET#1 and the scheduled PDSCH is less than the threshold, UE may assume the QCL assumption used for the CORESET #1 in the latest slot.

In one embodiment, the lowest CORESET ID is selected from at least one CORESET associated with a same resource type of a slot for receiving the PDSCH.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the lowest CORESET ID is selected from the CORESET associated with the same resource type as scheduled PDSCH and/or the CORESET associated with both resource types.

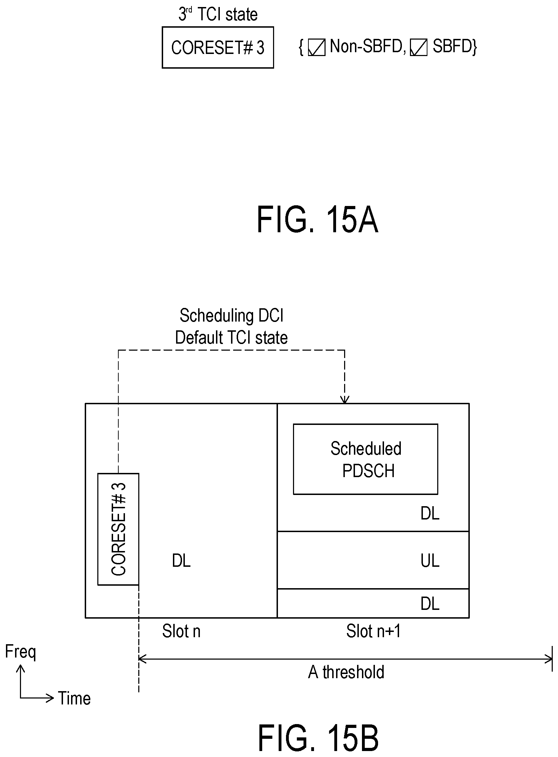

For example, FIG. 15A is a schematic diagram that illustrates an association of CORESET and resource types according to an exemplary embodiment of the present disclosure. Referring to FIG. 15A, the CORESET #3 associated with the third TCI state is configured with SBFD resource and non-SBFD resource. FIG. 15B is a schematic diagram that illustrates a resource allocation of CORESET according to an exemplary embodiment of the present disclosure. Referring FIG. 15B, if the time offset of scheduling DCI by CORESET #3 and the scheduled PDSCH is less than a threshold, UE may assume the QCL assumption used for CORESET #3 in the latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the lowest CORESET ID is selected from the CORESET associated with the same resource type as scheduled PDSCH and/or the CORESET associated with both resource types

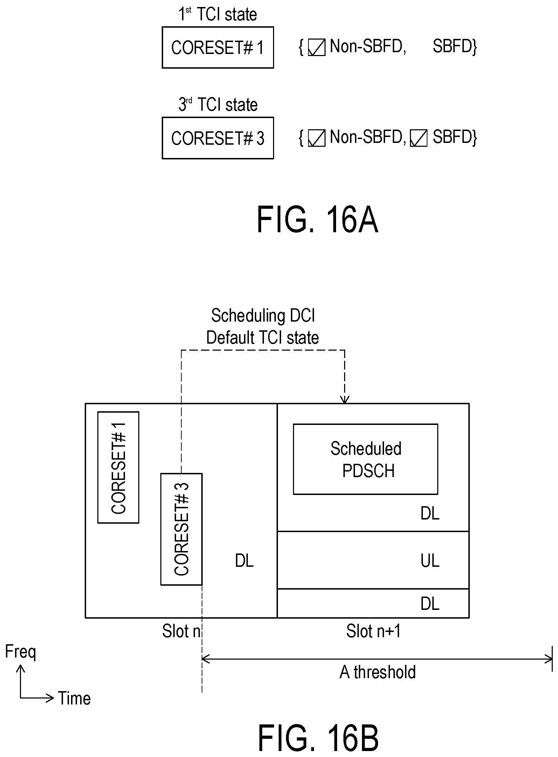

For example, FIG. 16A is a schematic diagram that illustrates an association of CORESETs and resource types according to an exemplary embodiment of the present disclosure. Referring to FIG. 16A, the CORESET #1 associated with the first TCI state is configured with non-SBFD resource, and the CORESET #3 associated with the third TCI state is configured with SBFD resource and non-SBFD resource. FIG. 16B is a schematic diagram that illustrates a resource allocation of CORESETs according to an exemplary embodiment of the present disclosure. Referring to FIG. 16B, if the time offset of scheduling DCI by CORESET #3 and the scheduled PDSCH is less than the threshold, UE may assume the QCL assumption used for CORESET #3 with the both resource types.

In one embodiment, the at least one CORESET is configured with a value of group index, and/ or the value of group Index is associated with a resource type.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where wherein the lowest CORESET ID is selected from the CORESET associated with the same resource type as scheduled PDSCH and/or the CORESET associated with both resource types. The CORESET may be configured with a value of CORESETPoolIndex by e.g., RRC, where the value of CORESETPoolIndex may be associated with a resource type.

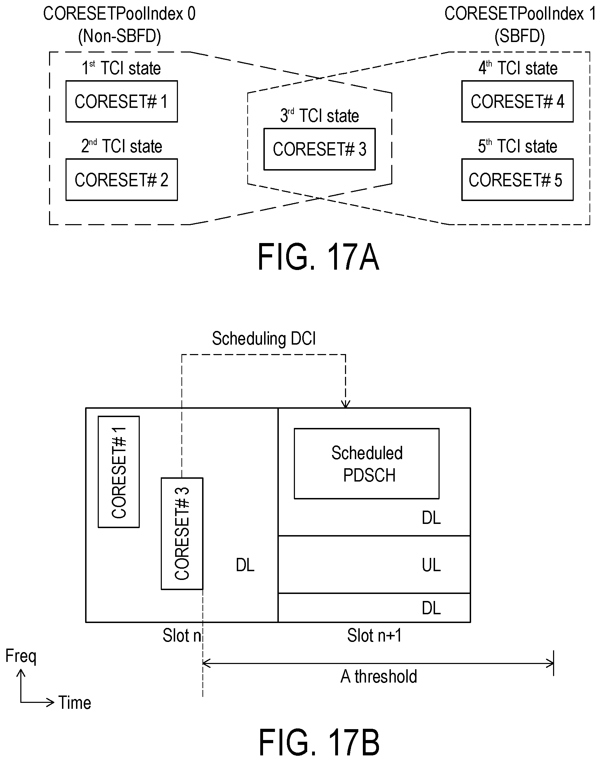

For example, FIG. 17A is a schematic diagram that illustrates an association of CORESETs and resource types according to an exemplary embodiment of the present disclosure. Referring to FIG. 17A, there are CORESET #1 associated with the first TCI state, CORESET #2 associated with the second TCI state, and CORESET #3 associated with the third TCI state configured with CORESETPoolIndex 0 associated with non-SBFD resource, and there are CORESET #3 associated with the third TCI state, CORESET #4 associated with the fourth TCI state, and CORESET #5 associated with the fifth TCI state configured with CORESETPoolIndex 1 associated with SBFD resource.

FIG. 17B is a schematic diagram that illustrates a resource allocation of CORESETs according to an exemplary embodiment of the present disclosure. Referring FIG. 17B, if the time offset of scheduling DCI by CORESET #3 and the scheduled PDSCH is less than the threshold, UE may assume the QCL assumption used for CORESET #3 associated with SBFD resource in the latest slot.

In one embodiment, UE may assume a QCL assumption used for a lowest CORESEDT ID among a plurality of CORESETs configured with a value of group index value associated with a same type of a slot for receiving the PDSCH.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest CORESET ID among the CORESETs configured with a CORESETPoolIndex value associated with SBFD/non-SBFD symbols, respectively.

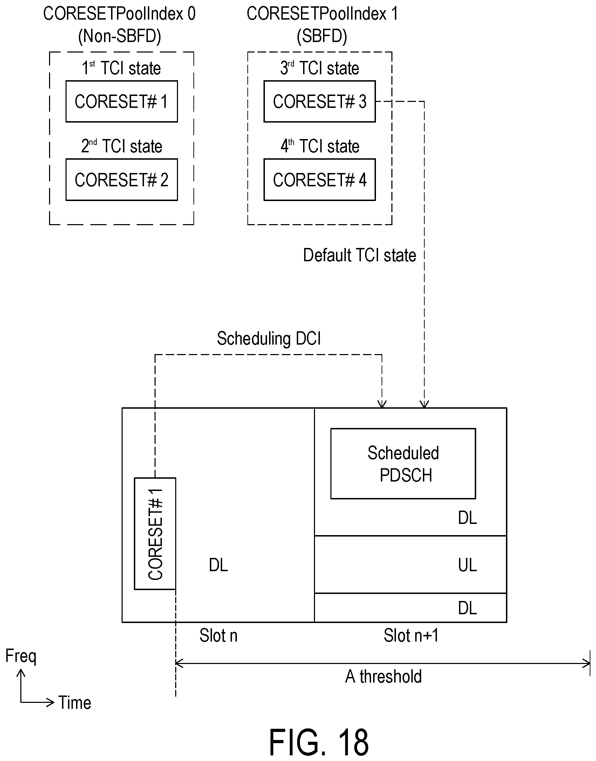

For example, FIG. 18 is a schematic diagram that illustrates an association of CORESETs and resource types and its resource allocation according to an exemplary embodiment of the present disclosure. Referring to FIG. 18, there are CORESET #1 associated with the first TCI state and CORESET #2 associated with the second TCI state configured with CORESETPoolIndex 0 associated with non-SBFD resource, and there are CORESET #3 associated with the third TCI state and CORESET #4 associated with the fourth TCI state configured with CORESETPoolIndex 1 associated with SBFD resource. If the time offset of scheduling DCI by CORESET #1 and the scheduled PDSCH is less than the threshold, UE may assume the QCL assumption used for CORESET #1 configured with CORESETPoolIndex 0 associated with non-SBFD resource.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest CORESET ID among the CORESETs configured with a CORESETPoolIndex value associated with SBFD/non-SBFD symbols, respectively. A CORESET may be configured with one or two values of CORESETPoolIndex.

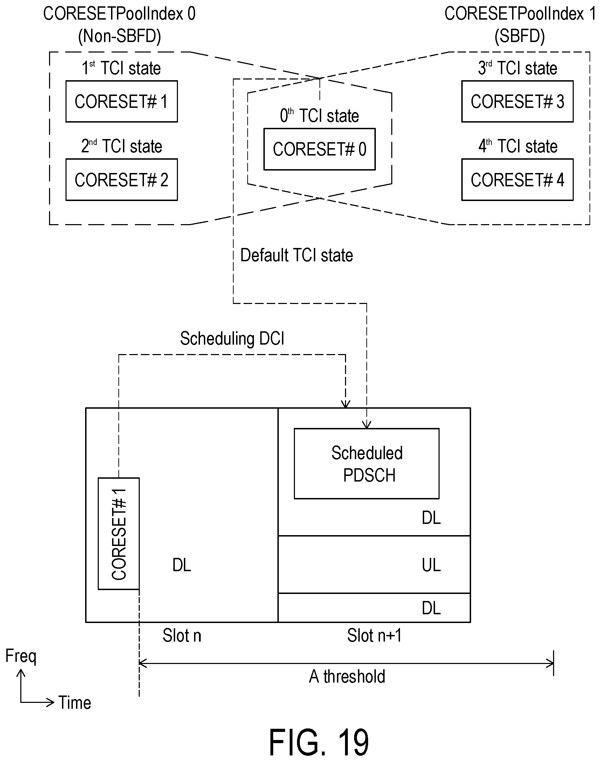

For example, FIG. 19 is a schematic diagram that illustrates an association of CORESETs and resource types and its resource allocation according to an exemplary embodiment of the present disclosure. Referring to FIG. 19, there are CORESET #1 associated with the first TCI state, CORESET #2 associated with the second TCI state, and CORESET #0 associated with the zero-th TCI state configured with CORESETPoolIndex 0 associated with non-SBFD resource, and there are CORESET #3 associated with the third TCI state, CORESET #4 associated with the fourth TCI state, and CORESET #0 associated with the zero-th TCI state configured with CORESETPoolIndex 1 associated with SBFD resource. If the time offset of scheduling DCI by CORESET #1 and the scheduled PDSCH is less than the threshold, UE may assume the QCL assumption used for CORESET #1 configured with CORESETPoolIndex 0 associated with non-SBFD resource.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest CORESET ID among the CORESETs configured with a CORESETPoolIndex value associated with SBFD/non-SBFD symbols, respectively.

Option 1: A CORESET may be configured with one or two values of CORESETPoolIndex.

Option 2: when (if or in the case that) a CORESET is not configured with any value of CORESETPoolIndex, the CORESET may be associated with one value of CORESETPoolIndex (e.g., 1st, 2nd, or 3rd value of CORESETPoolIndex).

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest CORESET ID among the CORESETs associated with SBFD/non-SBFD symbols, respectively.

Option 3: when (if or in the case that) a CORESET is not configured with any value of CORESETPoolIndex, the CORESET may be associated with SBFD and non-SBFD.

In one embodiment, UE may assume a QCL assumption used for a CORESET associated with a monitored search space (SS) with a lowest CORESET ID among a plurality of CORESETs associated with a common type of a SS set in a latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the monitored SS set is associated with one CORESET, UE may apply the TCI state as the default QCL assumption for PDSCH reception.

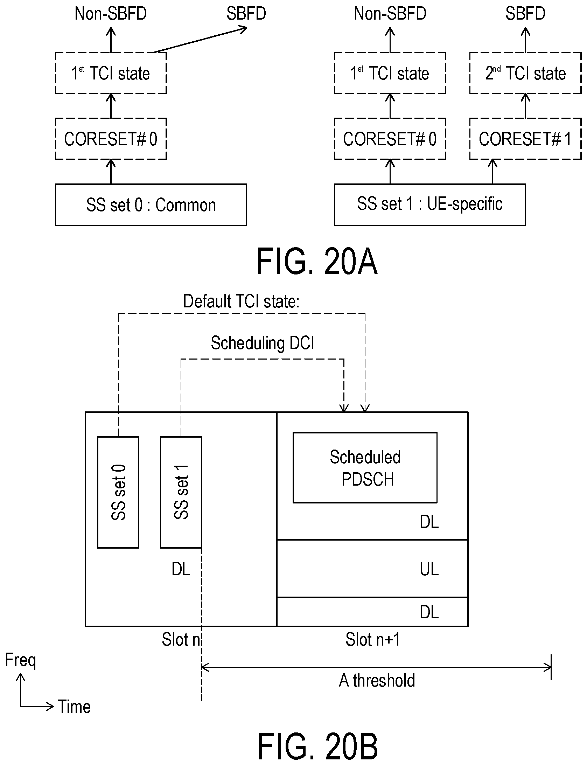

For example, FIG. 20A is a schematic diagram that illustrates a default TCI state determination considering SS set type according to an exemplary embodiment of the present disclosure. Referring to FIG. 20A, the first TCI state associated with the CORESET 0 associated with the common SS set is configured with both SBFD symbols and non-SBFD symbols. The first state associated with the CORESET 0 associated with the UE-specific SS set is configured with only non-SBFD symbols, and the second state associated with the CORESET 1 associated with the UE-specific SS set is configured with only SBFD symbols.

FIG. 20B is a schematic diagram that illustrates a resource allocation of CORESETs according to an exemplary embodiment of the present disclosure. Referring to FIG. 20B, if the time offset of scheduling DCI by SS set 1 with the UE-specific type and the scheduled PDSCH is less than the threshold, UE may assume the QCL assumption used for CORESET 0 associated with SS set 0.

In one embodiment, UE may assume a QCL assumption used for a CORESET associated with a monitored search space (SS) with a lowest CORESET ID among a plurality of CORESETs associated with a common type of a SS set in a latest slot. When (if or in a case that) more than one common SS set is in the latest slot, determining the CORESET with highest priority according to a first priority rule. In one embodiment, an order of the first priority rule is predefined in following descending order: a first type physical downlink control channel (PDCCH) associated with system information; and a second type PDCCH not associated with the system information.

In one embodiment, UE may assume a QCL assumption used for a CORESET associated with a monitored search space (SS) with a lowest CORESET ID among a plurality of CORESETs associated with a common type of a SS set in a latest slot. When (if or in a case that) more than one SS set has a same highest priority according to a first priority rule, UE may determine the CORESET associated with the lowest SS set ID among the more than one SS set has the same highest priority.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET among the CORESETs associated with the common type of the SS set in the latest slot. In one embodiment, when (if or in the case that) more than one common SS sets are in the latest slot, UE may determine the CORESET with highest priority according to a first priority rule, where the first priority rule order may be predefined/fixed/configured in the following descending order:

Type0-PDCCH;
Type0A-PDCCH;
Type1-PDCCH;
Type2-PDCCH;
Type3-PDCCH.

In one embodiment, when (if or in the case that) more than one SS sets have same highest priority according to the first priority rule, UE may determine the CORESET associated with lowest SS set ID among more than one SS sets have same highest priority.

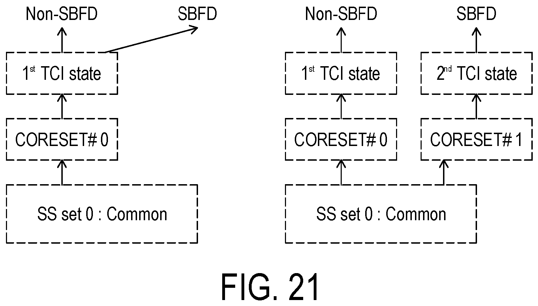

For example, FIG. 21 is a schematic diagram that illustrates a default TCI state determination considering SS set type according to an exemplary embodiment of the present disclosure. Referring to FIG. 21, the first TCI state associated with the CORESET 0 associated with the common SS set configured with type0-PDCCH is configured with both SBFD symbols and non-SBFD symbols. The first state associated with the CORESET 0 associated with the UE-specific SS set configured with type3-PDCCH is configured with only non-SBFD symbols, and the second state associated with the CORESET 1 associated with the UE-specific SS set configured with type3-PDCCH is configured with only SBFD symbols. If the time offset of scheduling DCI and the scheduled PDSCH is less than a threshold, UE may assume the QCL assumption used for the CORESET 0 associated with the common type SS set 0 configured with type0-PDCCH in the latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively.

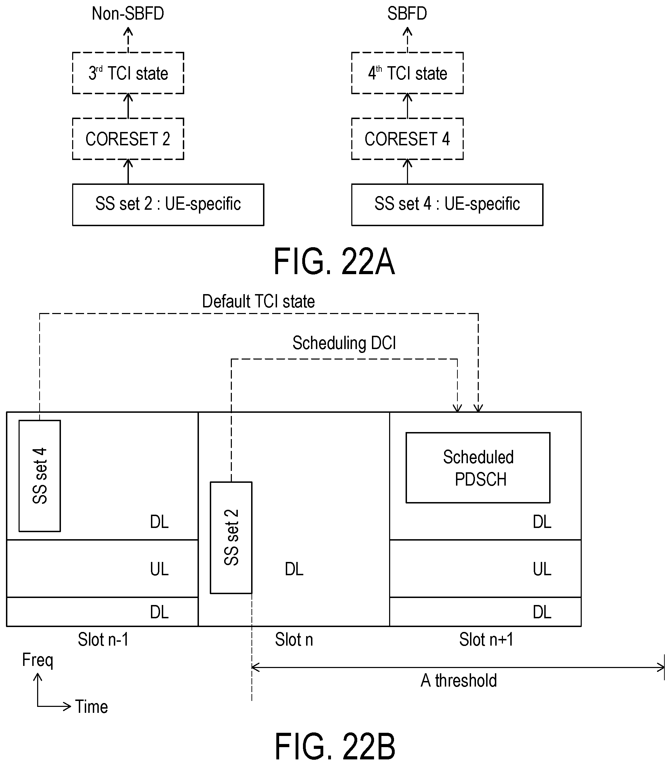

For example, FIG. 22A is a schematic diagram that illustrates a default TCI state determination considering SS set type according to an exemplary embodiment of the present disclosure. Referring to FIG. 22A, the third state associated with the CORESET 2 associated with the UE-specific SS set is configured with only non-SBFD symbols, and the fourth state associated with the CORESET 4 associated with the UE-specific SS set is configured with only SBFD symbols. FIG. 22B is a schematic diagram that illustrates a resource allocation of CORESETs according to an exemplary embodiment of the present disclosure. Referring to FIG. 22B, if the time offset of scheduling DCI and the scheduled PDSCH is less than a threshold, UE may assume the QCL assumption used for the CORESET 2 associated with the UE-specific SS set 2 in the latest slot.

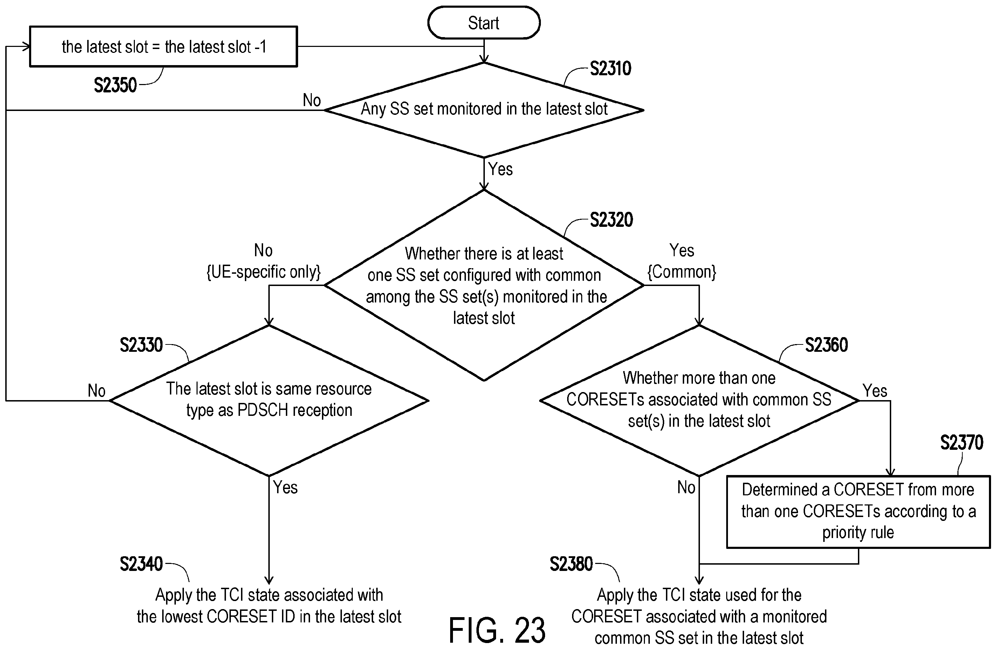

FIG. 23 is a flow chart that illustrates a method of applying TCI state with a CORESET according to an exemplary embodiment of the present disclosure. Referring to FIG. 23, UE determines whether there is any SS set monitored in the latest slot (step S2310). If there is one or more SS sets monitored in the latest slot, UE determines whether there is at least one SS set configured with a common type among the SS set(s) monitored in the latest slot (step S2320). If there is no SS sets configured with a common type among the SS set(s) monitored in the latest slot (for example, only SS sets configured with UE-specific), UE determines whether the resource type of the latest slot is the same resource type as PDSCH reception (step S2330). If the latest slot is the same resource type as PDSCH reception, UE may apply the TCI state associated with the lowest CORESET ID in the latest slot (step S2340). If the latest slot is not the same resource type as PDSCH reception, UE may determine the slot before the last slot as the new last slot (step S2350) and back to step S2310. Also, if there is no SS set monitored in the last slot, UE may determine the slot before the last slot as the new last slot (step S2350) and back to step S2310.

However, if there is one or more SS sets configured with a common type among the SS set(s) monitored in the latest slot, UE determines whether more than one CORESET is associated with common SS set(s) in the latest slot (step S2360). If more than one CORESET is associated with common SS set(s) in the latest slot, UE may determine a CORESET from more than one CORESET according to a priority rule, e.g., the first priority rule (step S2370). Then, UE applies the TCI state used for the CORESET associated with a monitored common SS set in the latest slot (step 2380). If only one CORESET is associated with common SS set(s) in the latest slot, UE applies the TCI state used for the CORESET associated with a monitored common SS set in the latest slot (step 2380).

In one embodiment, when (if or in the case that) the time offset of scheduling DCI and the scheduled PDSCH is less than a threshold in which the PDSCH is scheduled in SBFD/non-SBFD symbols:

Option 1: UE may assume the QCL assumption used for the CORESET associated with a monitored search space with the lowest CORESET ID among the CORESET associated with the common type of the SS set in the latest slot. In one embodiment, when (if or in the case that) the monitored SS set is associated with one CORESET, UE may apply the TCI state as the default QCL assumption for PDSCH reception.

In one embodiment, when (if or in the case that) a RS in a TCI state configured for non-SBFD resource type activated in the lowest CORESET, at least one SS set associated with the lowest CORESET may be common.

Option 2: UE may assume the QCL assumption used for the CORESET associated with a monitored search space with the lowest CORESET.

In one embodiment, when (if or in the case that) the monitored SS set is associated with one CORESET, UE may apply the TCI state as the default QCL assumption for PDSCH reception.

In one embodiment, when (if or in the case that) the monitored SS set is associated with two CORESETs, UE may apply the TCI state associated with SBFD/non-SBFD symbols as the default QCL assumption for PDSCH reception, respectively.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) the monitored SS set is associated with one CORESET, UE may apply the TCI state as the default QCL assumption for PDSCH reception.

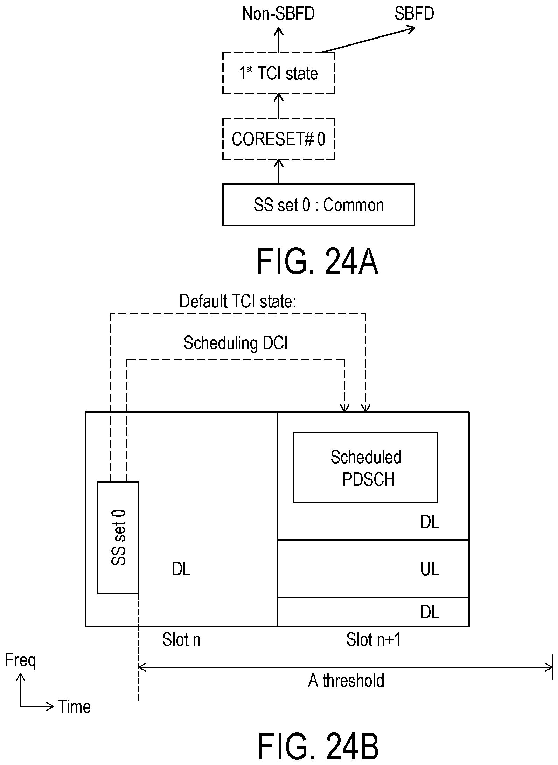

For example, FIG. 24A is a schematic diagram that illustrates a default TCI state determination considering SS set type according to an exemplary embodiment of the present disclosure. Referring to FIG. 24A, the CORESET 0 associated with the first TCI state is configured with both non-SBFD and SBFD resources. FIG. 24B is a schematic diagram that illustrates a resource allocation of CORESETs according to an exemplary embodiment of the present disclosure. Referring to FIG. 24B, if the time offset of scheduling DCI and the scheduled PDSCH is less than a threshold, UE may assume the QCL assumption used for the CORESET 0 associated with the common SS set 0 in the latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) the monitored SS set is associated/indicated with two CORESETs, UE may apply the TCI state associated with SBFD/non-SBFD symbols as the default QCL assumption for PDSCH reception, respectively.

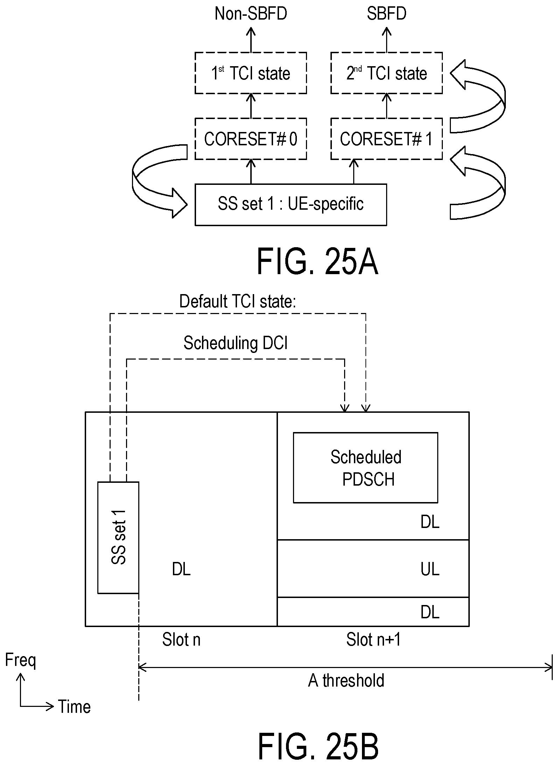

For example, FIG. 25A is a schematic diagram that illustrates a default TCI state determination considering SS set type according to an exemplary embodiment of the present disclosure. Referring to FIG. 25A, UE-specific SS set 1 is associated with CORESET 0 and CORESET 1. CORESET 0 associated with the first TCI state is configured with only non-SBFD resource, and CORESET 1 associated with the first TCI state is configured with only SBFD resource. FIG. 25B is a schematic diagram that illustrates a resource allocation of CORESETs according to an exemplary embodiment of the present disclosure. Referring to FIG. 25B, if the time offset of scheduling DCI by SS set 1 and the scheduled PDSCH is less than a threshold, UE may apply the second TCI state associated with SBFD symbols as the default QCL assumption for PDSCH reception and may assume the QCL assumption used for CORESET 1.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) the monitored SS set is associated with one CORESET, UE may apply the TCI state as the default QCL assumption for PDSCH reception.

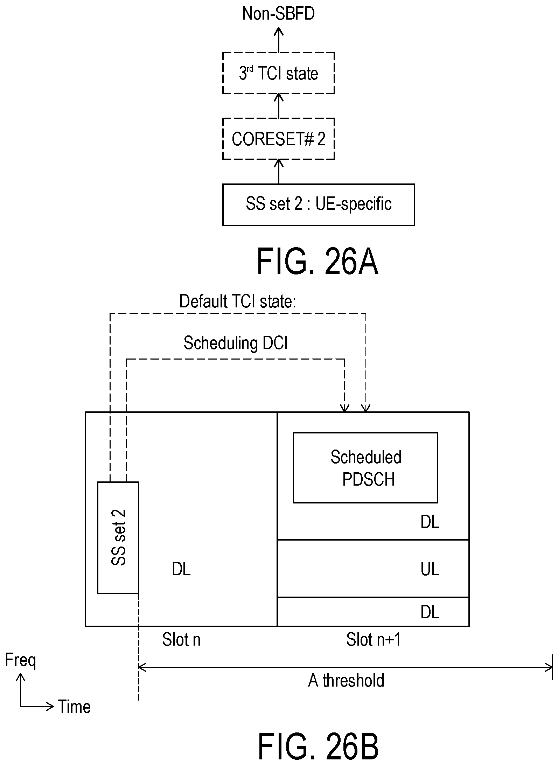

For example, FIG. 26A is a schematic diagram that illustrates a default TCI state determination considering SS set type according to an exemplary embodiment of the present disclosure. Referring to FIG. 26A, UE-specific SS set 2 is associated with CORESET 2. CORESET 2 associated with the third TCI state is configured with only non-SBFD resource. FIG. 26B is a schematic diagram that illustrates a resource allocation of CORESETs according to an exemplary embodiment of the present disclosure. Referring to FIG. 26B, if the time offset of scheduling DCI by SS set 2 and the scheduled PDSCH is less than a threshold, UE may apply the third TCI state associated with non-SBFD symbols as the default TCI state and may assume the QCL assumption used for CORESET 2.

In one embodiment, when (if or in the case that) the time offset of scheduling DCI and the scheduled PDSCH is less than a threshold in which the PDSCH is scheduled in SBFD/non-SBFD symbols and/ or the PDSCH is scheduled in the fixed/predetermined/configured symbol location e.g., first/last half slot, UE may assume the QCL assumption used for the CORESET associated with a monitored search space with the lowest CORESET ID in the latest slot, where the latest slot UE may monitor UE-specific SS set(s) only. In one embodiment, when (if or in the case that) the monitored SS set is associated with one CORESET, UE may apply the TCI state as the default QCL assumption for PDSCH reception. In one embodiment, when (if or in the case that) the monitored SS set is associated with two CORESETs, UE may apply the TCI state associated with SBFD/non-SBFD symbols as the default QCL assumption for PDSCH reception, respectively.

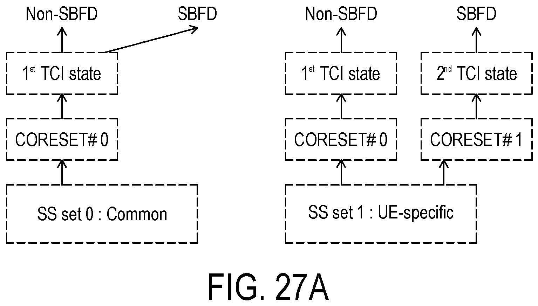

For example, FIG. 27A is a schematic diagram that illustrates a default TCI state for physical downlink shared channel (PDSCH) scheduled by a downlink control information (DCI) from a Search Space (SS) associated with two CORESETs according to an exemplary embodiment of the present disclosure. Referring to FIG. 27A, the CORESET 0 associated with common SS set 0 and the first TCI state is configured with SBFD resource and non-SBFD resource. CORESET 0 associated with UE-specific SS set 1 and the first TCI state is configured with non-SBFD resource, and CORESET 1 associated with UE-specific SS set 1 and the second TCI state is configured with SBFD resource.

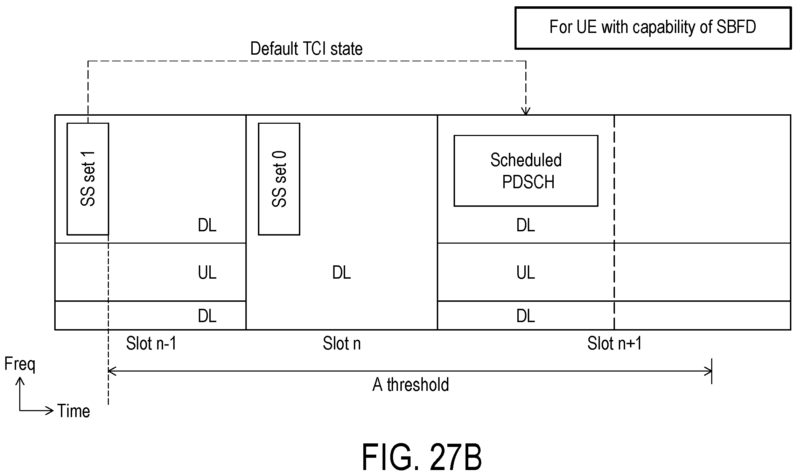

FIG. 27B is a schematic diagram that illustrates a resource allocation of SS sets according to an exemplary embodiment of the present disclosure. Referring to FIG. 27B, if the time offset of scheduling DCI by SS set 1 and the scheduled PDSCH is less than a threshold, UE may assume the QCL assumption used for the CORESET 1 associated with SS set 1 in the latest slot.

In one embodiment, when (if or in the case that) the time offset of scheduling DCI and the scheduled PDSCH is less than a threshold in which the PDSCH is scheduled in SBFD/non-SBFD symbols and/ or the PDSCH is scheduled in the fixed/predetermined/configured symbol location e.g., first/last half slot, UE may assume the QCL assumption used for the CORESET associated with a monitored search space with the lowest CORESET ID in the latest slot, where the latest slot UE may monitor UE-specific SS set(s) only. In one embodiment, when (if or in the case that) the monitored SS set is associated with one CORESET, UE may apply the TCI state as the default QCL assumption for PDSCH reception. In one embodiment, when (if or in the case that) the monitored SS set is associated with two CORESETs, UE may apply the TCI state associated with SBFD/non-SBFD symbols as the default QCL assumption for PDSCH reception, respectively.

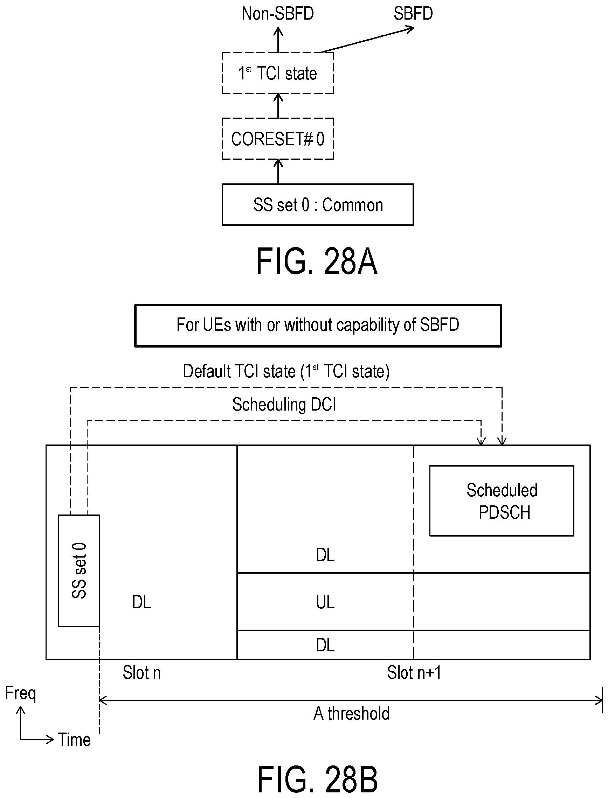

For example, FIG. 28A is a schematic diagram that illustrates a default TCI state for PDSCH scheduled by a DCI from an SS associated with two CORESETs according to an exemplary embodiment of the present disclosure. Referring to FIG. 28A, CORESET associated with common SS set 0 and the first TCI state is configured with SBFD resource and non-SBFD resource. FIG. 28B is a schematic diagram that illustrates a resource allocation of an SS set according to an exemplary embodiment of the present disclosure. Referring to FIG. 28B, if the time offset of scheduling DCI by SS set 0 and the scheduled PDSCH is less than a threshold, UE may assume the QCL assumption used for the CORESET 0 associated with SS set 0 in the latest slot in which the first TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively. In one embodiment, when (if or in the case that) the CORESET is activated/indicated with two TCI states, UE may apply the TCI state associated with SBFD /non-SBFD symbols as the default QCL assumption for PDSCH reception.

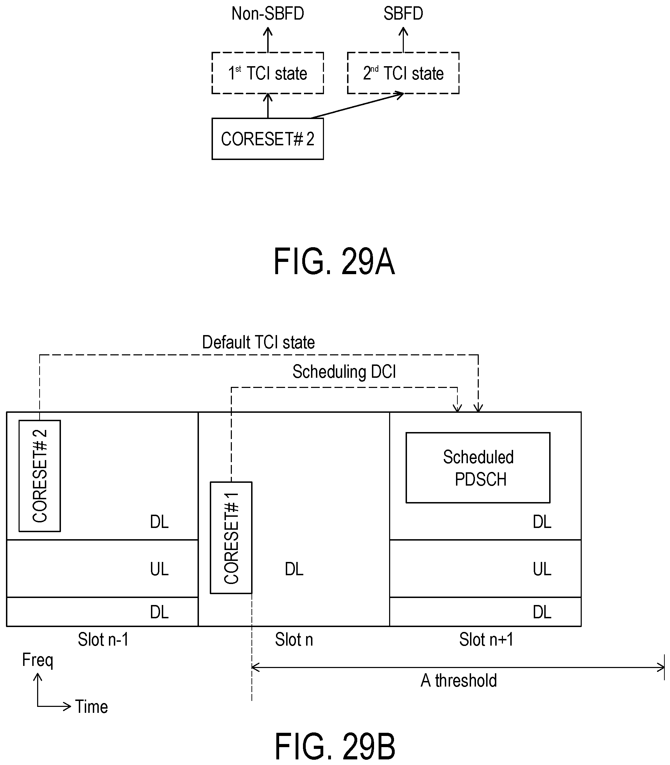

For example, FIG. 29A is a schematic diagram that illustrates a latest slot/symbol associated with same resource type as potential PDSCH reception according to an exemplary embodiment of the present disclosure. Referring to FIG. 29A, CORESET #2 is associated with the first TCI state configured with non-SBFD resource and the second TCI state configured with SBFD resource. FIG. 29B is a schematic diagram that illustrates a resource allocation of CORESETs according to an exemplary embodiment of the present disclosure. Referring to FIG. 29B, if the time offset of scheduling DCI by CORESET #1 and the scheduled PDSCH is less than a threshold, UE may assume the QCL assumption used for the CORESET #2 by the second TCI state in which the second TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively. In one embodiment, when (if or in the case that) the CORESET is activated/indicated with two TCI states, UE may apply the TCI state associated with SBFD/non-SBFD symbols as the default QCL assumption for PDSCH reception.

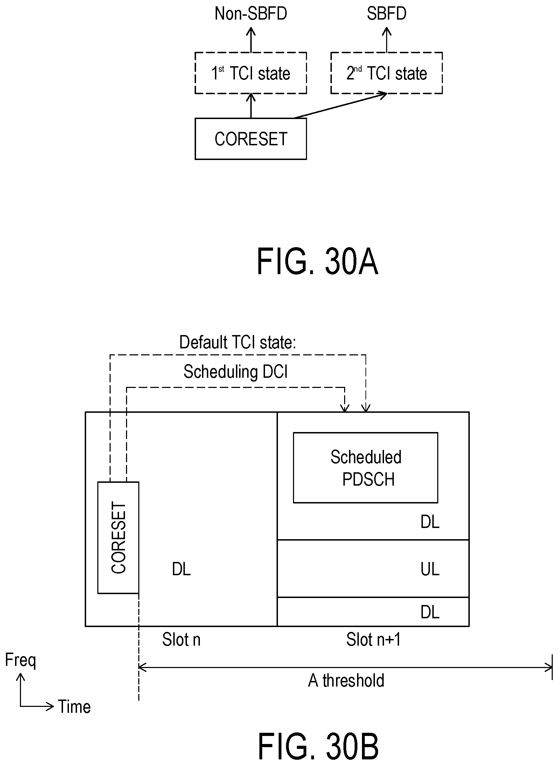

For example, FIG. 30A is a schematic diagram that illustrates a TCI state associated with same resource type in the latest slot/symbol as potential PDSCH reception according to an exemplary embodiment of the present disclosure. Referring to FIG. 30A, CORESET is associated with the first TCI state configured with non-SBFD resource and the second TCI state configured with SBFD resource. FIG. 30B is a schematic diagram that illustrates a resource allocation of CORESET according to an exemplary embodiment of the present disclosure. Referring to FIG. 30B, if the time offset of scheduling DCI by CORESET and the scheduled PDSCH is less than a threshold, UE may assume the QCL assumption used for the CORESET by the second TCI state in which the second TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) the CORESET is activated/indicated with two TCI states, UE may apply the TCI state associated with SBFD/non-SBFD symbols as the default QCL assumption for PDSCH reception. In one embodiment, the TCI state may be configured with a value of TCI state Pool Index by e.g., RRC, where the value of TCI state Pool Index may be associated with a resource type.

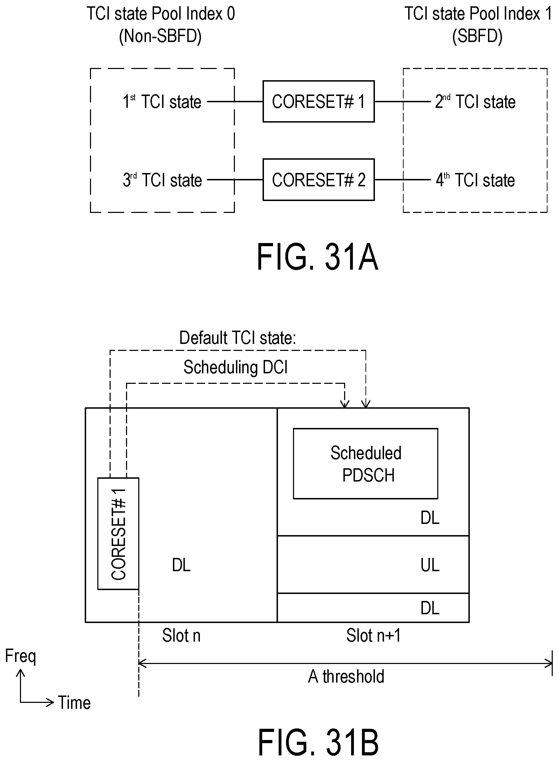

For example, FIG. 31A is a schematic diagram that illustrates a TCI state associated with same resource type in the latest slot/symbol as potential PDSCH reception according to an exemplary embodiment of the present disclosure. Referring to FIG. 31A, there are the first TCI state associated with CORESET #1 and the third TCI state associated with CORESET #2 configured with TCI Pool Index 0 associated with non-SBFD resource, and there are the second TCI state associated with CORESET #1 and the fourth TCI state associated with CORESET #2 configured with TCI state Pool Index 1 associated with SBFD resource.

FIG. 31B is a schematic diagram that illustrates a resource allocation of CORESET according to an exemplary embodiment of the present disclosure. Referring to FIG. 31B, if the time offset of scheduling DCI by CORESET #1 and the scheduled PDSCH is less than a threshold, UE may assume the QCL assumption used for the CORESET #1 by the second TCI state in which the second TCI state associated with SBFD symbols is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) the CORESET is activated/indicated with one TCI state, UE may apply the TCI state as the default QCL assumption for PDSCH reception. In one embodiment, when (if or in the case that) the CORESET is activated/indicated with two TCI states, UE may apply the TCI state associated with SBFD/non-SBFD symbols as the default QCL assumption for PDSCH reception, respectively.

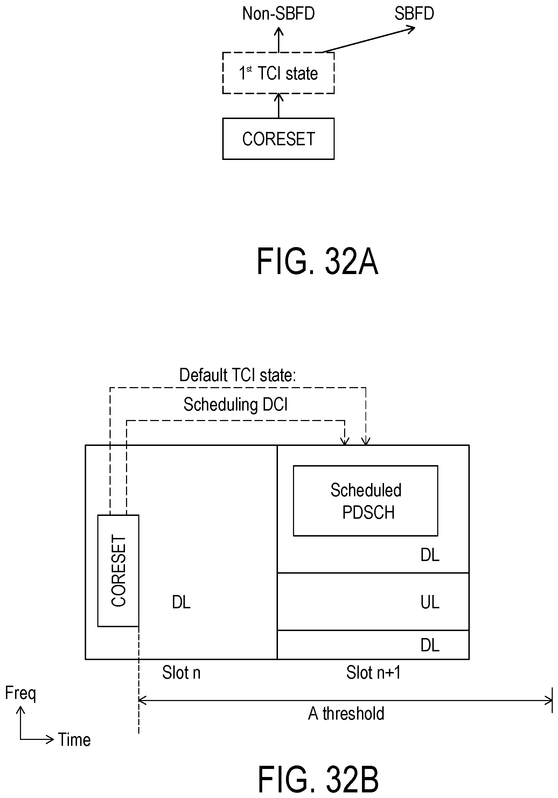

For example, FIG. 32A is a schematic diagram that illustrates a TCI state associated with same resource type in the latest slot/symbol as potential PDSCH reception according to an exemplary embodiment of the present disclosure. Referring to FIG. 32A, the CORESET is associated with the first TCI configured with non-SBFD resource and SBFD resource. FIG. 32B is a schematic diagram that illustrates a resource allocation of CORESET according to an exemplary embodiment of the present disclosure. Referring to FIG. 32B, if the time offset of scheduling DCI by CORESET and the scheduled PDSCH is less than a threshold, UE may assume the QCL assumption used for the CORESET associated with the first TCI state in the latest slot in which the first TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest TCI state ID among the TCI states with a TCI state Pool Index value associated with SBFD/non-SBFD symbols, respectively.

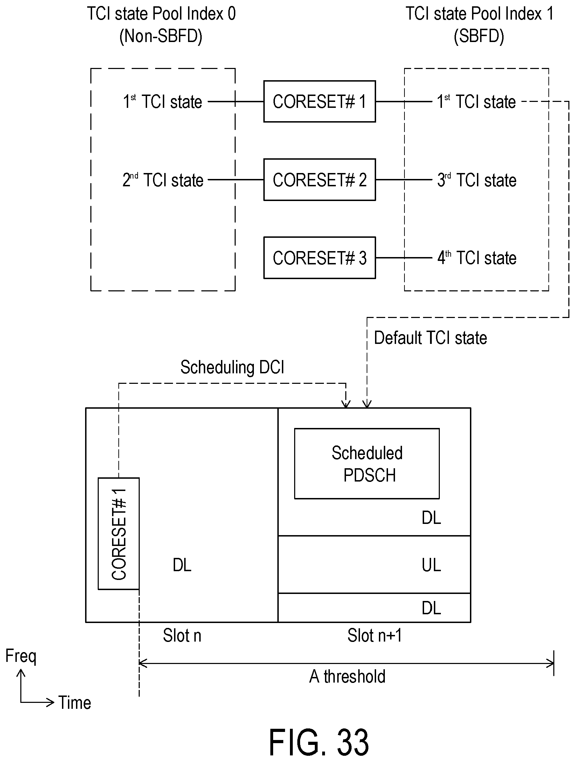

For example, FIG. 33 is a schematic diagram that illustrates selecting TCI state from TCI state pool associated with same resource type as potential PDSCH reception according to an exemplary embodiment of the present disclosure. Referring to FIG. 33A, there are the first TCI state associated with CORESET #1 and the second TCI state associated with CORESET #2 configured with TCI Pool Index 0 associated with non-SBFD resource, and there are the first TCI state associated with CORESET #1, the third TCI state associated with CORESET #2, and the fourth TCI state associated with CORESET #3 configured with TCI state Pool Index 1 associated with SBFD resource. If the time offset of scheduling DCI by CORESET #1 and the scheduled PDSCH is less than a threshold, UE may assume the QCL assumption used for the first TCI state among the TCI states with the TCI state Pool Index 0 associated with non-SBFD symbols.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the CORESET is activated/indicated with one TCI state, UE may apply the TCI state as the default QCL assumption for PDSCH reception.

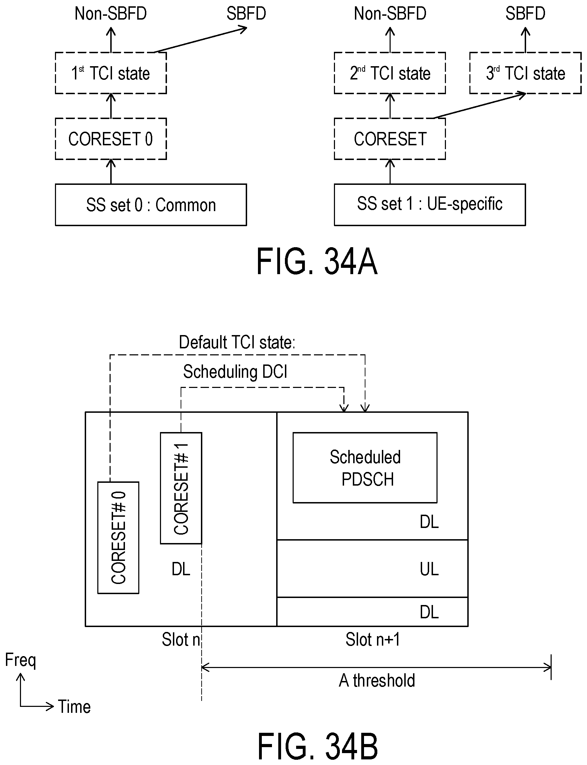

For example, FIG. 34A is a schematic diagram that illustrates a default TCI state determination considering SS set type according to an exemplary embodiment of the present disclosure. Referring to FIG. 34A, the first TCI state associated with common SS set 0 and the CORESET 0 is configured with SBFD resource and non-SBFD resource. The second TCI state associated with UE-specific SS set 1 and the CORESET 1 is configured with non-SBFD resource. The third TCI state associated with UE-specific SS set 1 and the CORESET 1 is configured with SBFD resource. FIG. 34B is a schematic diagram that illustrates a resource allocation of SS sets according to an exemplary embodiment of the present disclosure. Referring to FIG. 34B, if the time offset of scheduling DCI by SS set 0 and the scheduled PDSCH is less than a threshold, UE may assume the QCL assumption used for CORESET 0 associated with the common SS set 0 in the latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET among the CORESETs associated with the common type of the SS set in the latest slot. In one embodiment, when (if or in the case that) more than one common SS set is in the latest slot, UE may determine the CORESET with highest priority according to a first priority rule, where the first priority rule order may be predefined/fixed/configured in the following descending order:

Type0-PDCCH;
Type0A-PDCCH;
Type1-PDCCH;
Type2-PDCCH;
Type3-PDCCH.

In one embodiment, when (if or in the case that) more than one SS sets have same highest priority according to the first priority rule, UE may determine the CORESET associated with lowest SS set ID among more than one SS sets have same highest priority.

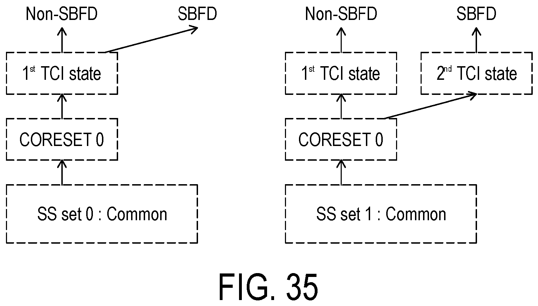

For example, FIG. 35 is a schematic diagram that illustrates a default TCI state determination considering SS set type according to an exemplary embodiment of the present disclosure. Referring to FIG. 35, the first TCI state associated with the CORESET 0 associated with the common SS set configured with type0-PDCCH is configured with both SBFD symbols and non-SBFD symbols. The first state associated with the CORESET 0 associated with the UE-specific SS set configured with type3-PDCCH is configured with only non-SBFD symbols, and the second state associated with the CORESET 1 associated with the UE-specific SS set configured with type3-PDCCH is configured with only SBFD symbols. If the time offset of scheduling DCI and the scheduled PDSCH is less than a threshold, UE may assume the QCL assumption used for the CORESET 0 associated with the common type SS set 0 configured with type0-PDCCH in the latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively.

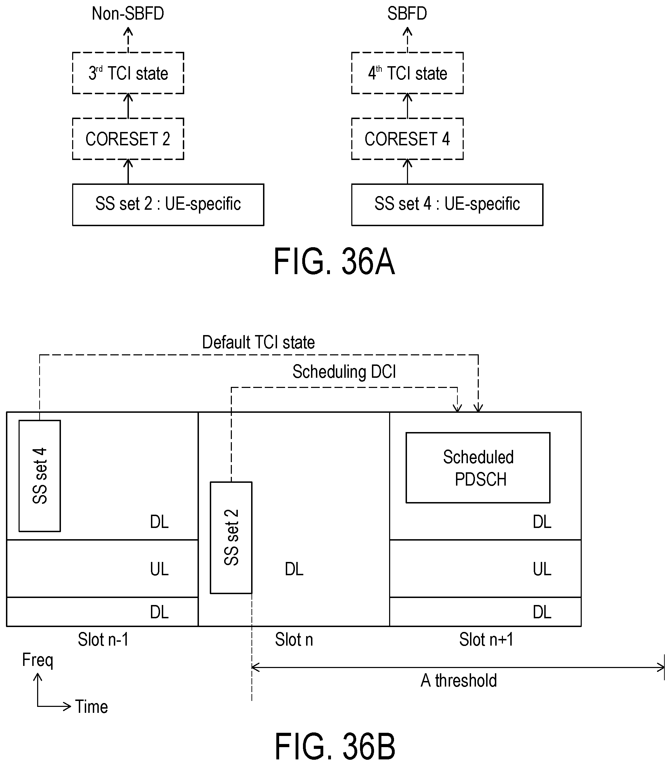

For example, FIG. 36A is a schematic diagram that illustrates a default TCI state determination considering SS set type according to an exemplary embodiment of the present disclosure. Referring to FIG. 36A, the third TCI state associated with the CORESET 2 associated with the UE-specific SS set is configured with only non-SBFD symbols, and the fourth TCI state associated with the CORESET 4 associated with the UE-specific SS set is configured with only SBFD symbols. FIG. 36B is a schematic diagram that illustrates a resource allocation of SS sets according to an exemplary embodiment of the present disclosure. Referring to FIG. 36B, if the time offset of scheduling DCI by SS set 2 and the scheduled PDSCH is less than a threshold, UE may assume the QCL assumption used for the fourth TCI state associated with the UE-specific SS set 4 in the latest slot in which the fourth TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) the CORESET is activated/indicated with one TCI state, UE may apply the TCI state as the default QCL assumption for PDSCH reception, where the search space may be a common type.

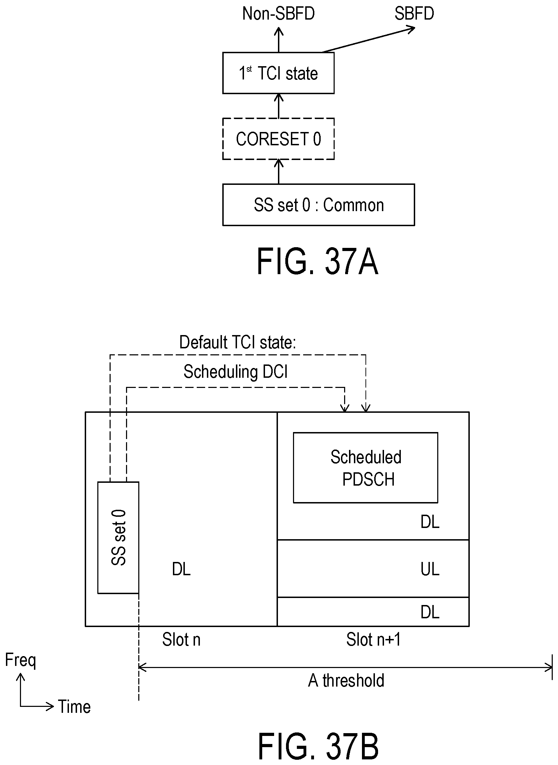

Fo example, FIG. 37A is a schematic diagram that illustrates a default TCI state determination considering SS set type according to an exemplary embodiment of the present disclosure. Referring to FIG. 37A, the first TCI state associated with the CORESET 0 associated with the common SS set is configured with SBFD and non-SBFD symbols. FIG. 37B is a schematic diagram that illustrates a resource allocation of an SS set according to an exemplary embodiment of the present disclosure. Referring to FIG. 37B, if the time offset of scheduling DCI by SS set 0 and the scheduled PDSCH is less than a threshold, UE may assume the QCL assumption used for the CORESET 0 with the first TCI state associated with the common SS set in the latest slot.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for CORESET associated with a monitored search space with the lowest CORESET ID in the latest slot. In one embodiment, when (if or in the case that) the CORESET is activated/indicated with two TCI states, UE may apply the TCI state associated with SBFD/non-SBFD symbols as the default QCL assumption for PDSCH reception, respectively.

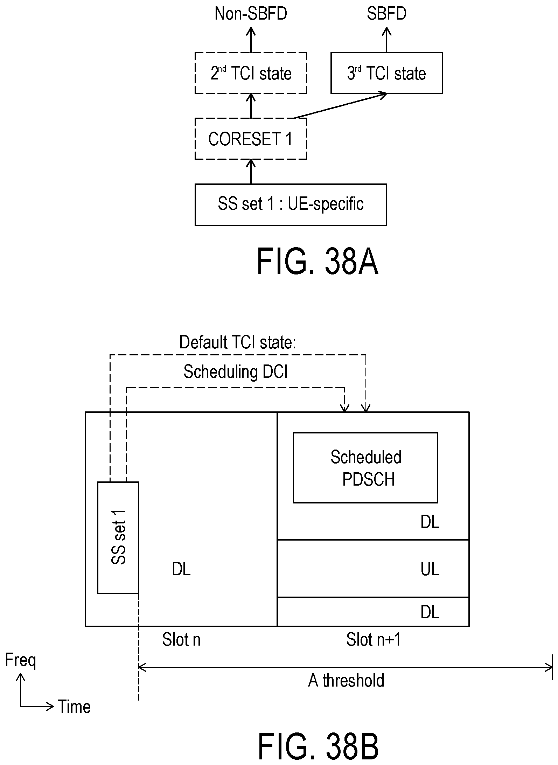

For example, FIG. 38A is a schematic diagram that illustrates a default TCI state determination considering SS set type according to an exemplary embodiment of the present disclosure. Referring to FIG. 38A, the second TCI state associated with UE-specific SS set 1 and the CORESET 1 is configured with non-SBFD resource. The third TCI state associated with UE-specific SS set 1 and the CORESET 1 is configured with SBFD resource. FIG. 38B is a schematic diagram that illustrates a resource allocation of an SS set according to an exemplary embodiment of the present disclosure. Referring to FIG. 38B, if the time offset of scheduling DCI by SS set 1 and the scheduled PDSCH is less than a threshold, UE may assume the QCL assumption used for the CORESET 1 with the third TCI state in the latest slot in which the third TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the CORESET is activated/indicated with one TCI states, UE may apply the TCI state as the default QCL assumption for PDSCH reception.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET. In one embodiment, when (if or in the case that) If the CORESET is activated/indicated with one TCI state, UE may apply the TCI state as the default QCL assumption for PDSCH reception. In one embodiment, when (if or in the case that) the CORESET is activated/indicated with two TCI states, UE may apply the TCI state associated with SBFD/non-SBFD symbols as the default QCL assumption for PDSCH reception, respectively.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively. In one embodiment, when (if or in the case that) the CORESET associated with a monitored search space with the lowest CORESET ID in the latest slot, where the latest slot may be associated with SBFD/non-SBFD symbols, respectively.

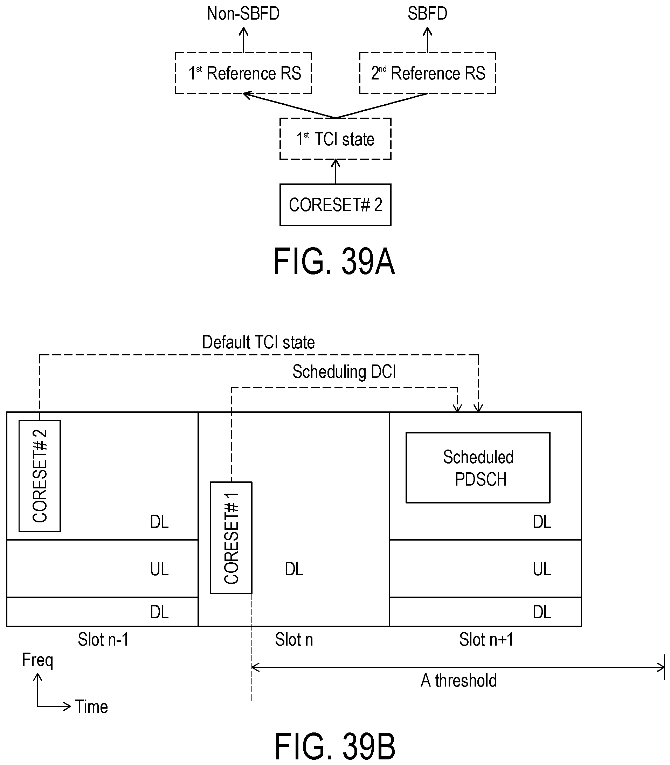

For example, FIG. 39A is a schematic diagram that illustrates a latest slot/symbol associated with same resource type as potential PDSCH reception according to an exemplary embodiment of the present disclosure. Referring to FIG. 39A, the first reference RS associated with the first TCI state and the CORESET #2 is configured with non-SBFD resource. The second reference RS associated with the first TCI state and CORESET #2 is configured with SBFD resource. FIG. 39B is a schematic diagram that illustrates a resource allocation of CORESETs according to an exemplary embodiment of the present disclosure. Referring to FIG. 39B, if the time offset of scheduling DCI by CORESET #1 and the scheduled PDSCH is less than a threshold, UE may assume the QCL assumption used for the CORESET #2 by the first TCI state with the first reference RS in the latest slot in which the first TCI state with the first reference RS is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) TCI state of the CORESET is configured with two reference RSs, UE may apply the reference RS associated with SBFD /non-SBFD symbols as the default QCL assumption for PDSCH reception.

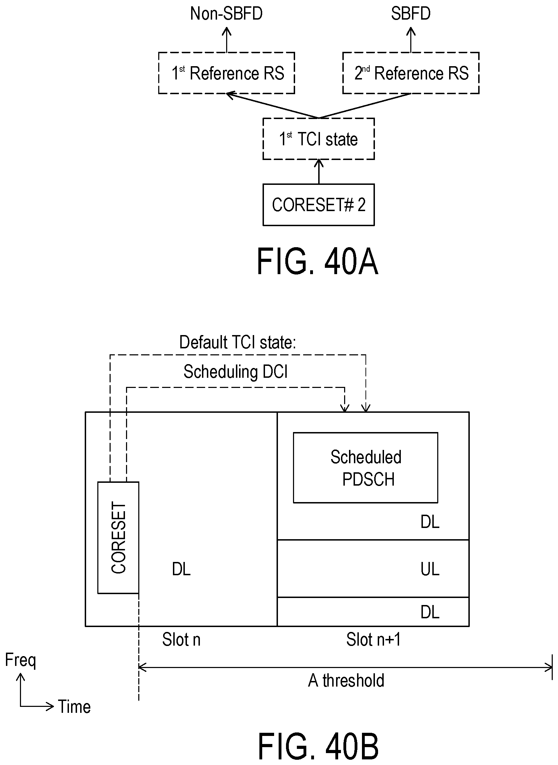

For example, FIG. 40A is a schematic diagram that illustrates a reference RS associated with same resource type in the latest slot/symbol as potential PDSCH reception according to an exemplary embodiment of the present disclosure. Referring to FIG. 40A, the first reference RS associated with the first TCI state and the CORESET #2 is configured with non-SBFD resource. The second reference RS associated with the first TCI state and CORESET #2 is configured with SBFD resource. FIG. 40B is a schematic diagram that illustrates a resource allocation of CORESET according to an exemplary embodiment of the present disclosure. Referring to FIG. 40B, if the time offset of scheduling DCI by CORESET and the scheduled PDSCH is less than a threshold, UE may assume the QCL assumption used for CORESET #2 by the first TCI state with the second reference RS in the latest slot in which the first TCI state with the second reference RS is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) TCI state of the CORESET is configured with two reference RSs, UE may apply the reference RS associated with SBFD /non-SBFD symbols as the default QCL assumption for PDSCH reception. In one embodiment, reference RS may be configured with a value of Reference RS Pool Index by e.g., RRC, where the value of Reference RS Pool Index may be associated with a resource type.

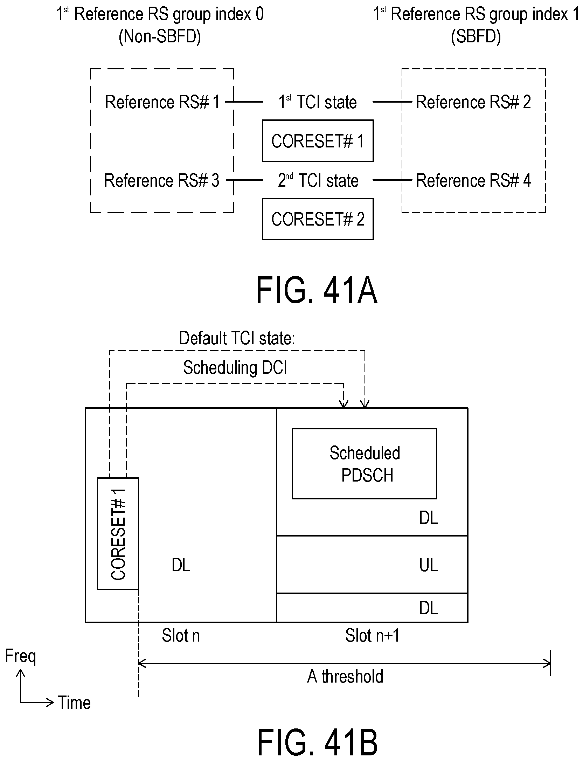

For example, FIG. 41A is a schematic diagram that illustrates a reference RS associated with same resource type in the latest slot/symbol as potential PDSCH reception according to an exemplary embodiment of the present disclosure. Referring to FIG. 41A, there are the first reference RS associated with CORESET #1 and the first TCI state and the third reference RS associated with CORESET #2 and the second TCI state configured with the first reference RS group index 0 associated with non-SBFD resource, and there are the second reference RS associated with CORESET #1 and the first TCI state and the four reference RS associated with CORESET #2 and second TCI state configured with the first reference RS group index 1 associated with SBFD resource.

FIG. 41B is a schematic diagram that illustrates a resource allocation of CORESET according to an exemplary embodiment of the present disclosure. Referring to FIG. 41B, if the time offset of scheduling DCI by CORESET #1 and the scheduled PDSCH is less than a threshold, UE may assume the QCL assumption used for the CORESET #1 by the first TCI state with the second reference RS in which the first TCI state associated with the second reference RS is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest reference RS ID among the reference RS configured with a reference RS index value associated with SBFD/non-SBFD symbols, respectively.

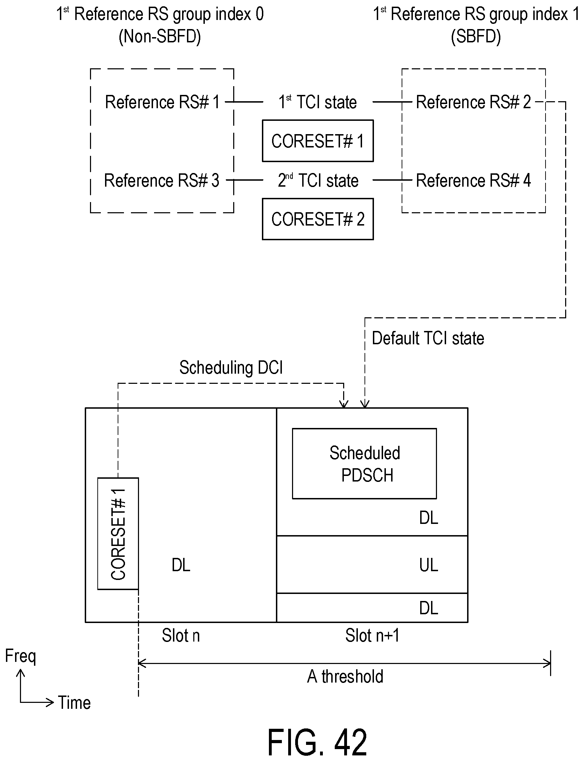

For example, FIG. 42 is a schematic diagram that illustrates selecting reference RS from reference RS pool associated with same resource type as potential PDSCH reception according to an exemplary embodiment of the present disclosure. Referring to FIG. 42, there are the first reference RS associated with CORESET #1 and the first TCI state and the third reference RS associated with CORESET #2 and the second TCI state configured with the first reference RS group index 0 associated with non-SBFD resource, and there are the second reference RS associated with CORESET #1 and the first TCI state and the four reference RS associated with CORESET #2 and second TCI state configured with the first reference RS group index 1 associated with SBFD resource. If the time offset of scheduling DCI by CORESET #1 and the scheduled PDSCH is less than a threshold, UE may assume the QCL assumption used for CORESET #1 by the first TCI state with the second reference RS in which the first TCI state associated with the second reference RS is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the TCI state is activated/indicated with one TCI state, UE may apply the TCI state as the default QCL assumption for PDSCH reception.

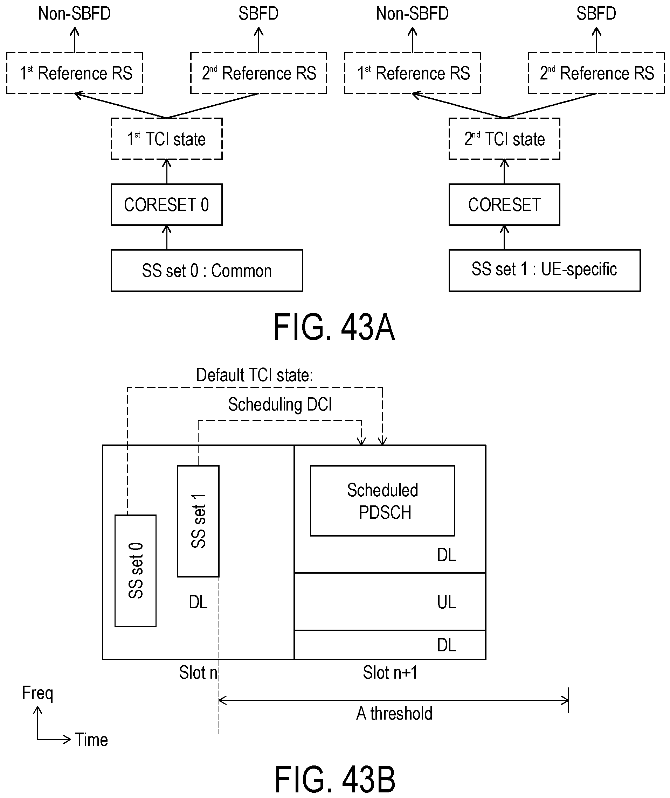

For example, FIG. 43A is a schematic diagram that illustrates a default TCI state determination considering SS set type according to an exemplary embodiment of the present disclosure. Referring to FIG. 43A, the first reference RS configured with the non-SBFD symbols and the second reference RS configured with SBFD symbols are associated with the first TCI state, CORESET 0 and common SS set 0. The first reference RS configured with the non-SBFD symbols and the second reference RS configured with SBFD symbols are associated with the second TCI state, CORESET 1 and UE-specific SS set 1. FIG. 43B is a schematic diagram that illustrates a resource allocation of SS sets according to an exemplary embodiment of the present disclosure. Referring to FIG. 43B, if the time offset of scheduling DCI by SS set 1 and the scheduled PDSCH is less than a threshold, UE may assume the QCL assumption used for the CORESET 0 associated with the common SS set 0 by the first TCI state in which the first TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively.

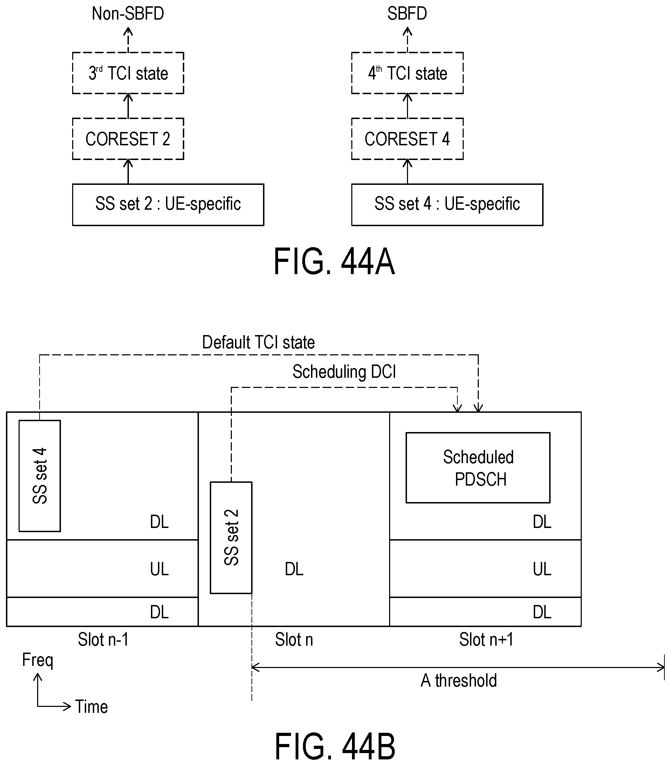

For example, FIG. 44A is a schematic diagram that illustrates a default TCI state determination considering SS set type according to an exemplary embodiment of the present disclosure. Referring to FIG. 44A, the third TCI state associated with UE-specific SS set 2 and the CORESET 2 is configured with non-SBFD resource. The fourth TCI state associated with UE-specific SS set 4 and the CORESET 4 is configured with SBFD resource. FIG. 44B is a schematic diagram that illustrates a resource allocation of SS sets according to an exemplary embodiment of the present disclosure. Referring FIG. 44B, if the time offset of scheduling DCI by SS set 2 and the scheduled PDSCH is less than a threshold, UE may assume the QCL assumption used for the CORESET 4 with the fourth TCI state in the latest slot in which the fourth TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the TCI state of the CORESET is configured with two reference RS, UE may apply the first reference RS as the default QCL assumption for PDSCH reception. In one embodiment, when (if or in the case that) more than one common SS set is in the latest slot, UE may determine the CORESET with highest priority according to the first priority rule, where the first priority rule order may be predefined/fixed/configured in the following descending order:

Type0-PDCCH;
Type0A-PDCCH;
Type1-PDCCH;
Type2-PDCCH;
Type3-PDCCH.

In one embodiment, when (if or in the case that) more than one SS sets have same highest priority according to the first priority rule, UE may determine the CORESET associated with lowest SS set ID among more than one SS sets have same highest priority.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) TCI state of the CORESET is configured with two reference RSs, UE may apply the reference RS associated with non-SBFD as the default QCL assumption for PDSCH reception, where the search space may be a common type.

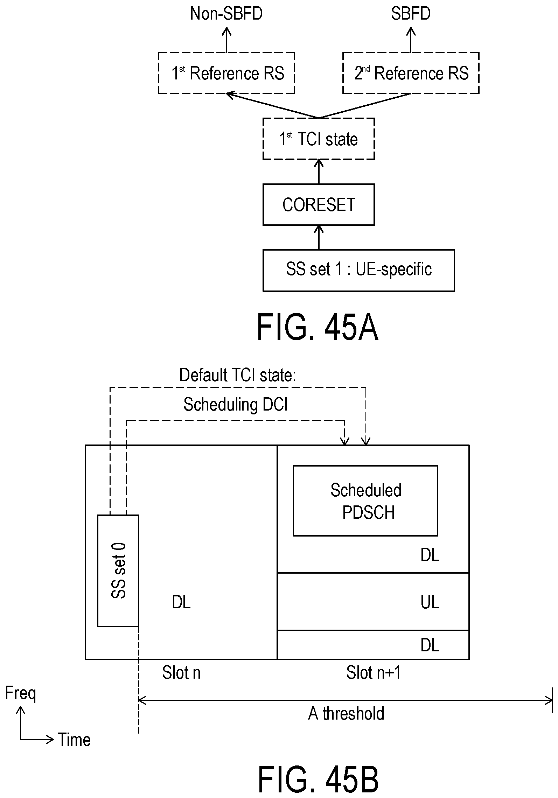

For example, FIG. 45A is a schematic diagram that illustrates a default TCI state determination considering SS set type according to an exemplary embodiment of the present disclosure. Referring to FIG. 45A, the first reference RS associated with the first TCI state and the CORESET is configured with non-SBFD resource. The second reference RS associated with the first TCI state and the CORESET is configured with SBFD resource. FIG. 45B is a schematic diagram that illustrates a resource allocation of an SS set according to an exemplary embodiment of the present disclosure. Referring to FIG. 45B, if the time offset of scheduling DCI by SS set 0 and the scheduled PDSCH is less than a threshold, UE may assume the QCL assumption used for the CORESET by the first TCI state with the first reference RS in the latest slot in which the first TCI state with the first reference RS is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot. In one embodiment, when (if or in the case that) TCI state of the CORESET is configured with two reference RSs, UE may apply the reference RS associated with SBFD/non-SBFD symbols as the default QCL assumption for PDSCH reception, respectively, where the search space may be a UE-specific type.

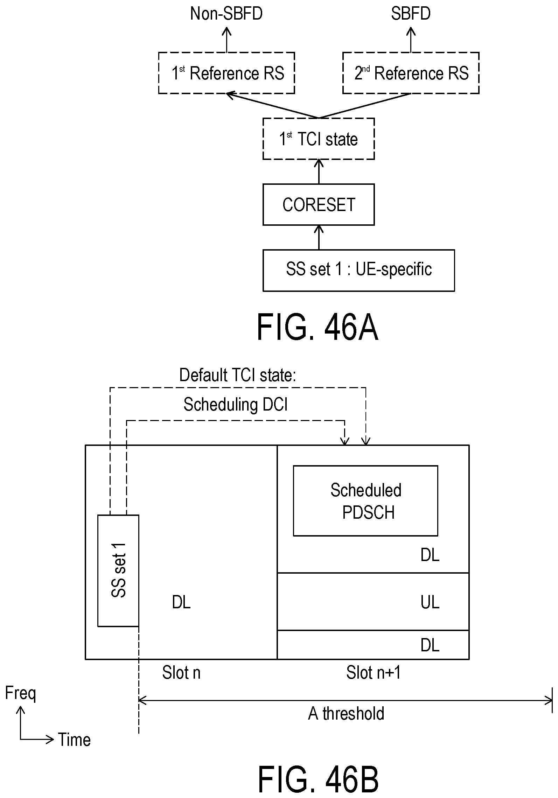

For example, FIG. 46A is a schematic diagram that illustrates a default TCI state determination considering SS set type according to an exemplary embodiment of the present disclosure. Referring to FIG. 46A, the first reference RS associated with the first TCI state, the CORESET, and UE-specific SS set 1 is configured with non-SBFD resource. The second reference RS associated with the first TCI state, the CORESET, and UE-specific SS set 1 is configured with SBFD resource. FIG. 46B is a schematic diagram that illustrates a resource allocation of an SS set according to an exemplary embodiment of the present disclosure. Referring to FIG. 46B, if the time offset of scheduling DCI by SS set 1 and the scheduled PDSCH is less than a threshold, UE may assume the QCL assumption used for the CORESET by the first TCI state with the second reference RS in the latest slot in which the first TCI state with the second reference RS is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively.

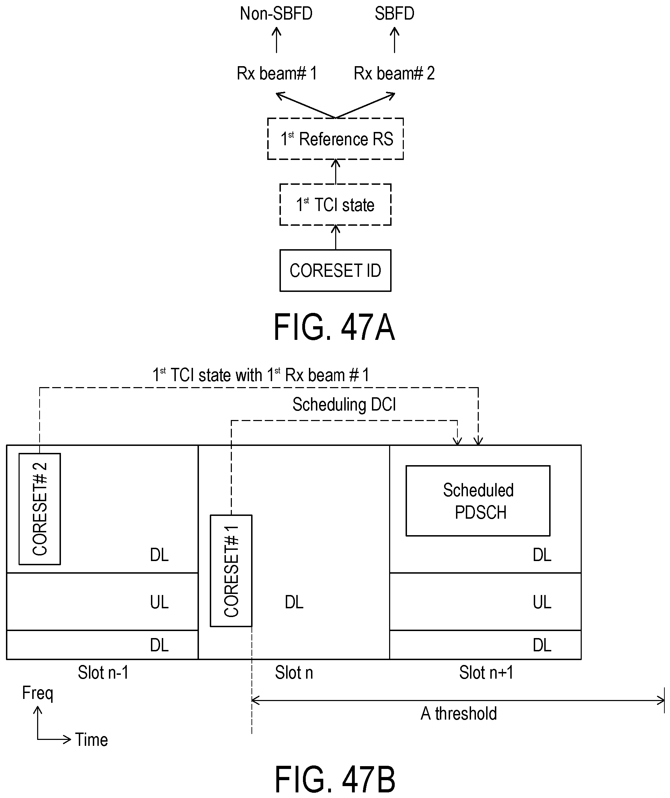

For example, FIG. 47A is a schematic diagram that illustrates a latest slot/symbol associated with same resource type as potential PDSCH reception according to an exemplary embodiment of the present disclosure. Referring to FIG. 47A, Rx beam #1 associated with the first TCI state, the CORESET, and the first reference RS is configured with non-SBFD resource. The Rx beam #2 associated with the first TCI state, the CORESET, and the first reference RS is configured with SBFD resource. FIG. 47B is a schematic diagram that illustrates a resource allocation of CORESETs according to an exemplary embodiment of the present disclosure. Referring to FIG. 47B, if the time offset of scheduling DCI by CORESET#1 and the scheduled PDSCH is less than a threshold, UE may assume the QCL assumption used for the CORESET #2 by the first TCI state with Rx beam #1 in the latest slot in which the first TCI state with Rx beam #1 is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the Rx beam of the QCL assumption is associated with SBFD/non-SBFD symbols, respectively.

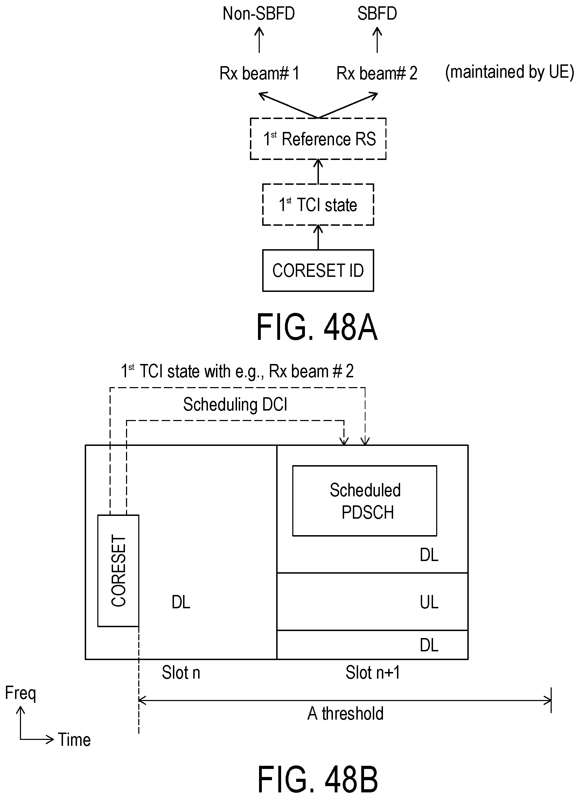

For example, FIG. 48A is a schematic diagram that illustrates a Rx associated with same resource type in the latest slot/symbol as potential PDSCH reception according to an exemplary embodiment of the present disclosure. Referring to FIG. 48A, the Rx beam #1 associated with the first TCI state, the CORESET, and the first reference RS is configured with non-SBFD resource. The Rx beam #2 maintained by UE and associated with the first TCI state, the CORESET, and the first reference RS is configured with SBFD resource. FIG. 48B is a schematic diagram that illustrates a resource allocation of CORESET according to an exemplary embodiment of the present disclosure. Referring to FIG. 48B, if the time offset of scheduling DCI by CORESET and the scheduled PDSCH is less than a threshold, UE may assume the QCL assumption used for the CORESET by the first TCI state with Rx beam #2 in the latest slot in which the first TCI state with Rx beam #2 is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the Rx beam of the QCL assumption is associated with SBFD/non-SBFD symbols, respectively. In one embodiment, when (if or in the case that) reference RS of the TCI state is SSB, UE may not expect the reference RS is received with different Rx beams in non-SBFD and SBFD symbols. In one embodiment, UE may not expect monitoring PDCCH type1 Common SS set is received with different Rx beams in non-SBFD and SBFD symbols.

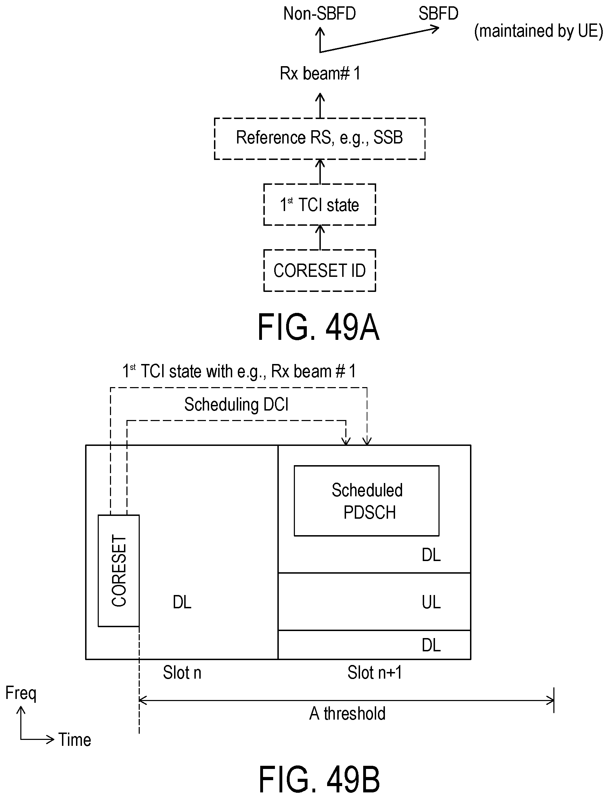

For example, FIG. 49A is a schematic diagram that illustrates a Rx associated with same resource type in the latest slot/symbol as potential PDSCH reception according to an exemplary embodiment of the present disclosure. Referring to FIG. 49A, Rx beam #1 associated with the reference RS, e.g., SSB, the first TCI state, and CORESET is configured with non-SBFD and SBFD symbols. FIG. 49B is a schematic diagram that illustrates a resource allocation of CORESET according to an exemplary embodiment of the present disclosure. Referring to FIG. 49B, if the time offset of scheduling DCI by CORESET and the scheduled PDSCH is less than a threshold, UE may assume the QCL assumption used for the CORESET by the first TCI state with Rx beam #1 in the latest slot in which the first TCI state with Rx beam #1 is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the lowest TCI state ID among the TCI states with a CSI report configuration ID associated with SBFD/non-SBFD symbols, respectively.

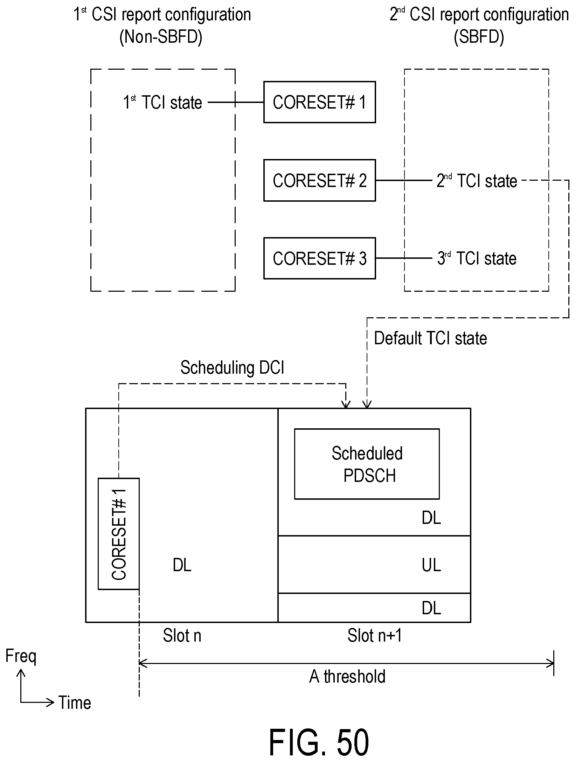

For example, FIG. 50 is a schematic diagram that illustrates selecting Rx from CSI report configuration associated with same resource type in the latest slot/symbol as potential PDSCH reception according to an exemplary embodiment of the present disclosure. Referring to FIG. 50, there is the first TCI state associated with CORESET #1 is configured with the first CSI report configuration associated non-SBFD symbols. There are the second TCI state associated with CORESET #2 and the third TCI state associated with CORESET #3 is configured with the second CSI report configuration associated with SBFD symbols. If the time offset of scheduling DCI by CORESET #1 and the scheduled PDSCH is less than a threshold, UE may assume the QCL assumption used for CORESET #2 by the second TCI state in the latest slot in which the second TCI state is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the TCI state is activated/indicated with one TCI state, UE may apply the TCI state as the default QCL assumption for PDSCH reception.

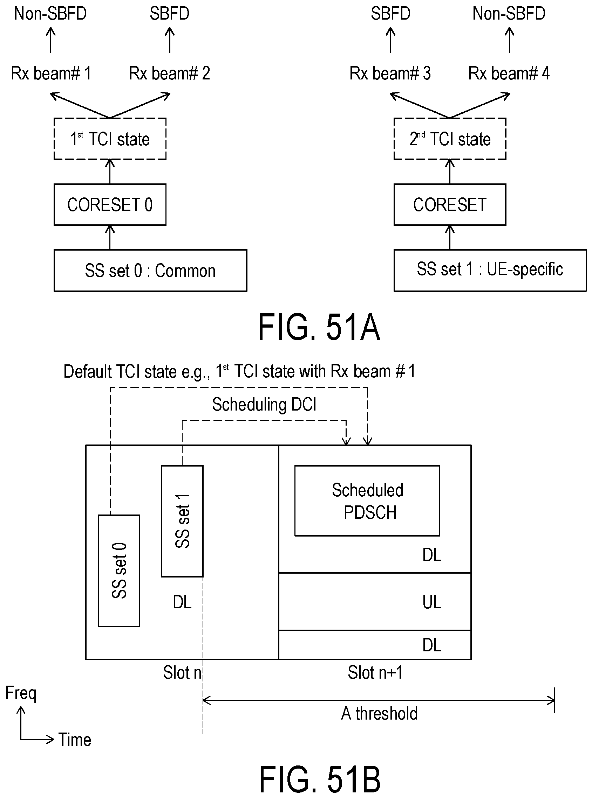

For example, FIG. 51A is a schematic diagram that illustrates a default TCI state determination considering SS set type according to an exemplary embodiment of the present disclosure. Referring to FIG. 51A, Rx beam #1 associated with the first TCI state, the CORESET 0, and the common SS set 0 is configured with non-SBFD resource, and Rx beam #2 associated with the first TCI state, the CORESET 0, and the common SS set 0 is configured with SBFD resource. Rx beam #3 associated with the second TCI state, the CORESET 1, and the UE-specific SS set 1 is configured with non-SBFD resource, and Rx beam #4 associated with the second TCI state, the CORESET 1, and the UE-specific SS set 1 is configured with SBFD resource.

FIG. 51B is a schematic diagram that illustrates a resource allocation of SS sets according to an exemplary embodiment of the present disclosure. Referring to FIG. 51B, if the time offset of scheduling DCI by SS set 1 and the scheduled PDSCH is less than a threshold, UE may assume the QCL assumption used for the CORESET 0 by the first TCI state with Rx beam #1 in the latest slot in which the first TCI state with Rx beam #1 is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID in the latest slot, where the latest slot may be associated with SBFD/non-SBFD symbols, respectively.

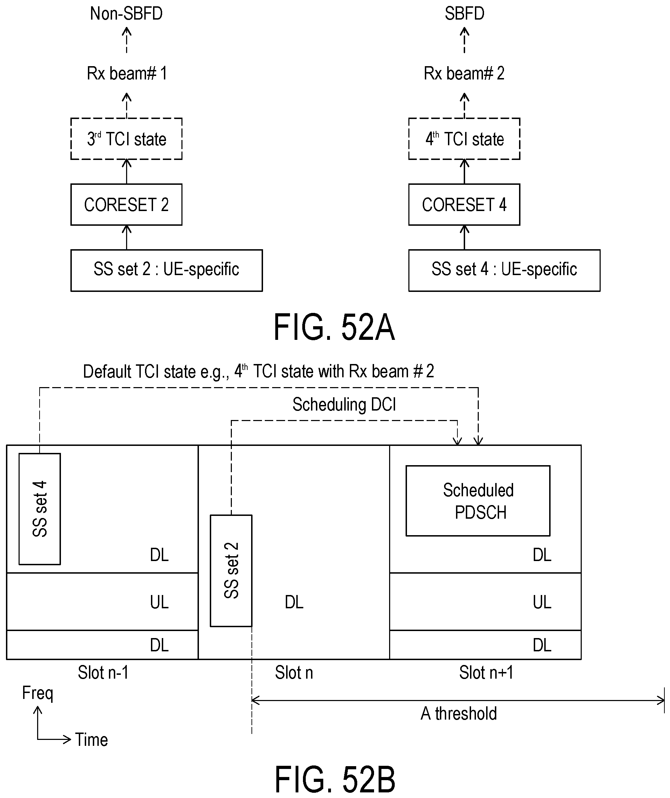

For example, FIG. 52A is a schematic diagram that illustrates a default TCI state determination considering SS set type according to an exemplary embodiment of the present disclosure. Referring to FIG. 52A, Rx beam #1 associated with the first TCI state, the CORESET 0, and the UE-specific SS set 2 is configured with non-SBFD resource, and Rx beam #4 associated with the fourth TCI state, the CORESET 4, and the UE-specific SS set 4 is configured with SBFD resource. FIG. 52B is a schematic diagram that illustrates a resource allocation of SS sets according to an exemplary embodiment of the present disclosure. Referring to FIG. 52B, if the time offset of scheduling DCI by SS set 2 and the scheduled PDSCH is less than a threshold, UE may assume the QCL assumption used for the CORESET 4 by the fourth TCI state with Rx beam #2 in which the fourth TCI state with Rx beam #2 is the default TCI state.

In one embodiment, when (if or in the case that) the time offset of scheduling DCI and the scheduled PDSCH is less than a threshold in which the PDSCH is scheduled in SBFD/non-SBFD symbols, UE may assume the QCL assumption used for the CORESET associated with a monitored search space with the lowest CORESET ID among the CORESET associated with the common type of the SS set in the latest slot. In one embodiment, when (if or in the case that) the TCI state of the CORESET is configured with two reference RS, UE may apply the 1st reference RS as the default QCL assumption for PDSCH reception. In one embodiment, when (if or in the case that) more than one common SS sets are in the latest slot, UE may determine the CORESET with highest priority according to a first priority rule, where the first priority rule order may be predefined/fixed/configured in the following descending order:

Type0-PDCCH;
Type0A-PDCCH;
Type1-PDCCH;
Type2-PDCCH;
Type3-PDCCH.

In one embodiment, when (if or in the case that) more than one SS sets have same highest priority according to the first priority rule, UE may determine the CORESET associated with lowest SS set ID among more than one SS sets have same highest priority.

In one embodiment, a time offset of the DL information and a scheduled PDSCH is larger than a threshold, and a TCI field is absent in the DL information. In one embodiment, UE may assume the first TCI state or a QCL assumption for the PDSCH is identical to a TCI state or a QCL assumption applied for CORESET used for a channel related to the DL information.

In one embodiment, when (if or in the case that) the time offset of scheduling DCI and the scheduled PDSCH is less than a threshold in which the PDSCH is scheduled in SBFD/non-SBFD symbols, (option 1) UE may assume the QCL assumption used for the PDSCH is identical to the TCI state or QCL assumption whichever is applied for the CORESET used for the PDCCH transmission.

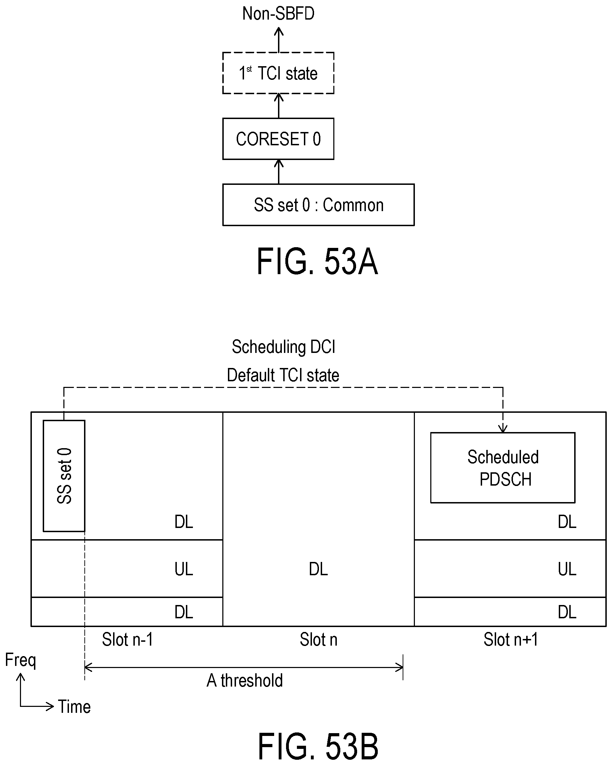

For example, FIG. 53A is a schematic diagram that illustrates a default TCI state determination under scheduling offset larger than a threshold according to an exemplary embodiment of the present disclosure. Referring to FIG. 53A, the first TCI state associated with common SS set 0 and the CORESET 0 is configured with non-SBFD resource. FIG. 53B is a schematic diagram that illustrates a resource allocation of an SS set according to an exemplary embodiment of the present disclosure. Referring to FIG. 53B, if the time offset of scheduling DCI by SS set 0 and the scheduled PDSCH is less than a threshold, UE may assume the QCL assumption used for the CORESET 0 by the first TCI state in which the first TCI state is the default TCI state.

In one embodiment, UE may assume the first TCI state or a QCL assumption for the PDSCH is identical to a TCI state or a QCL assumption applied for CORESET used for a channel related to the DL information. In one embodiment, in a case that (when or if) the first TCI state is configured with two TCI states, UE may apply one of the two TCI states associated with a same resource type of a slot for receiving the PDSCH. In one embodiment, in a case that (when or if) in a case that the first TCI state is configured with two reference reference signals (RSs), UE may apply one of the two reference RSs associated with the same resource type of a slot for receiving the PDSCH.

In one embodiment, when (if or in the case that) the time offset of scheduling DCI and the scheduled PDSCH is less than a threshold in which the PDSCH is scheduled in SBFD/non-SBFD symbols;

when (if or in the case that) the CORESET is configured with two TCI states, UE may apply the TCI state associated with SBFD/non-SBFD respectively as the default QCL assumption for PDSCH reception;
when (if or in the case that) the TCI state is configured with two reference RSs, UE may apply the reference RS associated with SBFD/non-SBFD respectively as the default QCL assumption for PDSCH reception;

when (if or in the case that) the reference RS is associated with two Rx beams, UE may apply the Rx beam associated with SBFD/non-SBFD respectively as the default QCL assumption for PDSCH reception.

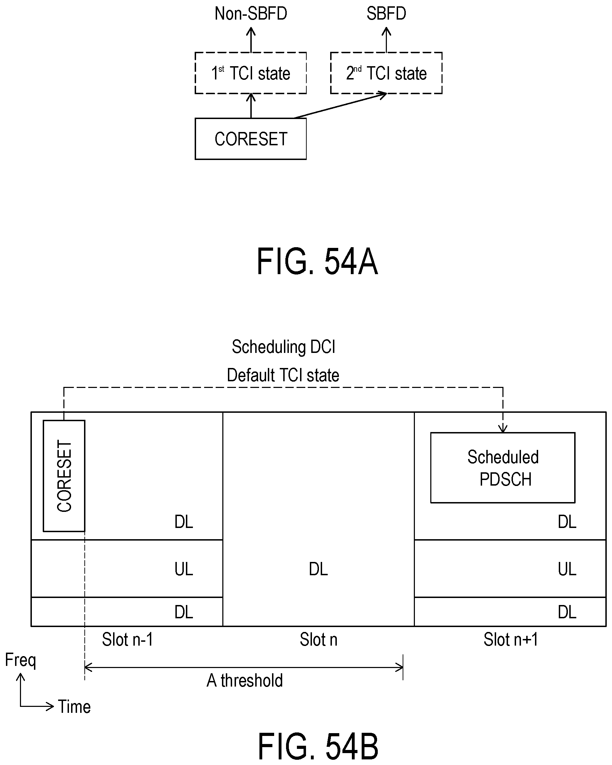

For example, FIG. 54A is a schematic diagram that illustrates a default TCI state determination under scheduling offset larger than a threshold according to an exemplary embodiment of the present disclosure. Referring to FIG. 54A, the first TCI state associated with CORESET is configured with non-SBFD resource, and the second TCI state associated with CORESET is configured with SBFD resource. FIG. 54B is a schematic diagram that illustrates a resource allocation of an SS set according to an exemplary embodiment of the present disclosure. Referring to FIG. 54B, if the time offset of scheduling DCI by CORESET and the scheduled PDSCH is less than a threshold, UE may assume the QCL assumption used for the CORESET by the second TCI state in which the second TCI state is the default TCI state.

In one embodiment, UE may not expect the DL information and the PDSCH are received in different resource types.

In one embodiment, when (if or in the case that) the time offset of scheduling DCI and the scheduled PDSCH is less than a threshold in which the PDSCH is scheduled in SBFD/non-SBFD symbols, (option 2) UE may not expect the scheduling PDCCH and scheduled PDSCH in different non-SBFD symbols and SBFD symbols.

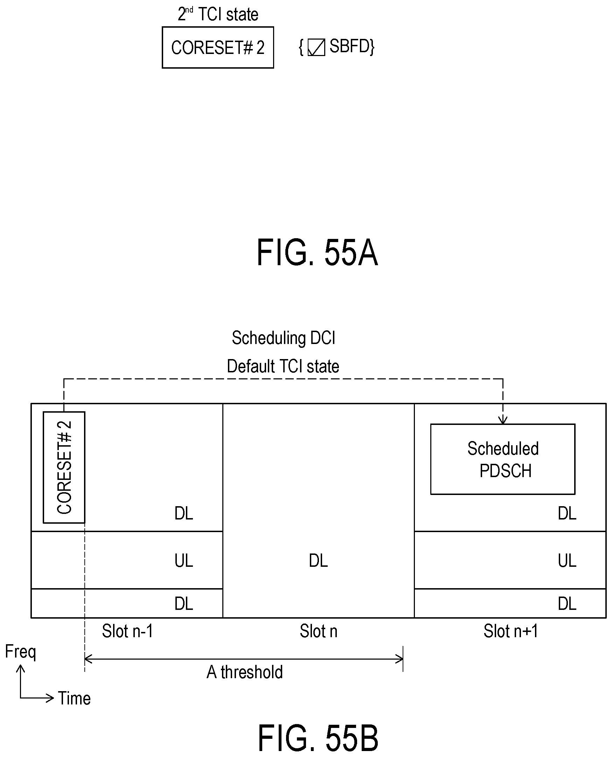

For example, FIG. 55A is a schematic diagram that illustrates a default TCI state determination under scheduling offset larger than a threshold according to an exemplary embodiment of the present disclosure. Referring to FIG. 55A, the second TCI state associated with CORESET #2 is configured with SBFD resource. FIG. 55B is a schematic diagram that illustrates a resource allocation of CORESET according to an exemplary embodiment of the present disclosure. Referring to FIG. 55B, if the time offset of scheduling DCI by CORESET #2 and the scheduled PDSCH is less than a threshold, UE may assume the QCL assumption used for CORESET 2 by the default TCI state.

In one embodiment, UE may obtain a QCL assumption for the PDSCH from the first TCI state indicated by a lowest codepoint of a TCI field applicable to the PDSCH in an active bandwidth part (BWP) of a scheduled cell. The lowest codepoint of the TCI field may be predefined/fixed/configured.

In one embodiment, UE may assume the QCL assumption used for the scheduled PDSCH from the TCI state indicated by the lowest/ predefined/fixed/configured codepoint of TCI field applicable to PDSCH in the active BWP of the scheduled cell. In one embodiment, when (if or in the case that) the time offset between the scheduled PDSCH and CORESET associated with a monitored search space with the lowest CORESET Id in the latest slot associated with SBFD symbols is larger than a predefined/fixed/configured value, where the lowest/predefined/fixed/configured codepoint of TCI field among the codepoints associated with SBFD symbols.

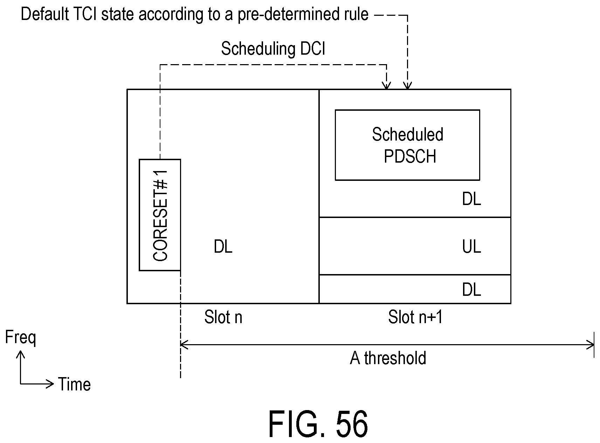

For example, FIG. 56 is a schematic diagram that illustrates a resource allocation of CORESET for a pre-determined default TCI state according to an exemplary embodiment of the present disclosure. Referring to FIG. 56, if the time offset of scheduling DCI by CORESET #1 and the scheduled PDSCH is less than a threshold, UE may assume the QCL assumption used for CORESET #1 by the default TCI state according to a pre-determined rule.

In one embodiment, the TCI field is associated with a same resource type of a slot for receiving the PDSCH.

In one embodiment, the first TCI state is associated with separate parameters for sub-band full duplex (SBFD) symbols and non-SBFD symbols. In one embodiment, the first TCI state is a unified TCI.

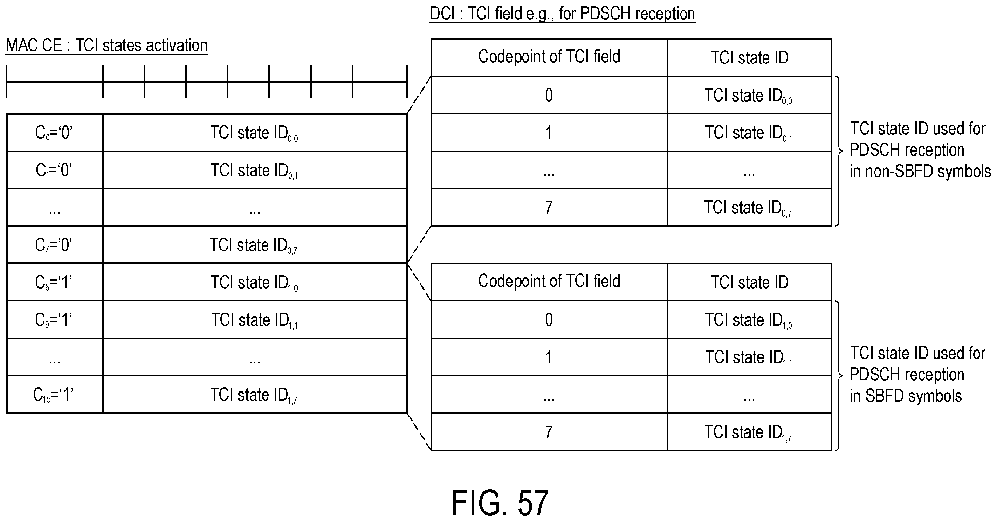

FIG. 57 is a schematic diagram that illustrates fields for indicating TCI states according to an exemplary embodiment of the present disclosure. Referring to FIG. 57, in TCI state activation of MAC CE, the field $C_i$ may indicate TCI state grouping index. In TCI field of DCI, the field of TCI state $ID_i$ may indicate the TCI state identified by TCI-State ID. A activated TCI may be associated with at least one of following { SBFD-symbol, non-SBFD-symbol(none) }.

If the field $C_i$ is set to "0", i-th TCI state ID may be associated with non-SBFD-symbol, or the i-th TCI state ID used for PDSCH reception in non-SBFD-symbol. If the field $C_i$ is set to "1", i-th TCI state ID may be associated with SBFD-symbol, or the i-th TCI state ID used for PDSCH reception in SBFD-symbol. For example, the fields $C_0$ to field $C_7$ are set to "0", indicating TCI state $ID_{0,0}$ to TCI state $ID_{0,0}$ are associated with non-SBFD-symbol, respectively. The fields $C_8$ to field $C_{15}$ are set to " 1", indicating TCI state $ID_{1,0}$ to TCI state $ID_{1,7}$ are associated with SBFD-symbol, respectively. If the codepoint of TCI field associated with non-SBFD-symbols is "0" for example, the TCI state ID indicates TCI state $ID_{0,0}$. If the codepoint of TCI field associated with SBFD-symbols is "7" for example, the TCI state ID indicates TCI state $ID_{1,7}$.

In one embodiment, UE may obtain its QCL assumption for the scheduled PDSCH from the TCI state indicated by the lowest/ predefined/fixed/configured codepoint of TCI field applicable to PDSCH in the active BWP of the scheduled cell. In one embodiment, when (if or in the case that) the time offset between the scheduled PDSCH and CORESET associated with a monitored search space with the lowest CORESET ID in the latest slot associated with SBFD symbols is larger than a predefined/fixed/configured value, where the lowest/predefined/fixed/configured codepoint of TCI field among the codepoints associated with SBFD symbols.

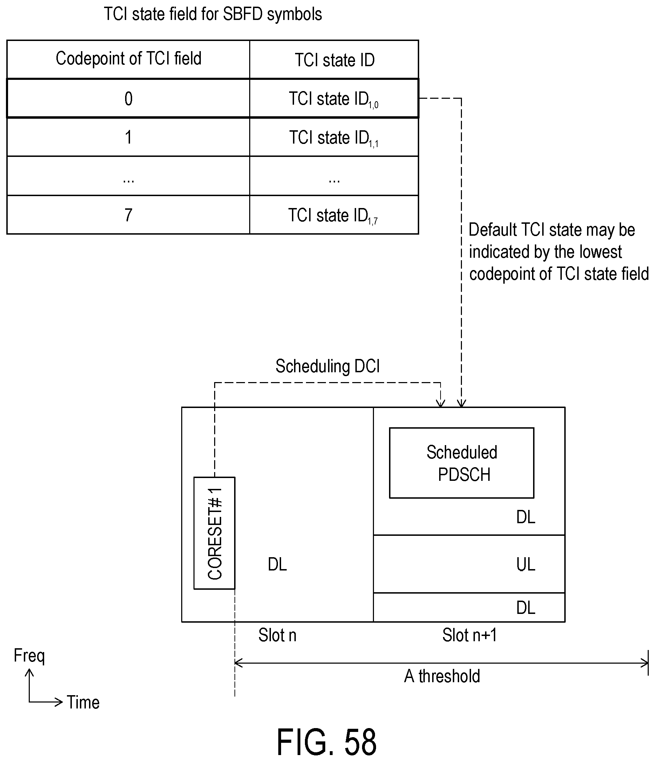

For example, FIG. 58 is a schematic diagram that illustrates a resource allocation of CORESET for a pre-determined default TCI state according to an exemplary embodiment of the present disclosure. Referring to FIG. 58, if the time offset of scheduling DCI by CORESET #1 and the scheduled PDSCH is less than a threshold, UE may assume the QCL assumption used for the CORESET #1 by, e.g., TCI state $ID_{1,0}$, in which the default TCI state may be indicated by the lowest codepoint of TCI state field.

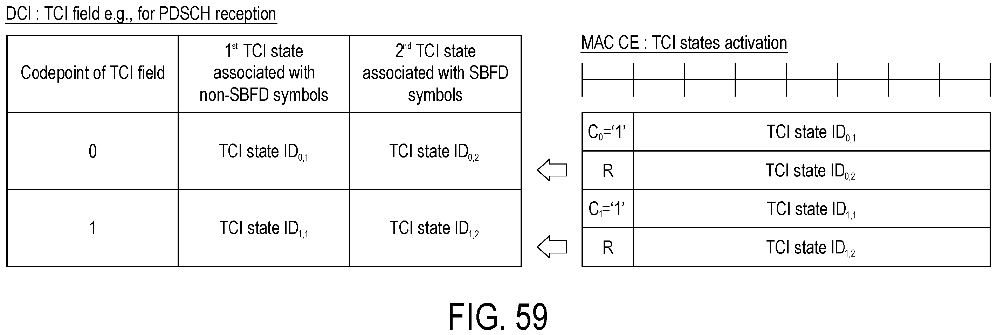

FIG. 59 is a schematic diagram that illustrates fields for indicating TCI states according to an exemplary embodiment of the present disclosure. Referring to FIG. 59, in TCI state activation of MAC CE, the field $C_i$ may indicate whether the octet containing TCI state $ID_{i,2}$ is present. If this field is set to "1", the octet containing TCI state $ID_{i,2}$ may be present. If this field is set to "0", the octet containing TCI state $ID_{i,2}$ may not be present. The field of TCI state $ID_{i,j}$ may indicate the TCI state identified by TCI-State ID, where i may be the index of the codepoint of the DCI TCI field and TCI state $ID_{i,j}$ may denote the $j$th TCI state indicated for the $i$th codepoint in the DCI TCI field. "R" is a Reserved bit, and may be set to 0.

For example, the field $C_0$ is set to "1", and the octet containing TCI state $ID_{0,2}$ is present. If the codepoint of the TCI field in DCI is "0", the first TCI state associated with non-SBFD symbols is TCI state $ID_{0,1}$, and the second TCI state associated with SBFD symbols is TCI state $ID_{0,2}$. If the codepoint of the TCI field in DCI is "1", the first TCI state associated with non-SBFD symbols is TCI state $ID_{1,1}$, and the second TCI state associated with SBFD symbols is TCI state $ID_{1,2}$.

In one embodiment, in a case that (when or if) the lowest codepoint of the TCI field is associated with two activated TCI states, applying the first TCI state associated with a same resource type of a slot for receiving the PDSCH.

In one embodiment, UE may obtain its QCL assumption for the scheduled PDSCH from the TCI state indicated by the lowest codepoint of TCI field applicable to PDSCH in the active BWP of the scheduled cell. In one embodiment, when (if or in the case that) the time offset between the scheduled PDSCH and CORESET associated with a monitored search space with the lowest CORESET Id in the latest slot associated with SBFD symbols is larger than a predefined/fixed/configured value, where the lowest codepoint of TCI field among the codepoints associated with SBFD symbols. In one embodiment, when (if or in the case that) the lowest codepoint of TCI field is associated with two activated TCI states, UE may apply the lowest TCI state ID and/ or apply the TCI state associated with SBFD symbols.

In one embodiment, UE may may be configured at least one TCI state for SPS-PDSCH reception, e.g., a first TCI state and a second TCI state, where the first TCI state may be configured/associated with non-SBFD resource, and/ or the second TCI state may be configured/associated with SBFD resource. In one embodiment, when (if or in the case that) SPS-PDSCH in non-SBFD resource, UE may receive SPS-PDSCH by the first TCI state. In one embodiment, when (if or in the case that) SPS-PDSCH in SBFD resource, UE may receive SPS-PDSCH by the second TCI state.

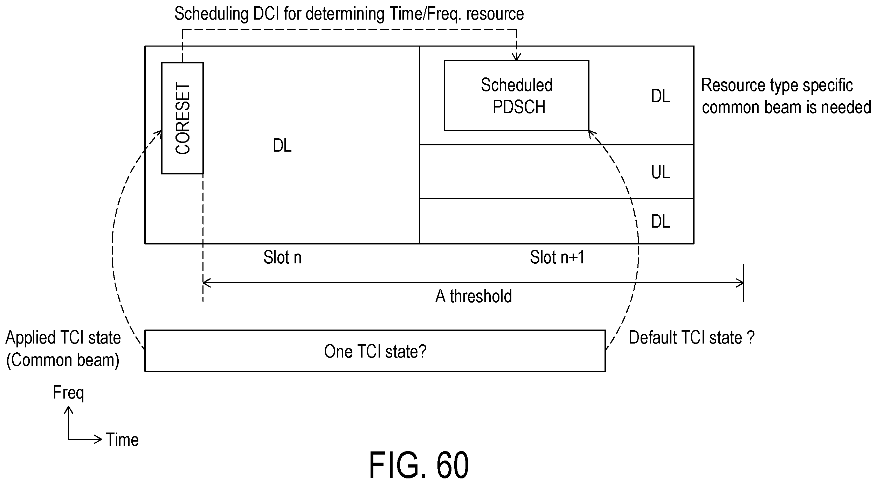

FIG.60 is a schematic diagram that illustrates inappropriate TCI state according to an exemplary embodiment of the present disclosure. Referring to FIG. 60, there may be performance loss of scheduled PDSCH with inappropriate default TCI state (Common TCI state). There may be no monitor occasions (Mos) in the slot of the scheduled PDSCH, where the scheduled PDSCH is in SBFD symbols (or non-SBFD symbols, respectively). A monitored SS with the lowest CORESET ID in the latest slot is non-SBFD symbols (or SBFD symbols, respectively). Therefore, resource type specific common beam is needed.

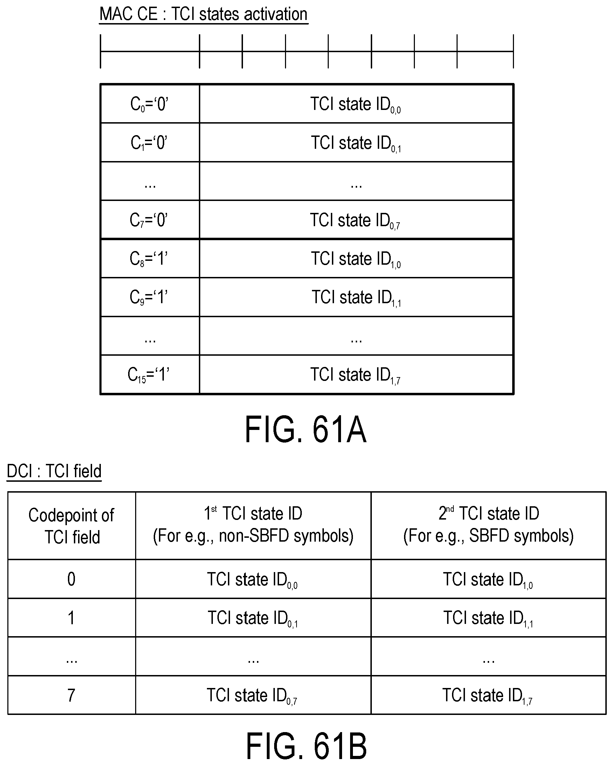

FIG. 61A is a schematic diagram that illustrates fields of medium access control (MAC) control element (CE) for indicating TCI states according to an exemplary embodiment of the present disclosure. Referring to FIG. 61A, in TCI state activation of MAC CE, the field $C_i$ may indicate TCI state grouping index. In the TCI field of DCI, the field of TCI state $ID_i$ may indicate the TCI state identified by TCI-State ID. An activated TCI may be associated with at least one of the following { SBFD-symbol, non-SBFD-symbol(none) }.

If the field $C_i$ is set to "0", i-th TCI state ID may be associated with non-SBFD-symbol, or the i-th TCI state ID used for PDSCH reception in non-SBFD-symbol. If the field $C_i$ is set to "1", i-th TCI state ID may be associated with SBFD-symbol, or the i-th TCI state ID used for PDSCH reception in SBFD-symbol. For example, the fields $C_0$ to field $C_7$ are set to "0", indicating TCI state $ID_{0,0}$ to TCI state $ID_{0,0}$ are associated with non-SBFD-symbol, respectively. The fields $C_8$ to field $C_{15}$ are set to "1", indicating TCI state $ID_{1,0}$ to TCI state $ID_{1,7}$ are associated with SBFD-symbol, respectively. FIG. 61B is a schematic diagram that illustrates TCI field of a downlink control information (DCI) according to an exemplary embodiment of the present disclosure. Referring to FIG. 61B, if the codepoint of TCI field is "0" for example, the first TCI state associated with non-SBFD symbols is TCI state $ID_{0,0}$, and the second TCI state associated with SBFD symbols is TCI state $ID_{1,0}$. If the codepoint of TCI field is "7" for example, the first TCI state associated with non-SBFD symbols is TCI state $ID_{0,7}$, and the second TCI state associated with SBFD symbols is TCI state $ID_{1,7}$.

In one embodiment, when (if or in the case that) UE would transmit the last symbol of a PUCCH with HARQ-ACK information corresponding to the DCI carrying the *TCI-State* indication and without DL assignment, or corresponding to the PDSCH scheduling by the DCI carrying the *TCI -State* indication, and when (if or in the case that) the *indicated TCI-State* is different from the previously indicated one, the indicated *TCI-State* with *TCI-State ID* may be applied starting from the first slot that may be at least symbols (e.g., a time for beam application) after the last symbol of the PUCCH.

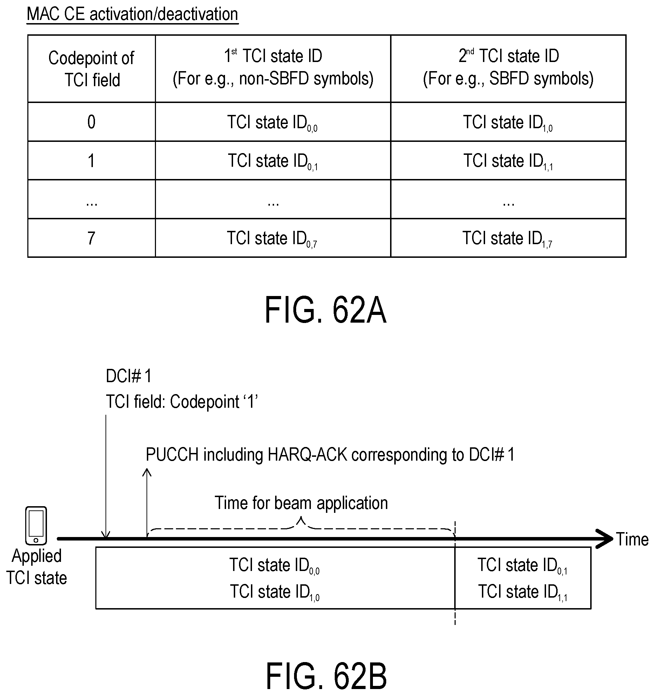

For example, FIG. 62A is a schematic diagram that illustrates fields of MAC CE for indicating TCI states according to an exemplary embodiment of the present disclosure. Referring to FIG. 62A, if the codepoint of TCI field is "1" for example, the first TCI state associated with non-SBFD symbols is TCI state $ID_{0,1}$, and the second TCI state associated with SBFD symbols is TCI state $ID_{1,1}$. FIG. 62B is a timing diagram that illustrates common beam activation for duplex operation according to an exemplary embodiment of the present disclosure. Referring to FIG. 62B, if the codepoint of the TCI field of DCI#1 is "1", TCI state $ID_{0,1}$ associated with non-SBFD symbols and TCI state $ID_{1,1}$ associated with SBFD symbols would be applied after the beam application using TCI state $ID_{0,0}$ and TCI state $ID_{1,0}$.

In one embodiment, when (if or in the case that) the offset between the reception of the DL DCI and the corresponding PDSCH is less than a threshold:

when (if or in the case that) indicated TCI states is associated with the PCI of the serving cell, the indicated TCI state associated with SBFD symbols (or non-SBFD symbols, respectively) may be applied to PDSCH reception on the SBFD symbols (or non-SBFD symbols, respectively).

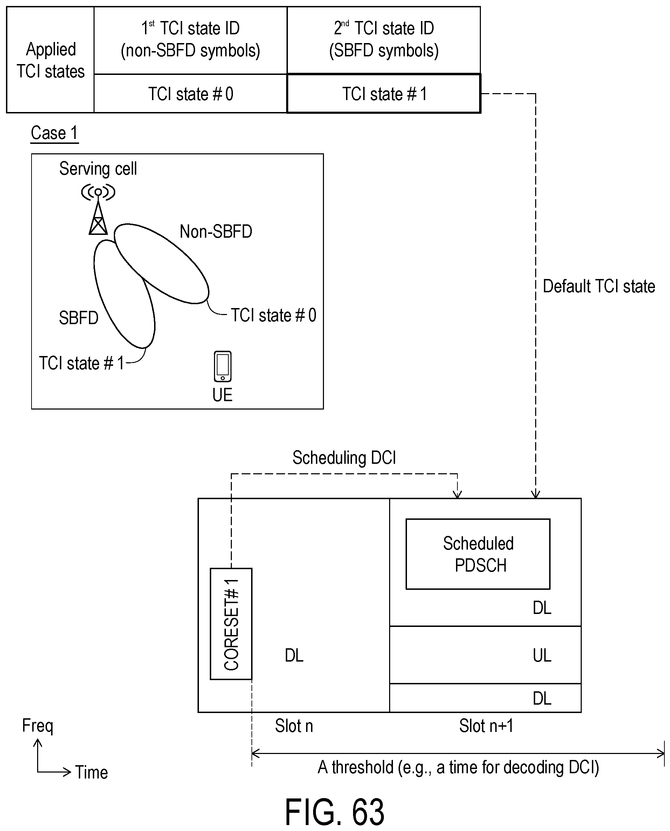

For example, FIG. 63 is a schematic diagram that illustrates selecting TCI state associated with same resource type according to an exemplary embodiment of the present disclosure. Referring to FIG. 63, TCI state #0 associated with the PCI of the serving cell is associated with non-SBFD symbols, and TCI state #1 with the PCI of the same serving cell is associated with SBFD symbols. If the time offset of scheduling DCI and the scheduled PDSCH is less than a threshold, UE may apply the TCI state #1 associated with SBFD symbols to PDSCH reception on the SBFD symbols.

In one embodiment, when (if or in the case that) SPS-PDSCH in non-SBFD resource, UE may receive SPS-PDSCH by the applied TCI state associated with non-SBFD resource. In one embodiment, when (if or in the case that) SPS-PDSCH in SBFD resource, UE may receive SPS-PDSCH by the applied TCI state associated with SBFD resource.

In one embodiment, when (if or in the case that) the offset between the reception of the DL DCI and the corresponding PDSCH is less than a threshold:

when (if or in the case that) an indicated TCI state is associated with a PCI different from the serving cell and the indicated TCI state is associated with SBFD symbols,
the indicated TCI state associated with non-SBFD symbols may be applied to PDSCH reception on the non-SBFD symbols; and/ or
UE may not expect PDSCH is scheduled in the SBFD symbols.

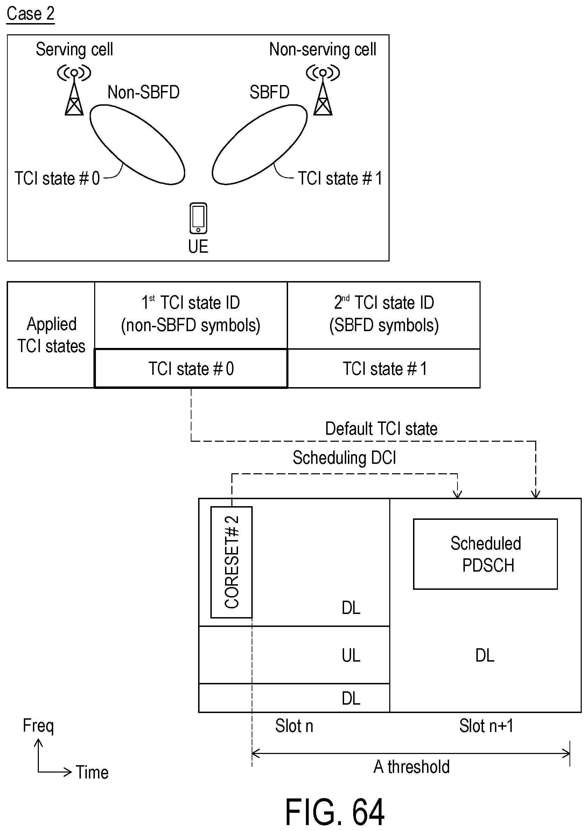

For example, FIG. 64 is a schematic diagram that illustrates selecting TCI state associated with same resource type according to an exemplary embodiment of the present disclosure. Referring FIG. 64, TCI state #0 associated with the serving cell is associated with non-SBFD symbols, and TCI state #1 associated with the non-serving cell is associated with SBFD symbols. If the time offset of scheduling DCI and the scheduled PDSCH is less than a threshold, UE may apply the TCI state #0 associated with non-SBFD symbols to PDSCH reception on the non-SBFD symbols and not expect PDSCH is scheduled in the SBFD symbols.

In one embodiment, when (if or in the case that) the offset between the reception of the DL DCI and the corresponding PDSCH is less than a threshold:

when (if or in the case that) an indicated TCI state is associated with a PCI different from the serving cell and the indicated TCI state is associated with SBFD symbols,
the indicated TCI state associated with non-SBFD symbols may be applied to PDSCH reception on the non-SBFD symbols; and/ or
UE may not expect PDSCH to be scheduled in the SBFD symbols.

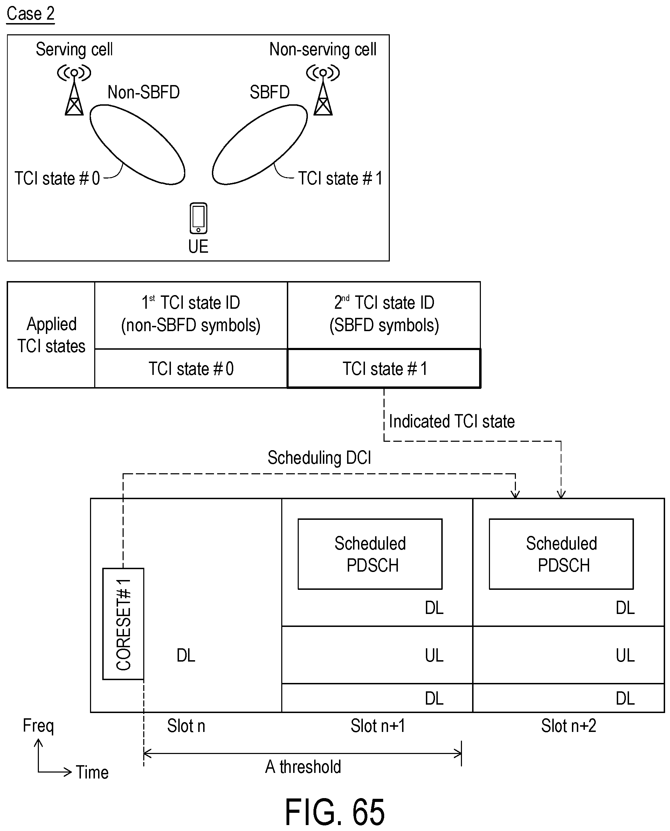

For example, FIG. 65 is a schematic diagram that illustrates selecting TCI state associated with same resource type according to an exemplary embodiment of the present disclosure. Referring FIG. 65, TCI state #0 with the serving cell is associated with non-SBFD symbols, and TCI state #1 with the non-serving cell is associated with SBFD symbols. If the time offset of scheduling DCI and the scheduled PDSCH is less than a threshold, UE may apply the TCI state #1 associated with SBFD symbols to PDSCH reception on the SBFD symbols and not expect PDSCH is scheduled in the non-SBFD symbols.

In one embodiment, when (if or in the case that) the offset between the reception of the DL DCI and the corresponding PDSCH is less than a threshold:

when (if or in the case that) an indicated TCI state is associated with a PCI different from the serving cell and the indicated TCI state is associated with SBFD symbols,
the indicated TCI state associated with SBFD symbols (or non-SBFD symbols, respectively) may be applied to PDSCH reception on the SBFD symbols (or non-SBFD symbols, respectively).

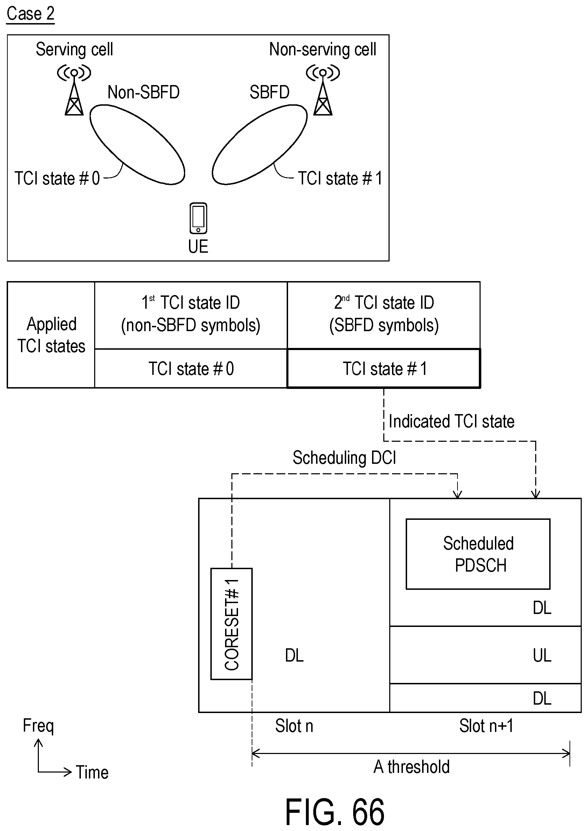

For example, FIG. 66 is a schematic diagram that illustrates selecting TCI state associated with same resource type according to an exemplary embodiment of the present disclosure. Referring to FIG. 66, TCI state #0 with the serving cell is associated with non-SBFD symbols, and TCI state #1 with the non-serving cell is associated with SBFD symbols. If the time offset of scheduling DCI and the scheduled PDSCH is less than a threshold, UE may apply the TCI state #1 associated with SBFD symbols to PDSCH reception on the SBFD symbols.

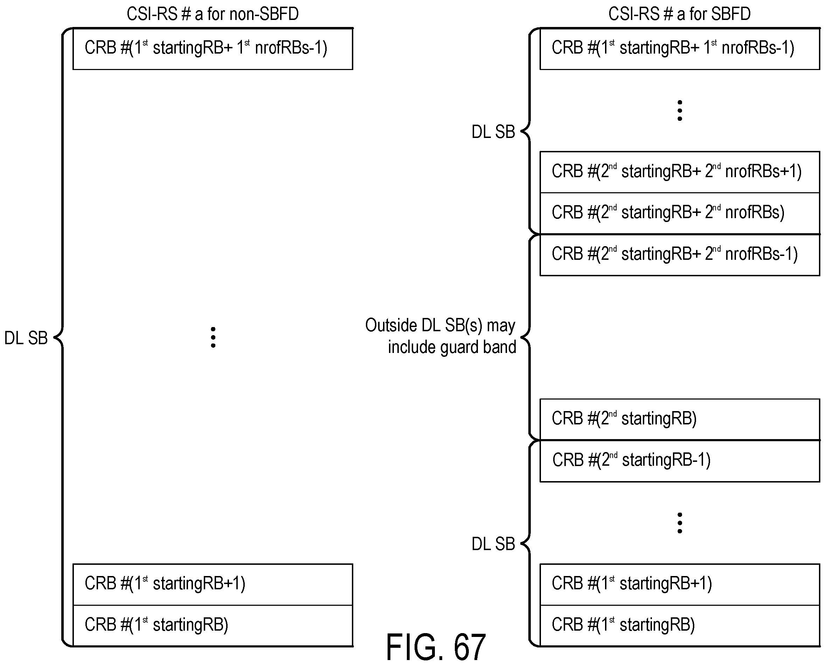

FIG. 67 is a schematic diagram that illustrates per CSI-RS resource configuration for SBFD symbol according to an exemplary embodiment of the present disclosure. Referring to FIG. 67, there may be two additional parameters within a CSI-RS resource configuration. The two additionsal parameters are "2nd startingRB" and "2nd nrofRBs", where "startingRB" is the resource block (RB) where this CSI resource starts in relation to common resource block #0, and "nrofRBs" is the number of resource blocks (RBs) across which this CSI resource spans.

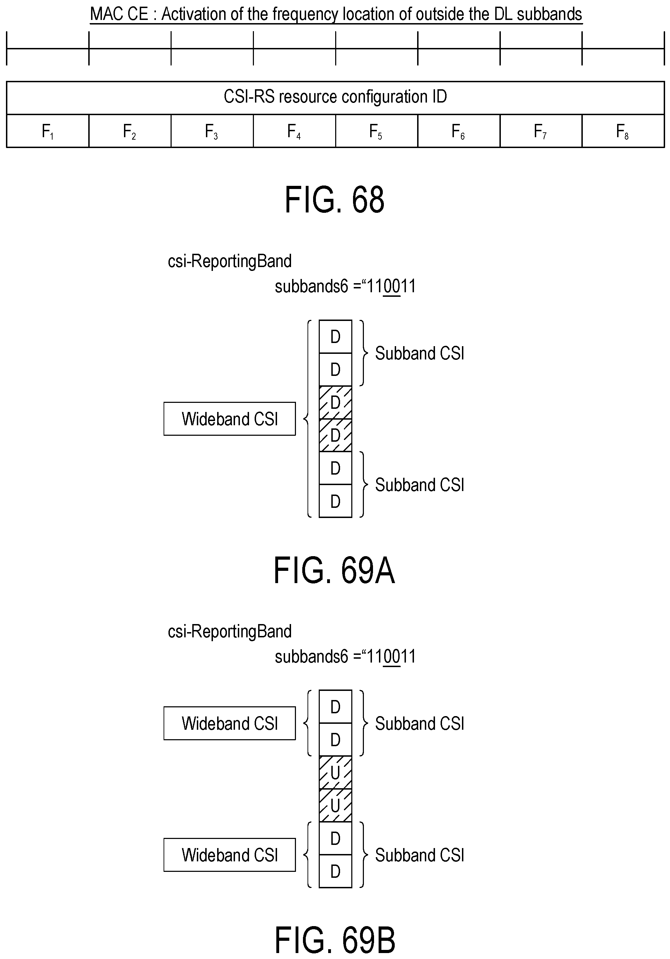

In one embodiment, UE may be configured with at least one frequency location of outside the DL subbands, e.g., $\{m^{th}\ N_{Outside}^{start},\ m^{th}\ N_{Outside}^{size}\}$ , where m=1, 2, ..., M. Frequency location of outside the DL subbands may be updated/activated by MAC CE (or RRC, DCI). FIG. 68 is a schematic diagram that illustrates per CSI-RS resource configuration in MAC CE according to an exemplary embodiment of the present disclosure. Referring to FIG. 68, the field "Fm" may indicate the activation/deactivation status of the $m^{th}$ frequency location of outside the DL subbands. The field of CSI-RS resource configuration ID may indicate that mapping between the activated frequency location of outside the DL subbands and CSI-RS resource. In one embodiment, when (if or in the case that) the filed of CSI-RS resource configuration ID is set all '1', the activation/deactivation status the $m^{th}$ frequency location of outside the DL subbands may apply to all CSI-RS resource. Note that maxNrofCSI-ResourceConfigurations =112.

In one embodiment, UE may be configured with the higher layer parameter "Frequency Restriction For Channel Measurements". In one embodiment, when (if or in the case that) the higher layer parameter "Frequency Restriction For Channel Measurements" is set to "Configured", the UE may derive the channel measurements of the wideband CSI based on the subband indicated by csi-ReportingBand. In one embodiment, when (if or in the case that) the higher layer parameter "Frequency Restriction For Channel Measurements" is set to "notConfigured", the UE shall derive the wideband CSI according to the freqband.

For example, FIG. 69A is a schematic diagram that illustrates frequency domain measurement restriction according to an exemplary embodiment of the present disclosure. Referring to FIG. 69A, the UE derives the wideband CSI according to the freqband. In csi-ReportingBand "110011", "0" corresponds to the wideband CSI.

FIG. 69B is a schematic diagram that illustrates frequency domain measurement restriction according to an exemplary embodiment of the present disclosure. Referring to FIG. 69A, UE derives the channel measurements of the wideband CSI based on the subband indicated by csi-ReportingBand "110011", where "1" corresponds to the wideband CSI.

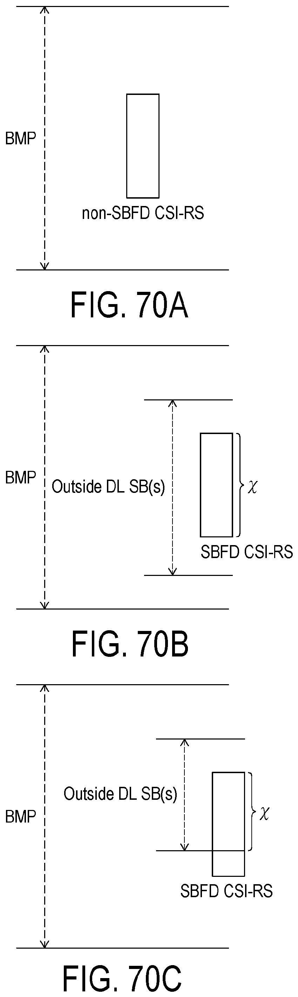

FIG. 70A to FIG. 70C are schematic diagrams that illustrate frequency rotation of SBFD CSI-RS according to an exemplary embodiment of the present disclosure. Referring to FIG. 70A, CSI-RS for L1-RSRP/L1-SINR/BFD may not be transmitted in all BWP. Referring to FIG. 70B, there may be no CSI-RS for L1-RSRP/L1-SINR/BFD in SBFD symbols. Referring to FIG. 70C, there may be only few RBs of CSI-RS for L1-RSRP/L1-SINR/BFD in SBFD symbols.

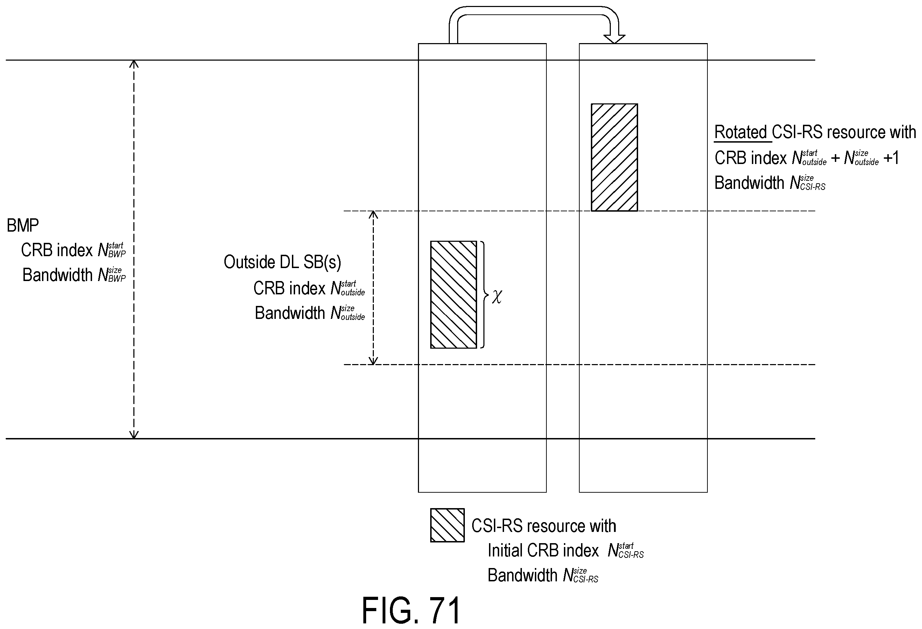

FIG. 71 is a schematic diagram that illustrates frequency rotation of SBFD CSI-RS according to an exemplary embodiment of the present disclosure. Referring to FIG. 71, there is a case when (if or in the case that) frequency allocation of CSI-RS is fully/partially overlapping with outside DL SB(s), and/or $N_{BWP}^{size} - N_{outside}^{size} \geq N_{CSI-RS}^{size}$ . $N_{BWP}^{start}$ is CRB index of BWP. $N_{BWP}^{size}$ is the bandwidth of BWP. The CSI-RS resource configured with initial CRB index " $N_{CSI-RS}^{start}$ " and bandwidth " $N_{CSI-RS}^{size}$ ". $N_{outside}^{start}$ is CRB index of subband outside DL SB(s). $N_{outside}^{size}$ is the bandwidth of subband outside DL SB(s). Rotated CSI-RS resource is configured with CRB index " $N_{outside}^{start} + N_{outside}^{size} +1$ " and bandwidth " $N_{CSI-RS}^{size}$ ".

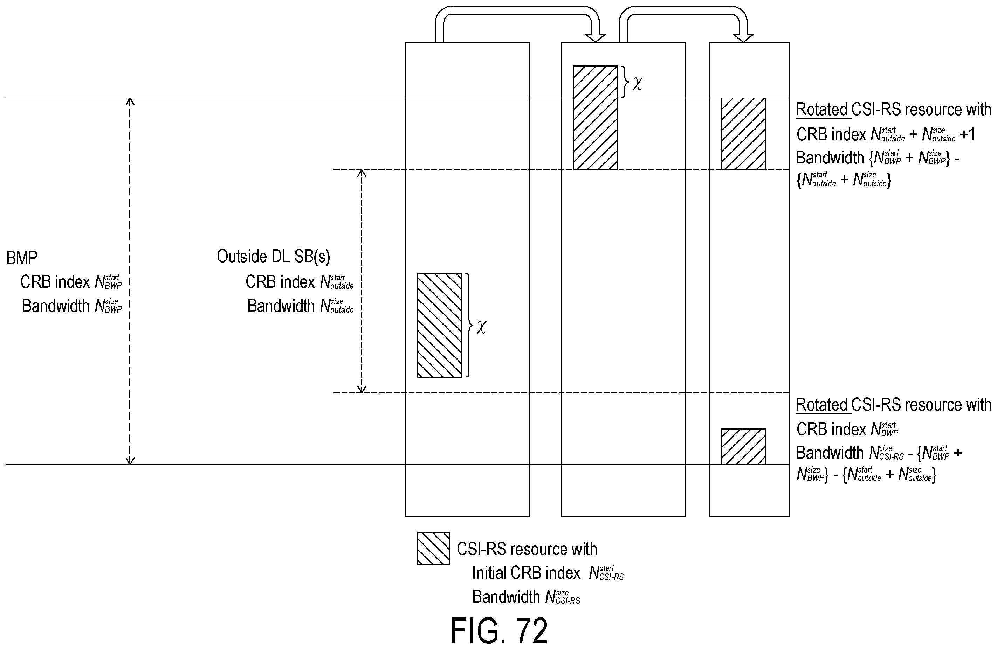

FIG. 72 is a schematic diagram that illustrates frequency rotation of SBFD CSI-RS according to an exemplary embodiment of the present disclosure. Referring to FIG. 72, there is a case when (if or in the case that) frequency allocation of CSI-RS is fully/partially overlapping with outside DL SB(s), and/or $N_{BWP}^{size} - N_{outside}^{size} \geq N_{CSI-RS}^{size}$ . $N_{BWP}^{start}$ is CRB index of BWP. $N_{BWP}^{size}$ is the bandwidth of BWP. The CSI-RS resource configured with initial CRB index " $N_{CSI-RS}^{start}$ " and bandwidth " $N_{CSI-RS}^{size}$ ". $N_{outside}^{start}$ is CRB index of subband outside DL SB(s). $N_{outside}^{size}$ is the bandwidth of subband outside DL SB(s). Rotated CSI-RS resource is configured with CRB index " $N_{outside}^{start} + N_{outside}^{size} +1$ " and bandwidth " $\{N_{BWP}^{start} + N_{BWP}^{size}\} - \{N_{Outside}^{start} + N_{Outside}^{size}\}$ ". Furthermore or alternatively, rotated CSI-RS resource is configured with CRB index " $N_{outside}^{start}$ " and bandwidth " $N_{CSI-RS}^{size} - \{N_{BWP}^{start} + N_{BWP}^{size}\} + \{N_{Outside}^{start} + N_{Outside}^{size}\}$ ".

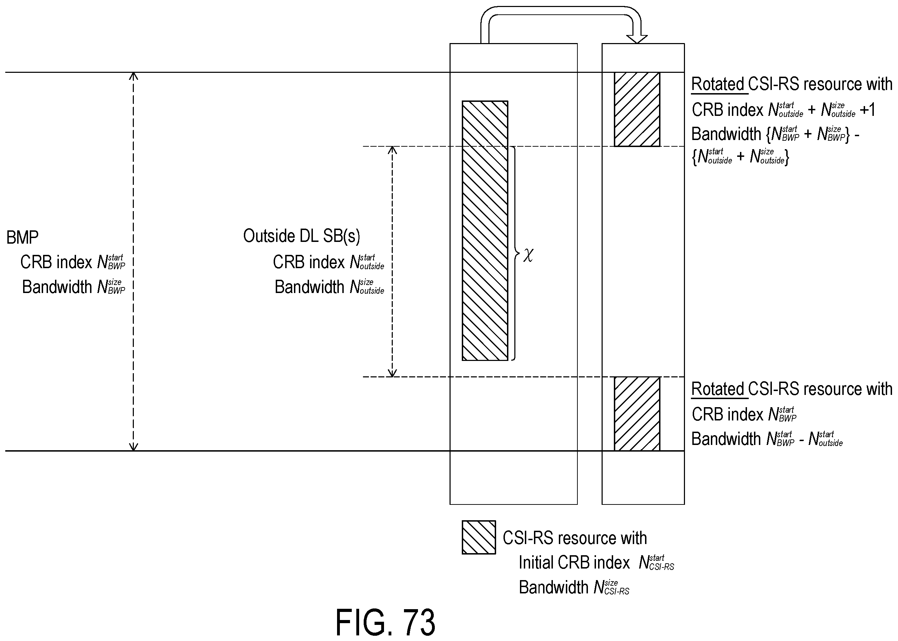

FIG. 73 is a schematic diagram that illustrates frequency rotation of SBFD CSI-RS according to an exemplary embodiment of the present disclosure. Referring to FIG. 73, there is a case when (if or in the case that) frequency allocation of CSI-RS is fully/partially overlapping with outside DL SB(s), and/or $N_{BWP}^{size} - N_{outside}^{size} < N_{CSI-RS}^{size}$. $N_{BWP}^{start}$ is CRB index of BWP. $N_{BWP}^{size}$ is the bandwidth of BWP. The CSI-RS resource configured with initial CRB index " $N_{CSI-RS}^{start}$ " and bandwidth " $N_{CSI-RS}^{size}$ ". $N_{outside}^{start}$ is CRB index of subband outside DL SB(s). $N_{outside}^{size}$ is the bandwidth of subband outside DL SB(s). Rotated CSI-RS resource is configured with CRB index " $N_{outside}^{start} + N_{outside}^{size} + 1$ " and bandwidth " $\{N_{BWP}^{start} + N_{BWP}^{size}\} - \{N_{Outside}^{start} + N_{Outside}^{size}\}$ ". Furthermore or alternatively, rotated CSI-RS resource is configured with CRB index " $N_{outside}^{start}$ " and bandwidth " $N_{BWP}^{start} - N_{Outside}^{start}$ ".

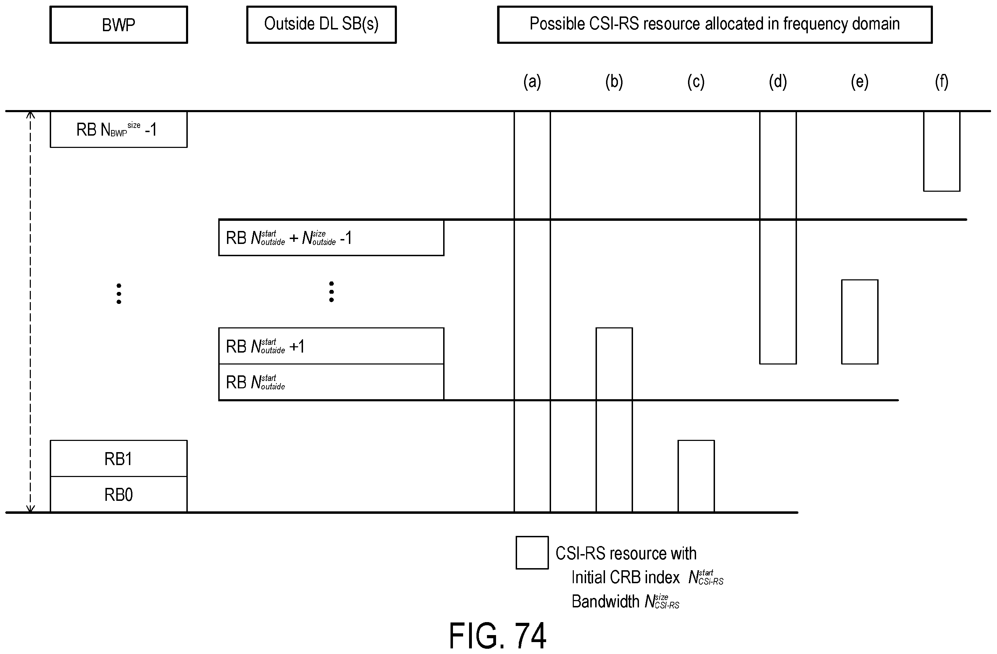

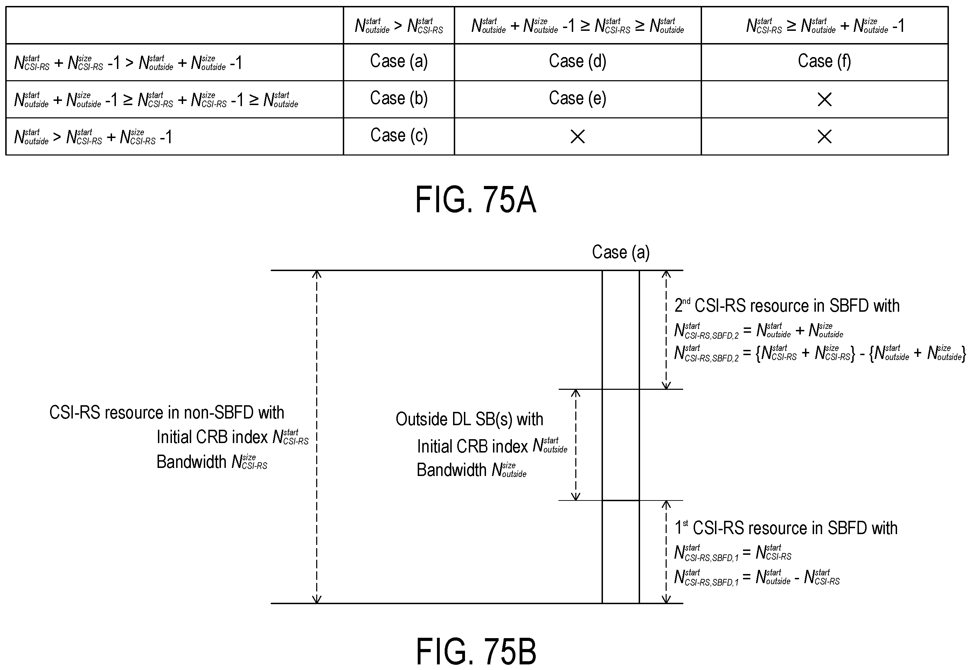

FIG. 74 is a schematic diagram that illustrates a determination of SBFD CSI-RS frequency range according to an exemplary embodiment of the present disclosure, and FIG. 75A is a schematic diagram that illustrates the relation of multiple cases according to an exemplary embodiment of the present disclosure. Referring to FIG. 74 and FIG. 75A, there are case (a) to case (f) of CSI-RS resource configured with different initial CRB index and/ or bandwidth in the frequency domain.

FIG. 75B is a schematic diagram that illustrates case (a) according to an exemplary embodiment of the present disclosure. Referring to FIG. 74, FIG. 75A, and FIG. 75B, CSI-RS resource associated with non-SBFD is configured with initial CRB index " $N_{CSI-RS}^{start}$ " and bandwidth " $N_{CSI-RS}^{size}$ ". $N_{outside}^{start}$ is CRB index of subband outside DL SB(s). $N_{outside}^{size}$ is the bandwidth of subband outside DL SB(s). The first CSI-RS resource associated with SBFD is configured with CRB index " $N_{CSI-RS, SBFD,1}^{start} = N_{CSI-RS}^{start}$ " and bandwidth " $N_{CSI-RS, SBFD,1}^{size} = N_{Outside}^{start} - N_{CSI-RS}^{start}$ ". Furthermore, the second CSI-RS resource associated with SBFD is configured with CRB index " $N_{CSI-RS, SBFD,2}^{start} = N_{Outside}^{start} + N_{Outside}^{size}$ " and bandwidth " $N_{CSI-RS, SBFD,2}^{size} = \{N_{CSI-RS}^{start} + N_{CSI-RS}^{size}\} - \{N_{Outside}^{start} + N_{Outside}^{size}\}$ ".

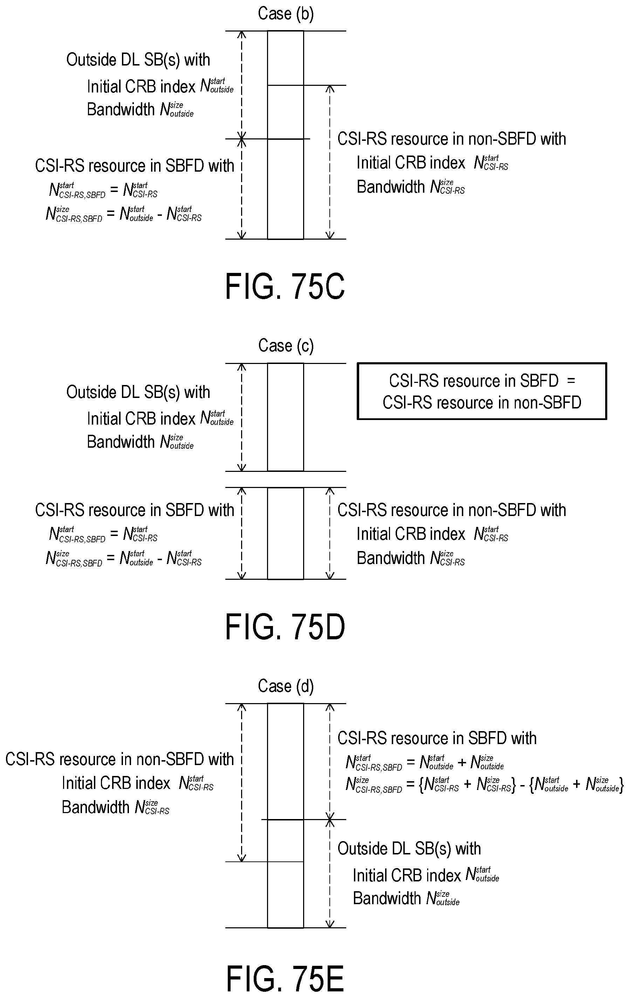

FIG. 75C is a schematic diagram that illustrates case (b) according to an exemplary embodiment of the present disclosure. Referring to FIG. 74, FIG. 75A, and FIG. 75C, CSI-RS resource associated with SBFD is configured with initial CRB index " $N_{CSI-RS, SBFD}^{start} = N_{CSI-RS}^{start}$ " and bandwidth " $N_{CSI-RS, SBFD}^{size} = N_{Outside}^{start} - N_{CSI-RS}^{start}$ ". $N_{Outside}^{start}$ is CRB index of subband outside DL SB(s). $N_{outside}^{size}$ is the bandwidth of subband outside DL SB(s). The CSI-RS resource associated with non-SBFD is configured with initial CRB index " $N_{CSI-RS}^{start}$ " and bandwidth " $N_{CSI-RS}^{size}$ ".

FIG. 75D is a schematic diagram that illustrates case (c) according to an exemplary embodiment of the present disclosure. Referring to FIG. 74, FIG. 75A, and FIG. 75D, CSI-RS resource associated with SBFD is configured with initial CRB index " $N_{CSI-RS, SBFD}^{start} = N_{CSI-RS}^{start}$ " and bandwidth " $N_{CSI-RS, SBFD}^{size} = N_{CSI-RS}^{size}$ ". $N_{outside}^{start}$ is CRB index of subband outside DL SB(s). $N_{outside}^{size}$ is the bandwidth of subband outside DL SB(s). The CSI-RS resource associated with non-SBFD is configured with initial CRB index " $N_{CSI-RS}^{start}$ " and bandwidth " $N_{CSI-RS}^{size}$ ". That is CSI-RS resource in SBFD equals CSI-RS resource in non-SBFD.

FIG. 75E is a schematic diagram that illustrates case (d) according to an exemplary embodiment of the present disclosure. Referring to FIG. 74, FIG. 75A, and FIG. 75E, CSI-RS resource associated with non-SBFD is configured with initial CRB index " $N_{CSI-RS}^{start}$ " and bandwidth " $N_{CSI-RS}^{start}$ ". $N_{outside}^{start}$ is CRB index of subband outside DL SB(s). $N_{outside}^{size}$ is the bandwidth of subband outside DL SB(s). The CSI-RS resource associated with SBFD is configured with initial CRB index " $N_{CSI-RS, SBFD}^{start} = N_{Outside}^{start} + N_{Outside}^{size}$ " and bandwidth "

$$N^{size}_{CSI-RS, SBFD} = \{N^{start}_{CSI-RS} + N^{size}_{CSI-RS}\} - \{N^{start}_{Outside} + N^{size}_{Outside}\}$$

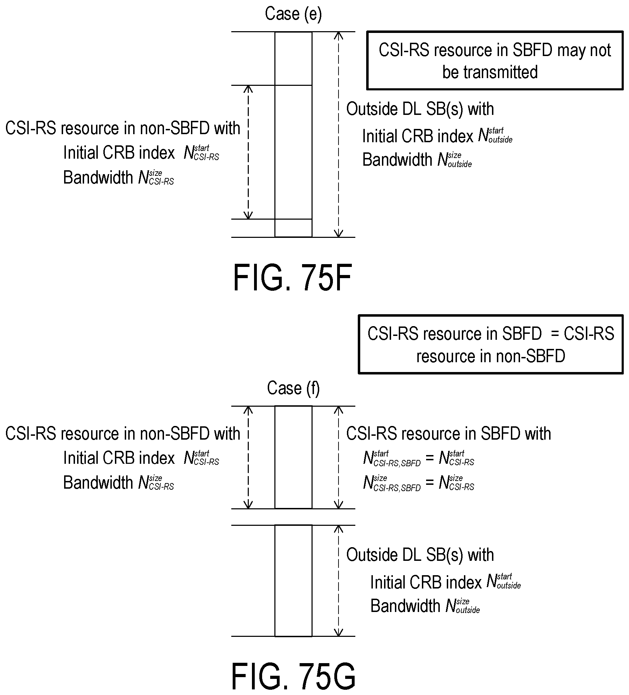

FIG. 75F is a schematic diagram that illustrates case (e) according to an exemplary embodiment of the present disclosure. Referring to FIG. 74, FIG. 75A, and FIG. 75F, CSI-RS resource associated with non-SBFD is configured with initial CRB index " $N^{start}_{CSI-RS}$ " and bandwidth " $N^{start}_{CSI-RS}$ ". $N^{start}_{outside}$ is CRB index of subband outside DL SB(s). $N^{size}_{outside}$ is the bandwidth of subband outside DL SB(s). There is no CSI-RS resource associated with SBFD. Therefore, CSI-RS resource in SBFD may not be transmitted.

FIG. 75G is a schematic diagram that illustrates case (f) according to an exemplary embodiment of the present disclosure. Referring to FIG. 74, FIG. 75A, and FIG. 75G, CSI-RS resource associated with non-SBFD is configured with initial CRB index " $N^{start}_{CSI-RS}$ " and bandwidth " $N^{start}_{CSI-RS}$ ". $N^{start}_{outside}$ is CRB index of subband outside DL SB(s). $N^{size}_{outside}$ is the bandwidth of subband outside DL SB(s). The CSI-RS resource associated with SBFD is configured with initial CRB index " $N^{start}_{CSI-RS, SBFD} = N^{start}_{CSI-RS}$ " and bandwidth " $N^{size}_{CSI-RS, SBFD} = N^{size}_{CSI-RS}$ ". That is CSI-RS resource in SBFD equals CSI-RS resource in non-SBFD.

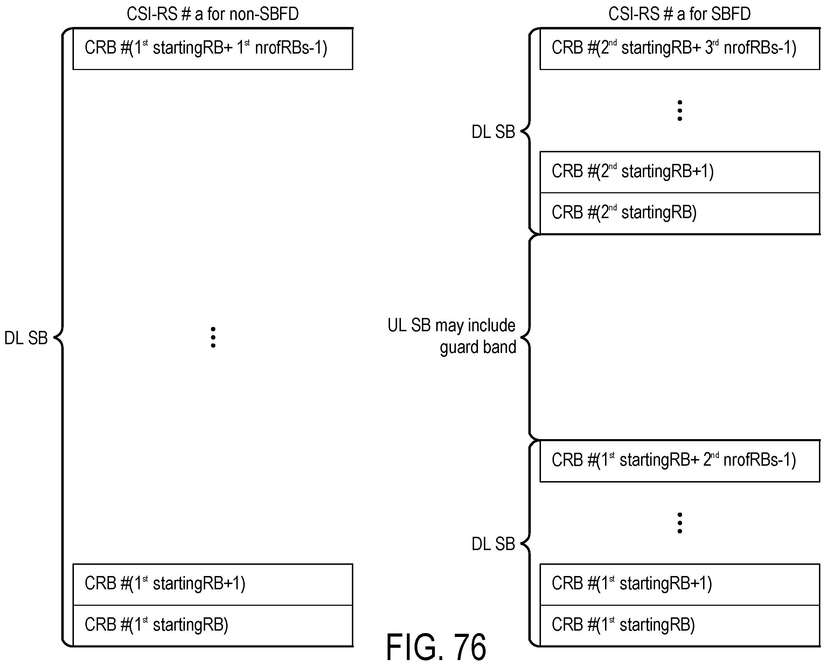

FIG. 76 is a schematic diagram that illustrates non-contiguous CSI-RS resource allocation of one CSI-RS resource according to an exemplary embodiment of the present disclosure. Referring to FIG. 76, there may be three additional parameters within a CSI-RS resource configuration. The three additionsal parameters are "2nd startingRB", "2nd nrofRBs", and "3rd nrofRBs", where "startingRB" is the resource block (RB) where this CSI resource starts in relation to common resource block #0, and "nrofRBs" is the number of resource blocks (RBs) across which this CSI resource spans.

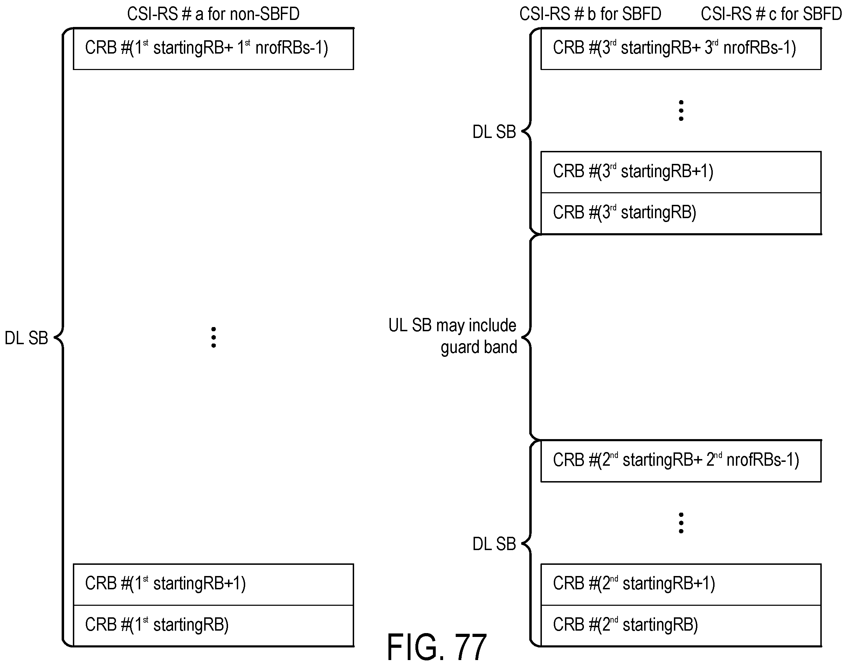

FIG. 77 is a schematic diagram that illustrates two non-contiguous CSI-RS resources that are linked according to an exemplary embodiment of the present disclosure. Referring to FIG. 77, there may be two additional parameters within a CSI-RS resource configuration. The two additionsal parameters are "3rd startingRB" and "3rd nrofRBs", where "startingRB" is the resource block (RB) where this CSI resource starts in relation to common resource block #0, and "nrofRBs" is the number of resource blocks (RBs) across which this CSI resource spans.

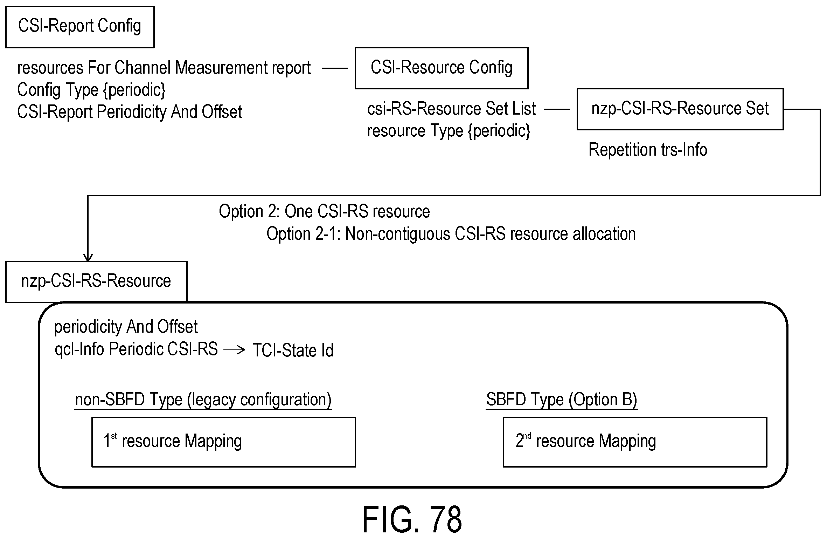

FIG. 78 is a schematic diagram that illustrates SBFD and Non-SBFD CSI-RS configuration according to an exemplary embodiment of the present disclosure. Referring to FIG. 78, option 2-1 "Non-contiguous CSI-RS resource allocation" of option 2 in parameter "nzp-CSI-RS-Resource" indicates "first resourceMapping" for non-SBFD type in legacy configuration and "second resourceMapping" for SBFD type.

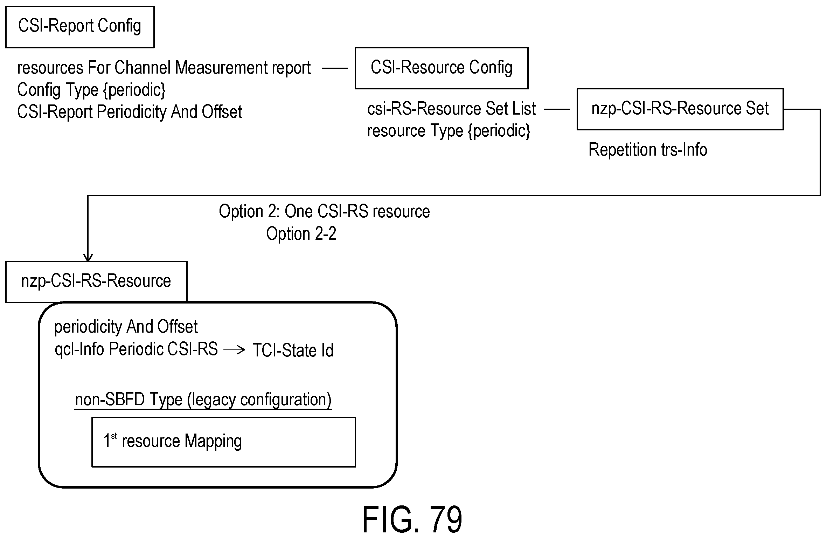

FIG. 79 is a schematic diagram that illustrates SBFD and Non-SBFD CSI-RS configuration according to an exemplary embodiment of the present disclosure. Referring to FIG. 79, option 2-2 of option 2 indicates only indicates "first resourceMapping" for non-SBFD type in legacy configuration.

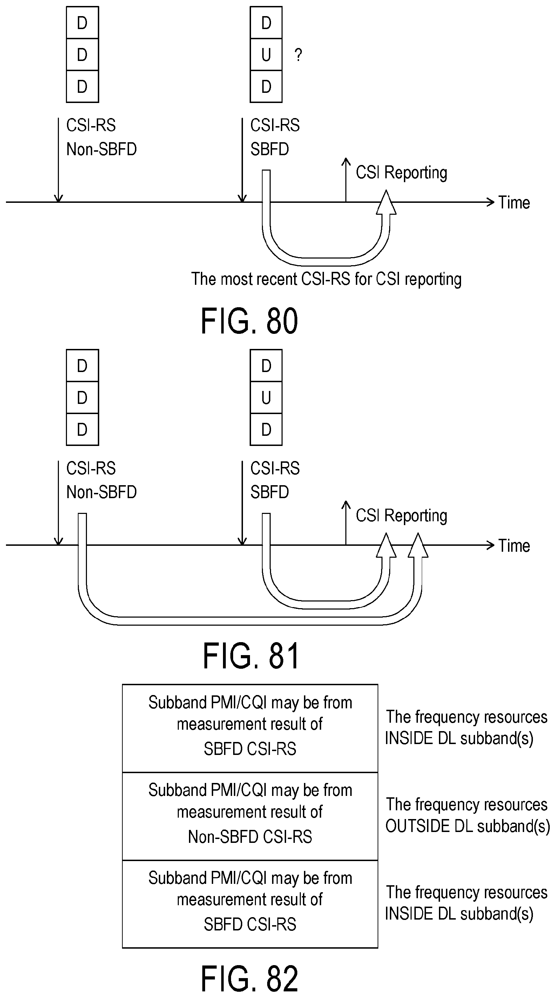

FIG. 80 is a schematic diagram that illustrates time restriction for channel measurement according to an exemplary embodiment of the present disclosure. Referring to FIG. 80, there may be a case when (if or in the case that) the higher layer parameter *timeRestrictionForChannelMeasurements* in *CSI-ReportConfig* is set to *"Configured"*. If there have the frequency resources outside DL subband(s) for resource of CSI-RS associated with SBFD, there may be an issue whether/how to report subband PMI/CQI of the frequency resources outside DL subband(s).

FIG. 81 is a schematic diagram that illustrates time restriction for channel measurement according to an exemplary embodiment of the present disclosure. Referring to FIG. 81, when (if or in the case that) the higher layer parameter timeRestrictionForChannelMeasurements in CSI-ReportConfig is set to "Configured", UE may derive the channel measurements for computing CSI reported in uplink slot n based on only the most recent SBFD CSI-RS and Non-SBFD CSI-RS. For example, the most recent CSI-RS associated with SBFD and CSI-RS associated with Non-SBFD for CSI reporting is performed.

FIG. 82 is a schematic diagram that illustrates resource allocations for channel measurement according to an exemplary embodiment of the present disclosure. Referring to FIG. 81, there may be a case when (if or in the case that) UE is configured with a CSI-ReportConfig with the higher layer parameter reportQuantity set to 'cri-RI-PMI-CQI',

when (if or in the case that) the most recently CSI-RS for CSI reporting is SBFD CSI-RS; and/ or

when (if or in the case that) CSI from SBFD CSI-RS & Non-SBFD CSI-RS may have same values of CRI, and RI. For example, the most recent CSI-RS associated with SBFD and CSI-RS associated with Non-SBFD for CSI reporting is performed as shown in FIG. 81 if there are same values of CRI and RI between CSI-RS associated with SBFD and CSI-RS associated with non-SBFD. The subband PMI/CQI may be from measurement result of CSI-RS associated with SBFD in the frequency resources INSIDE DL subband(s). The subband PMI/CQI may be from measurement result of CSI-RS associated with non-SBFD in the frequency resources OUTSIDE DL subband(s).

In one embodiment, there may be a case when (if or in the case that) UE is configured with a CSI-ReportConfig with the higher layer parameter reportQuantity set to 'cri-RI-PMI-CQI', when (if or in the case that) the most recently CSI-RS for CSI reporting is SBFD CSI-RS;

when (if or in the case that) CSI from SBFD CSI-RS and Non-SBFD CSI-RS may have same values of CRI, and RI; when (if or in the case that) the higher layer parameter cqi-BitsPerSubband in CSI-ReportConfig is not configured, for each sub-band index s of the frequency resources outside DL subband(s). Taking FIG. 82 as an example, for the subband PMI/CQI may be from measurement result of CSI-RS associated with non-SBFD in the frequency resources OUTSIDE DL subband(s), Sub-band Offset level (s) = sub-band CQI index (s) - wideband CQI index, where sub-band CQI index (s) is configured according to measurement result of Non-SBFD CSI-RS and wideband CQI index is configured according to measurement result of SBFD CSI-RS.

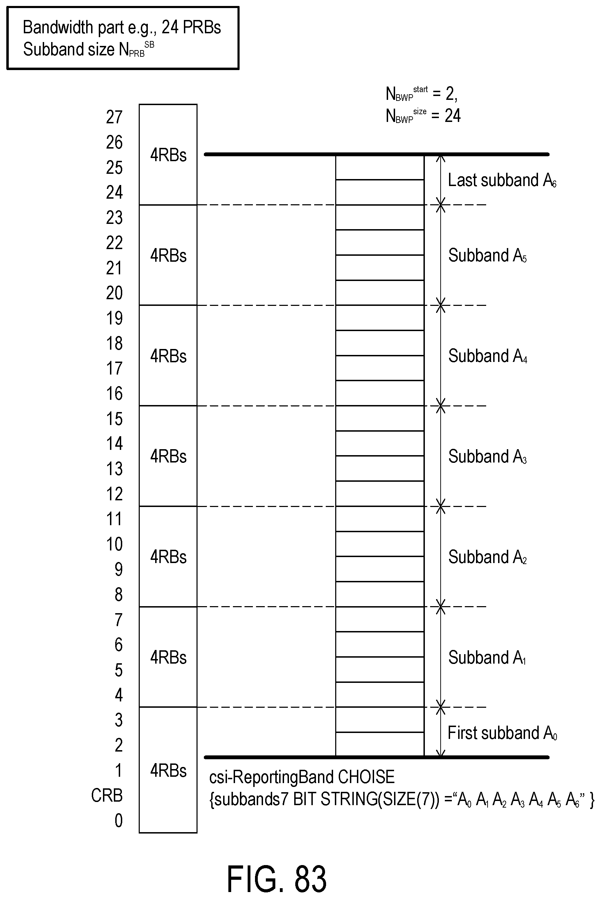

FIG. 83 is a schematic diagram that illustrates subband precoder matrix indicator (PMI)/channel quality indicator (CQI) reporting according to an exemplary embodiment of the present disclosure. Referring to FIG. 83, the bandwidth part may be for example 24 PRBs, and the Subband size $N_{PRB}^{SB}$ may be for example 4 PRBs. The start of the bandwidth part may be for example the second PRB. There may be seven subbands $A_0$, $A_1$, $A_2$, $A_3$, $A_4$, $A_5$, $A_6$ allocated for PMI/CQI Reporting. The size of the first subband $A_0$ size is $N_{PRB}^{SB} - \left(N_{BWP,i}^{start} \bmod N_{PRB}^{SB}\right)$. The size of the last subband $A_6$ is $\left(N_{BWP,i}^{start} + N_{BWP,i}^{size}\right) \bmod N_{PRB}^{SB}$ if $\left(N_{BWP,i}^{start} + N_{BWP,i}^{size}\right) \bmod N_{PRB}^{SB} \neq 0$, or the size of the last subband $A_6$ is $N_{PRB}^{SB}$ if $\left(N_{BWP,i}^{start} + N_{BWP,i}^{size}\right) \bmod N_{PRB}^{SB} = 0$.

Table (1) is the mapping of sub-band differential CQI value to offset level.

Table (1)

| Sub-band differential CQI value | Offset level |
|---|---|
| 0 | 0 |
| 1 | 1 |
| 2 | $\geq 2$ |
| 3 | $\leq$-1 |

In one embodiment, regarding the channel quality indicator (CQI), when (if or in the case that) the higher layer parameter *cqi-BitsPerSubband* in *CSI-ReportConfig* is not configured, for each sub-band index s, a 2-bit sub-band differential CQI may be defined as:

- sub-band Offset level (*s*) = sub-band CQI index (s) - wideband CQI index; and/ or
- the mapping from the 2-bit sub-band differential CQI values to the offset level is shown.

In one embodiment, there may a case when (if or in the case that) UE is configured with a CSI-ReportConfig with the higher layer parameter reportQuantity set to 'cri-RI-PMI-CQI': when (if or in the case that) the most recently CSI-RS for CSI reporting is SBFD CSI-RS;

when (if or in the case that) CSI from SBFD CSI-RS & Non-SBFD CSI-RS may have different values of CRI and/or RI; and/ or
when (if or in the case that) the higher layer parameter cqi-BitsPerSubband in CSI-ReportConfig is configured.

Taking FIG. 81 as an example, the most recent CSI-RS associated with SBFD and CSI-RS associated with Non-SBFD for CSI reporting is performed if there are different values of CRI and/or RI between CSI-RS associated with SBFD and CSI-RS associated with Non-SBFD. Noted that the CSI from Non-SBFD CSI-RS may be expired. Therefore, the CSI may be not be useful for base station NW to DL scheduling.

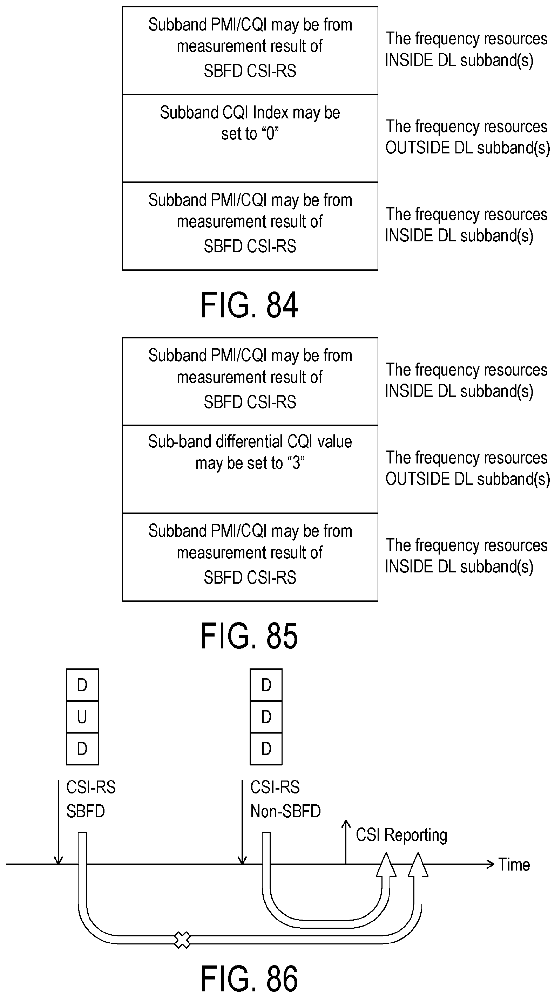

FIG. 84 is a schematic diagram that illustrates resource allocations for channel measurement according to an exemplary embodiment of the present disclosure. Referring to FIG. 84, the subband CQI Index may be set to "0" in the frequency resources OUTSIDE DL subband(s).
In one embodiment, there may a case when (if or in the case that) UE is configured with a CSI-ReportConfig with the higher layer parameter reportQuantity set to 'cri-RI-PMI-CQI': when (if or in the case that) the most recently CSI-RS for CSI reporting is SBFD CSI-RS;

when (if or in the case that) CSI from SBFD CSI-RS & Non-SBFD CSI-RS may have different values of CRI and/or RI; and/ or

when (if or in the case that) the higher layer parameter cqi-BitsPerSubband in CSI-ReportConfig is NOT configured.

For example, FIG. 85 is a schematic diagram that illustrates resource allocations for channel measurement according to an exemplary embodiment of the present disclosure. Referring to FIG. 85, the subband differential CQI value may be set to "3"in the frequency resources OUTSIDE DL subband(s). Furthermore, Table (2) is the mapping of sub-band differential CQI value to offset level.

Table (2)

| Sub-band differential CQI value | Offset level |
|---|---|
| 0 | 0 |
| 1 | 1 |
| 2 | $\geq 2$ |
| 3 | $\leq -1$ |

In one embodiment, there may a case when (if or in the case that) UE is configured with a CSI-ReportConfig with the higher layer parameter reportQuantity set to 'cri-RI-PMI-CQI': when (if or in the case that) the most recently CSI-RS for CSI reporting is non-SBFD CSI-RS.

For example, FIG. 86 is a schematic diagram that illustrates time restriction for channel measurement according to an exemplary embodiment of the present disclosure. Referring to FIG. 86, the most recent CSI-RS associated with non-SBFD for CSI reporting is performed, but the most recent CSI-RS associated with SBFD for CSI reporting is not performed. Noted that Note in this case follow the legacy behavior, i.e., the freshest CSI based on the most recently CSI-RS.

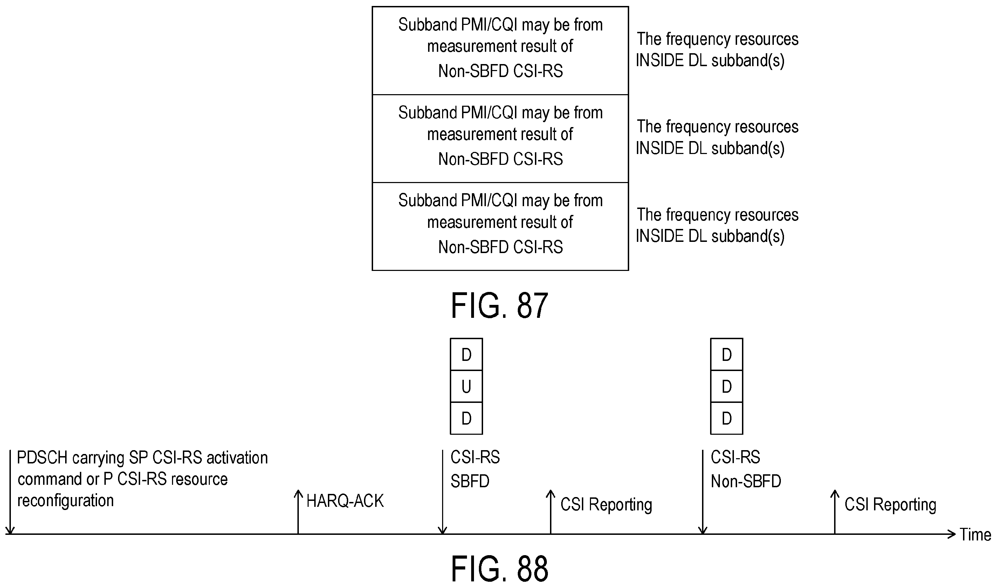

Furthermore, FIG. 87 is a schematic diagram that illustrates resource allocations for channel measurement according to an exemplary embodiment of the present disclosure. Referring to FIG. 87, the subband PMI/CQI may be from measurement result of CSI-RS associated with non-SBFD in the frequency resources INSIDE DL subband(s).

FIG. 88 is a schematic diagram that illustrates initial CSI reporting based on the first SBFD CSI-RS according to an exemplary embodiment of the present disclosure. Referring to FIG. 88, there may a case when (if or in the case that) PDSCH carries SP CSI-RS (semi-persistent CSIRS) activation command or P CSI-RS (periodic CSI-RS) resource reconfiguration. There may be an issue whether or how to report subband PMI/CQI of the frequency resources outside DL subband(s).

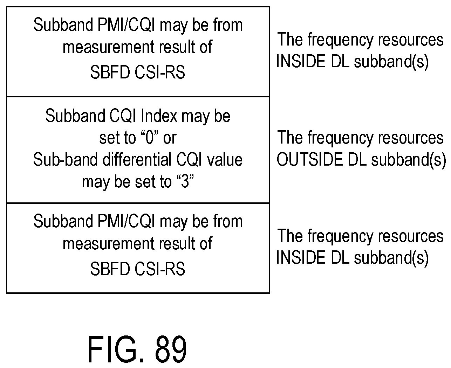

FIG. 89 is a schematic diagram that illustrates resource allocations for CSI reporting according to an exemplary embodiment of the present disclosure. Referring to FIG. 89, regarding CSI-RS associated with SBFD, the subband CQI Index may be set to "0" or sub-band differential CQI value may be set to "3" in the frequency resources OUTSIDE DL subband(s). Subband PMI/CQI may be from measurement result of SBFD CSI-RS in frequency resources INSIDE DL subband(s).

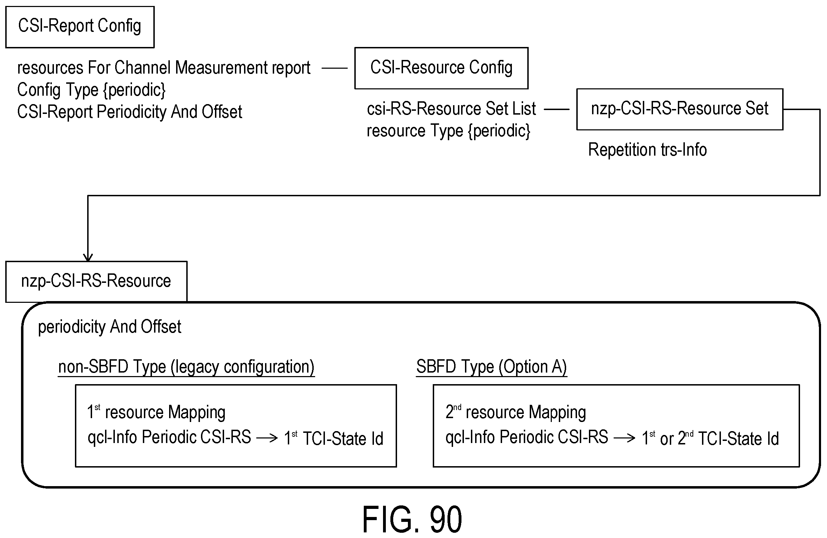

FIG. 90 is a schematic diagram that illustrates SBFD and Non-SBFD CSI-RS configuration according to an exemplary embodiment of the present disclosure. Referring to FIG. 90, the parameter "nzp-CSI-RS-Resource" indicates "first resourceMapping" with qcl-InfoPeriodicCSI-RS configured for the first TCI state ID for non-SBFD type in legacy configuration and "second resourceMapping" with qcl-InfoPeriodicCSI-RS configured for the first or second TCI state ID for SBFD type.

In one embodiment, only assigned physical resource blocks (PRBs) within DL usable PRBs are considered to be valid for the PDSCH.

In one embodiment, the assigned PRBs that fall outside the DL usable PRBs are considered to be invalid. In some embodiments, the assigned PRBs that fall outside the DL usable PRBs should not be used.

In one embodiment, UE may receive a channel state information (CSI) report configuration, where for a CSI reporting subband which overlaps with at least one PRB within DL usable PRBs and at least one PRB outside the DL usable PRBs, only the PRB within the DL usable PRBs is used for reporting. UE may report a CSI according to the CSI report configuration.

In one embodiment, UE may receive a channel state information (CSI) report configuration, where the CSI report configuration is associated with a CSI-RS resource, the CSI report configuration is associated with a CSI-RS resource, for the CSI-RS resource which overlaps with SBFD subband boundaries, only CSI-RS frequency resources within DL usable PRBs are valid. UE may report a CSI according to the CSI report configuration.

In one embodiment, UE may receive a channel state information (CSI) report configuration, where the CSI report configuration is associated with a CSI-RS resource, and CSI-RS mapping is applied to the CSI-RS resource within DL usable PRBs only. UE may report a CSI according to the CSI report configuration.

In one embodiment, UE may receive a channel state information (CSI) report configuration, where the CSI report configuration is associated with a CSI-RS resource, and a CSI-RS resource mapped to RBs outside the DL usable PRBs is punctured. UE may report a CSI according to the CSI report configuration.

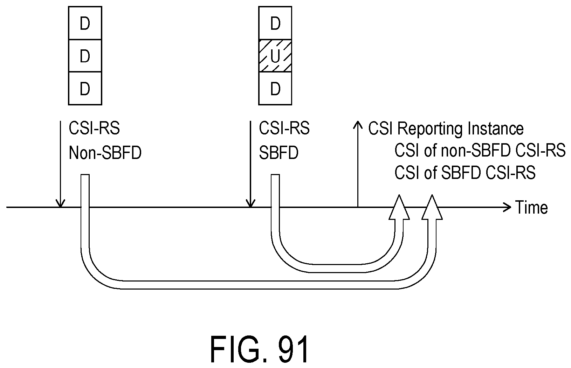

FIG. 91 is a schematic diagram that illustrates per SBFD CSI-RS subband CSI reporting according to an exemplary embodiment of the present disclosure. Referring to FIG. 91, there may be a CSI reporting instance that the most recent CSI-RS associated with SBFD and CSI-RS associated with Non-SBFD for CSI reporting. For CSI overhead reduction, UE may not need to report subband PMI/CQI of the frequency resources outside DL subband(s). For example, "subbands6" of the first csi-ReportingBand of CSI-RS associated with non-SBFD set to "111111", and "subbands6" of the second csi-ReportingBand of CSI-RS associated with SBFD set to "110011" where "0" corresponds to the frequency resources outside DL subband(s).

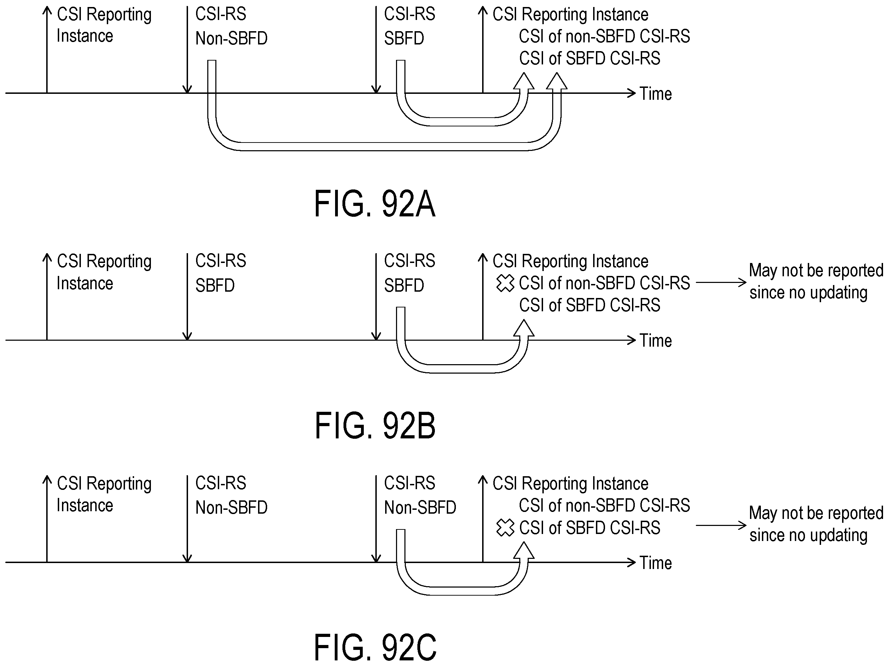

There may be multiple cases of CSI selection indicator. For example, FIG. 92A to FIG. 92C are schematic diagrams that illustrate CSI selection indicator according to an exemplary embodiment of the present disclosure. Referring to FIG. 92A, the CSI reporting instance may be CSI of non-SBFD CSI-RS and CSI of SBFD CSI-RS. Referring to FIG. 92B, the CSI reporting instance may be CSI of SBFD CSI-RS when CSI of non-SBFD CSI-RS may not be reported since no updating. Referring to FIG. 92C, the CSI reporting instance may be CSI of non-SBFD CSI-RS when CSI of SBFD CSI-RS may not be reported since no updating. However, for these cases, there may be an issue how dose a base station NW know which one or both CSI(s) to be reported.

Table (3) is the CSI selection indicator:

Table (3)

| CSI selection indicator value | Description |
|---|---|
| 0 | Both CSIs of non-SBFD CSI-RS and SBFD CSI-RS<br>High priority: CSI of non-SBFD CSI-RS<br>Low priority: CSI of SBFD CSI-RS |
| 1 | Both CSIs of non-SBFD CSI-RS and SBFD CSI-RS<br>High priority: CSI of SBFD CSI-RS<br>Low priority: CSI of non-SBFD CSI-RS |
| 2 | CSI of non-SBFD CSI-RS |
| 3 | CSI of SBFD CSI-RS |

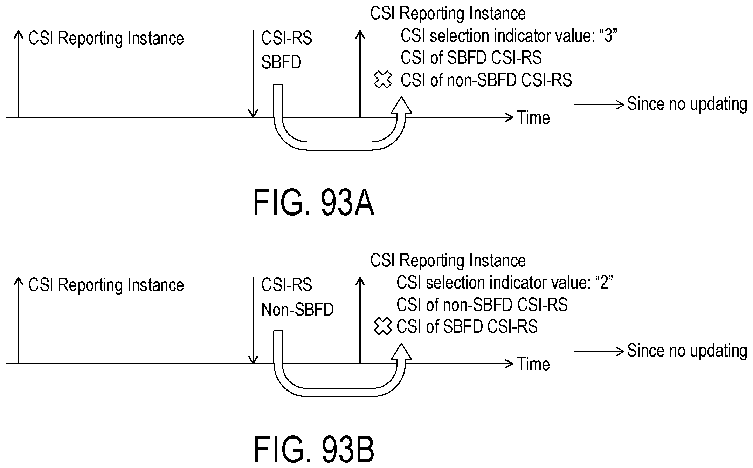

In one embodiment, there may be a case when (if or in the case that) UE is configured to report dynamic CSI(s) of non-SBFD CSI-RS and/or SBFD CSI-RS. For example, FIG. 93A to FIG. 93B are schematic diagrams that illustrate CSI selection indicator according to an exemplary embodiment of the present disclosure. Referring to FIG. 93A, if the CSI selection indicator value sets to "3", CSI of non-SBFD CSI-RS would be reported, but CSI of SBFD CSI-RS would not be reported since no updating. Referring to FIG. 93B, if the CSI selection indicator value sets to "2", CSI of SBFD CSI-RS would be reported, but CSI of non-SBFD CSI-RS would not be reported since no updating.

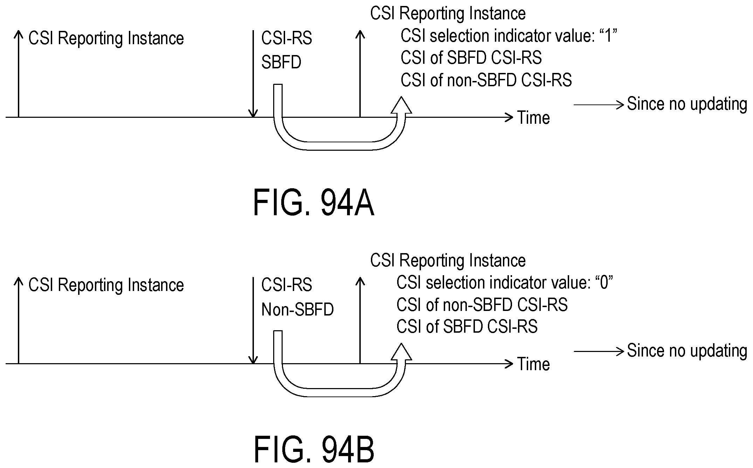

In one embodiment, there may be a case when (if or in the case that) UE is configured to report both CSIs of non-SBFD CSI-RS and SBFD CSI-RS. For example, FIG. 94A to FIG. 94B are schematic diagrams that illustrate CSI selection indicator according to an exemplary embodiment of the present disclosure. Referring to FIG. 94A, if the CSI selection indicator value sets to "1", CSI of SBFD CSI-RS would be reported, but CSI of non-SBFD CSI-RS would not be reported since no updating. Referring to FIG. 94B, if the CSI selection indicator value sets to "0", CSI of non-SBFD CSI-RS would be reported, but CSI of SBFD CSI-RS would not be reported since no updating.

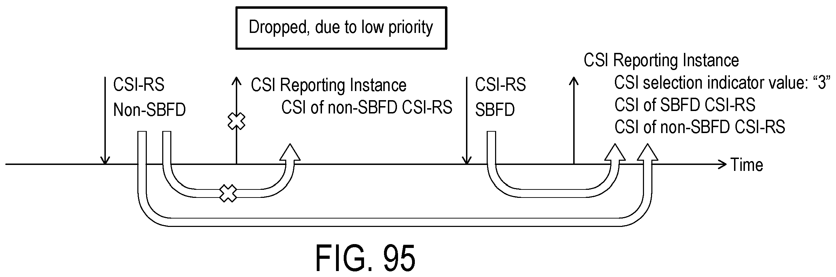

FIG. 95 is a timing diagram that illustrates CSI selection indication according to an exemplary embodiment of the present disclosure. Referring to FIG. 95, if there is a CSI-RS associated with non-SBFD, CSI of non-SBFD CSI-RS may be dropped or expired due to low priority. If there is a CSI-RS associated with SBFD and the CSI selection indicator value sets to "3", CSI of BFD CSI-RS may be reported.

In one embodiment, CSI selection indicator may be configurable. In one embodiment, when (if or in the case that) CSI selection indicator is not configured:

UE may report both CSIs of non-SBFD CSI-RS and SBFD CSI-RS, and/ or
UE may default CSI priority, e.g.,

- High priority: CSI of non-SBFD CSI-RS (or SBFD CSI-RS);
- Low priority: CSI of SBFD CSI-RS (or non-SBFD CSI-RS).

In one embodiment, for SBFD CSI reporting, UE may be configured with at least one of following:

- Both

    - CSIs of non-SBFD CSI-RS and SBFD CSI-RS

- Dynamic

    - CSI(s) of non-SBFD CSI-RS and/or SBFD CSI-RS.

In one embodiment, for CSI priority, UE may be configured with at least one of following:

- CSI of non-SBFD CSI-RS may have higher priority
- CSI of SBFD CSI-RS may have higher priority
- None: CSI priority determined by UE.

Table (4) is a relation of the CSI priority and configuration of the SBFD CSI reporting.

Table (4)

|  | Both | Dynamic |
| --- | --- | --- |
| CSI of non-SBFD CSI-RS may have higher priority | CSI selection indicator may be not presented 0 bit additional overhead | CSI selection indicator 2 bit additional overhead |
| CSI of SBFD CSI-RS may have higher priority | CSI selection indicator may be not presented 0 bit additional overhead | CSI selection indicator 2 bit additional overhead |
| None | CSI selection indicator 1 bit additional overhead | CSI selection indicator 2 bit additional overhead |

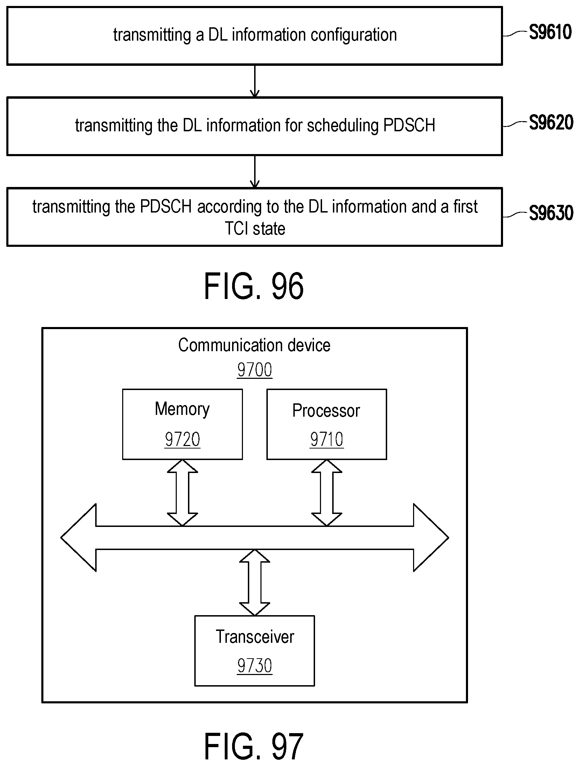

FIG. 96 is a flow chart that illustrates a method according to an exemplary embodiment of the present disclosure. Referring to FIG. 96, the method may be implemented by a network device, such as a base station NW. The base station NW transmits a downlink (DL) information configuration (step S9610). Specifically, the DL information configuration is associated with time and frequency domain information for receiving DL information. The time domain information may indicate the resource allocation of the time domain. The frequency domain information may indicate the resource allocation of the frequency domain. In one embodiment, the DL information configuration may further be associated with the spatial domain information for receiving the DL information. The spatial domain information may indicate the resource allocation of the spatial domain.

The base station NW transmits the DL information for scheduling physical downlink shared channel (PDSCH) (step S9620). The DL information may be, for example, CORESET ID, SS set ID or TCI state ID, reference RS ID, and/or spatial Rx parameter. The base station NW may transmit the DL information according to the DL information configuration.

The base station NW transmits the PDSCH according to the DL information and a first TCI state (step S9630). Specifically, the first TCI state includes one or more parameters for configuring the relationship between downlink (DL) reference signal (RS) and one or more demodulation reference signal (DM-RS) ports of the PDSCH.

In one embodiment, a base station NW may transmit configuration to configure the DL information to be received in at least one of: a first resource type or a second resource type.

In one embodiment, the transmitted DL information is associated with (both) the first resource type and the second resource type.

In one embodiment, a time offset of the DL information and the PDSCH is less than a threshold. The time unit of the time offset could be a slot, symbol, or other time unit.

In one embodiment, a base station NW may transmit a control resource set (CORESET) is associated with a search space with a lowest CORESET identity (ID) in a latest slot.

In one embodiment, the latest slot is associated with the same resource type as a slot for receiving the PDSCH.

In one embodiment, the lowest CORESET ID is selected from at least one CORESET associated with a same resource type of a slot for transmitting the PDSCH.

In one embodiment, the at least one CORESET is configured with a value of group index, and the value of group index is associated with a resource type.

In one embodiment, a CORESET associated with a monitored search space (SS) with a lowest CORESET ID among a plurality of CORESETs is associated with a common type of a SS set in a latest slot.

In one embodiment, the CORESET is determined with highest priority according to a first priority rule in a case that (ehen or if) more than one common SS set is in the latest slot.

In one embodiment, a time offset of the DL information and a scheduled PDSCH is larger than a threshold, and a TCI field is absent in the DL information.

In one embodiment, the first TCI state for the PDSCH is identical to a TCI state applied for CORESET used for a channel related to the DL information.

In one embodiment, only assigned physical resource blocks (PRBs) within DL usable PRBs are considered to be valid for the PDSCH.

In one embodiment, the assigned PRBs that fall outside the DL usable PRBs are considered to be invalid.

In one embodiment, the first TCI state is associated with separate parameters for sub-band full duplex (SBFD) symbols and non-SBFD symbols.

In one embodiment, the first TCI state is a unified TCI.

In one embodiment, a base station NW may transmit a channel state information (CSI) report configuration, where for a CSI reporting subband which overlaps with at least one PRB within DL usable PRBs and at least one PRB outside the DL usable PRBs, only the PRB within the DL usable PRBs is used for reporting. The base station NW may receive a CSI according to the CSI report configuration.

In one embodiment, a base station NW may transmit a channel state information (CSI) report configuration, where the CSI report configuration is associated with a CSI-RS resource, and for the CSI-RS resource which overlaps with SBFD subband boundaries, only CSI-RS frequency resources within DL usable PRBs are valid. The base station NW may receive a CSI according to the CSI report configuration.

In one embodiment, a base station NW may transmit a channel state information (CSI) report configuration, where the CSI report configuration is associated with a CSI-RS resource, and CSI-RS mapping is applied to the CSI-RS resource within DL usable PRBs only. The base station NW may receive a CSI according to the CSI report configuration.

In one embodiment, a base station NW may transmit a channel state information (CSI) report configuration, where the CSI report configuration is associated with a CSI-RS resource, and a CSI-RS resource mapped to RBs outside the DL usable PRBs is punctured. The base station NW may receive a CSI according to the CSI report configuration.

In one embodiment, a base station NW may transmit The base station NW may receive a CSI according to the CSI report configuration.

FIG. 97 is a block diagram that illustrates a communication device according to an exemplary embodiment of the present disclosure. Referring to FIG. 97, the communication device 9700 may be a UE or a network device. The communication device 9700 may include, but is not limited thereto a processor 9710. The processor 9710 (e.g., having processing circuitry) may include an intelligent hardware device, e.g., a Central Processing Unit (CPU), a microcontroller, an ASIC, etc. The processor 9710 can call and run a computer program from memory to implement the method in the embodiment of the disclosure.

Since the program code stored in the communication device 9700 adopts all the technical solutions of all the foregoing embodiments when being executed by the processor 9710, it at least has all the advantageous effects brought by all the technical solutions of all the foregoing embodiments, and no further description is incorporated herein.

Optionally, as shown in FIG. 97, the communication device 9700 may further include a memory 9720. The memory 9720 may include computer-storage media in the form of volatile and/or non-volatile memory. The memory 9720 may be removable, non-removable, or a combination thereof. Exemplary memory includes solid-state memory, hard drives, optical-disc drives, etc. The processor 9710 may call and run a computer program from the memory 9720 to implement the method in the embodiment of the disclosure.

The memory 9720 may be a separate device independent of the processor 9710, or may be integrated in the processor 9710.

Optionally, as shown in FIG. 97, the communication device 9700 may further include a transceiver 9730, and the processor 9710 may control the transceiver 9730 to communicate with other devices. The transceiver 9730 having a transmitter (e.g., transmitting/transmission circuitry) and a receiver (e.g., receiving/reception circuitry) may be configured to transmit and/or receive time and/or frequency resource partitioning information. In some implementations, the transceiver 9730 may be configured to transmit in different types of subframes and slots including, but not limited to, usable, non-usable and flexibly usable subframes and slot formats. The transceiver 9730 may be configured to receive data and control channels.

Specifically, the transceiver 9730 may send information or data to other devices, or receive information or data sent by other devices.

Specifically, the transceiver 9730 may include a transmitter and a receiver. The transceiver 9730 may further include an antenna, and the number of antennas may be one or more.

Optionally, the communication device 9700 may specifically be a network device in an embodiment of the disclosure, and the communication device 9700 may implement the corresponding process implemented by the network device in various methods of the embodiment of the disclosure. For the conciseness, related descriptions are omitted.

Optionally, the communication device 9700 may specifically be a mobile terminal, a terminal device, or a UE in an embodiment of the disclosure, and the communication device 9700 may implement the corresponding process implemented by the mobile terminal, the terminal device, or the UE in various methods in the embodiment of the disclosure. For conciseness, a related description is omitted.

**Claims**

1. A method, adapted for a user equipment, named UE, (UE), the method comprising:

   receiving a downlink, named DL, information configuration, wherein the DL information configuration is associated with time and frequency domain information for receiving DL information;
   receiving the DL information for scheduling physical downlink shared channel, named PDSCH;
   receiving the PDSCH according to the DL information and a first TCI state, wherein

   the first TCI state comprises parameters for configuring a relationship between downlink reference signal and at least one demodulation reference signal, named DM-RS, port of the PDSCH.

2. The method according to claim 1, further comprising:
   receiving a configuration to configure the DL information to be received in at least one of:
   a first resource type or a second resource type.

3. The method according to claim 2, wherein
   a received DL information is associated with the first resource type and the second resource type.

4. The method according to any one of claims 1-3, wherein
   a time offset of the DL information and the PDSCH is less than a threshold.

5. The method according to claim 4, further comprising:
   assuming a quasi-co-location, named QCL, assumption used for a control resource set, named CORESET, is associated with a monitored search space with a lowest CORESET identity, named ID, in a latest slot.

6. The method according to claim 5, wherein

   the latest slot is associated with a same resource type as a slot for receiving the PDSCH; or
   the lowest CORESET ID is selected from at least one CORESET associated with a same resource type of a slot for receiving the PDSCH, wherein the at least one CORESET is configured with a value of group index, and the value of group index is associated with a resource type.

7. The method according to claim 4, further comprising:
   assuming a QCL assumption used for a lowest CORESEDT ID among a plurality of CORESETs configured with a value of group index value associated with a same type of a slot for receiving the PDSCH.

8. The method according to claim 4, further comprising:
   assuming a QCL assumption used for a CORESET associated with a monitored search space, named SS, with a lowest CORESET ID among a plurality of CORESETs associated with a common type of a SS set in a latest slot.

9. The method according to claim 8, further comprising:

   in a case that more than one common SS set is in the latest slot, determining the CORESET with highest priority according to a first priority rule, wherein
   an order of the first priority rule is predefined in following descending order:

      a first type physical downlink control channel, named PDCCH, associated with system information; and

a second type PDCCH not associated with the system information.

10. The method according to claim 8, further comprising:
in a case that more than one SS set has a same highest priority according to a first priority rule, determining the CORESET associated with the lowest SS set ID among the more than one SS set has the same highest priority.

11. The method according to any one of claims 1-10, wherein

a time offset of the DL information and a scheduled PDSCH is larger than a threshold, and
a TCI field is absent in the DL information.

12. The method according to claim 11, further comprising:
assuming the first TCI state or a QCL assumption for the PDSCH is identical to a TCI state or a QCL assumption applied for CORESET used for a channel related to the DL information.

13. The method according to claim 12, further comprising:

in a case that the first TCI state is configured with two TCI states, applying one of the two TCI states associated with a same resource type of a slot for receiving the PDSCH; or
in a case that the first TCI state is configured with two reference reference signals, named RSs, applying one of the two reference RSs associated with a same resource type of a slot for receiving the PDSCH, and not expecting the DL information and the PDSCH are received in different resource types.

14. The method according to claim 11, further comprising:
obtaining a QCL assumption for the PDSCH from the first TCI state indicated by a lowest codepoint of a TCI field applicable to the PDSCH in an active bandwidth part, named BWP, of a scheduled cell.

15. The method according to claim 14, wherein

the TCI field is associated with a same resource type of a slot for receiving the PDSCH; or
in a case that the lowest codepoint of the TCI field is associated with two activated TCI states, the first TCI state associated with a same resource type of a slot is applied for receiving the PDSCH.

16. The method according to any one of claims 1-15, wherein

only assigned physical resource blocks, named PRBs, within DL usable PRBs are considered to be valid for the PDSCH; or
the assigned PRBs that fall outside the DL usable PRBs are considered to be invalid; or
the first TCI state is associated with separate parameters for sub-band full duplex, named SBFD, symbols and non-SBFD symbols, wherein
the first TCI state is a unified TCI.

17. The method according to any one of claims 1-16, further comprising:

receiving a channel state information, named CSI, report configuration, wherein

for a CSI reporting subband which overlaps with at least one PRB within DL usable PRBs and at least one PRB outside the DL usable PRBs, only the PRB within the DL usable PRBs is used for reporting; or
the CSI report configuration is associated with a CSI-RS resource, for the CSI-RS resource which overlaps with SBFD subband boundaries, only CSI-RS frequency resources within DL usable PRBs are valid; or
the CSI report configuration is associated with a CSI-RS resource, and CSI-RS mapping is applied to the CSI-RS resource within DL usable PRBs only; or
the CSI report configuration is associated with a CSI-RS resource, and a CSI-RS resource mapped to RBs outside the DL usable PRBs is punctured; and

reporting a CSI according to the CSI report configuration.

18. A user equipment, named UE, (UE), comprising:

a transceiver (9730), configured to transmit or receive wireless signals;
a memory (9720), configured to store a program code; and
a processor (9710), coupled to the transceiver (9730) and the memory (9720), configured to execute the program code to perform:

receiving, through the transceiver (9730), a downlink, named DL, information configuration, wherein the DL information configuration is associated with time and frequency domain information for receiving DL information
receiving, through the transceiver (9730), the DL information for scheduling physical downlink shared channel, named PDSCH;
receiving, through the transceiver (9730), the PDSCH according to the DL information and a first TCI state, wherein

the first TCI state comprises parameters for configuring a relationship between downlink reference signal and at least one demodulation reference signal, named DM-RS, port of the PDSCH.

19. A method, used by a network device (NW), the method comprising:

transmitting a downlink, named DL, information configuration, wherein the DL information configuration is associated with time and frequency domain information for receiving DL information
transmitting the DL information for scheduling physical downlink shared channel, named PDSCH;
transmitting the PDSCH according to the DL information and a first TCI state, wherein

the first TCI state comprises parameters for configuring a relationship between downlink reference signal and at least one demodulation reference signal, named DM-RS, port of the PDSCH.

Static Time Division Duplex (TDD)

| DL | Flexible | UL |
|----|----------|----|

Sub-Band Full Duplex (SBFD)

| DL | DL | UL |
|----|----|----|
| UL | UL |    |
| DL | DL |    |

Freq
→ Time

**FIG. 1**

gNB

UL/DL    UL/DL
Both panels for DL or UL

Beam # A

**FIG. 2**

gNB

UL    DL
One panel for DL
Another panel for UL

Beam # 1

gNB

DCI

UE

FIG. 3A

TCI State indication via MAC CE

| Serving cell ID | | CORESET ID |
|---|---|---|
| CORE SET ID | TCI state ID (RS # n) | |

FIG. 3B

CORESET 0

SS set # 0: Common

DCI

gNB

Common SS

CORESET 0

A group of UEs

## FIG. 4A

CORESET ID

SS set # 1: UE-specific

DCI

gNB

UE-specific SS

CORESET ID

UE

## FIG. 4B

FIG. 5A

| Codepoint of TCI field | TCI state ID |
|---|---|
| 0 | TCI state $ID_0$ |
| 1 | TCI state $ID_1$ |
| ... | ... |
| 7 | TCI state $ID_7$ |

FIG. 5B

FIG. 6A

FIG. 6B

gNB

TCI state # 1

TCI state # 0

CORESET # 1

CORESET # 0

UE

# FIG. 7A

Scheduled PDSCH

CORESET #0

CORESET #1

Slot n

Slot n+1

Slot n+2

A threshold

Freq

Time

FIG. 7B

TCI state # 0

TCI state # 1

TCI state # 2

⋮

TCI state # N

↓

| Codepoint of TCI field | Activated TCI state for DL & UL |
|---|---|
| 0 | TCI state # x |
| 1 | TCI state # y |
| ... | TCI state # w |
| 7 | TCI state # z |

↓

DCI# 1

TCI field: TCI state # y

PUCCH including HARQ-ACK corresponding to DCI# 1

Time for beam application

Applied TCI state

TCI state # x | TCI state # y

Time

# FIG. 8

FIG. 9A

FIG. 9B

EP 4 648 339 A1

gNB Panel 1 Panel 2

DL/UL DL/UL

Both panels for
DL or UL

Beam# E

Beam# A

Beam# D

Beam# C

Beam# B

UE# 1

## FIG. 9C

SBFD symbols | Spatial domain DIVISION

gNB Panel 1 Panel 2

UL DL

One panel for DL
Another panel for UL

Beam #6

Beam# 1

Beam# 5

Beam# 4

Beam# 3

Beam# 2

DL UE # 2

DL UE # 1

## FIG. 9D

Scheduling DCI

FIG. 10

FIG. 11

receiving a DL information configuration — S1210

receiving the DL information for scheduling PDSCH — S1220

receiving the PDSCH according to the DL information and a first TCI state — S1230

# FIG. 12

1st TCI state

| CORESET# 1 | { ☑ Non-SBFD,     SBFD} |

2nd TCI state

| CORESET# 2 | {     Non-SBFD, ☑ SBFD} |

# FIG. 13A

Default TCI state e.g., 2nd TCI state

Scheduling DCI

CORESET# 2

DL

UL

DL

Slot n-1

CORESET#1

DL

Slot n

Scheduled PDSCH

DL

UL

DL

Slot n+1

Freq

Time

A threshold

# FIG. 13B

1st TCI state

| CORESET# 1 | { ☑ Non-SBFD,    SBFD} |

3rd TCI state

| CORESET# 3 | { ☑ Non-SBFD, ☑ SBFD} |

## FIG. 14A

Default TCI state:

Scheduling DCI

## FIG. 14B

3rd TCI state

| CORESET# 3 | { ▨ Non-SBFD, ▨ SBFD} |

## FIG. 15A

Scheduling DCI
Default TCI state

CORESET# 3

Scheduled
PDSCH

DL

DL

UL

DL

Slot n    Slot n+1

Freq

Time

A threshold

## FIG. 15B

1st TCI state

| CORESET# 1 |

{ ☑ Non-SBFD,    SBFD}

3rd TCI state

| CORESET# 3 |

{ ☑ Non-SBFD, ☑ SBFD}

## FIG. 16A

Scheduling DCI
Default TCI state

CORESET#1

CORESET# 3

Scheduled
PDSCH

DL

DL

UL

DL

Slot n

Slot n+1

Freq

Time

A threshold

## FIG. 16B

CORESETPoolIndex 0
(Non-SBFD)

1st TCI state

CORESET# 1

2nd TCI state

CORESET# 2

3rd TCI state

CORESET# 3

CORESETPoolIndex 1
(SBFD)

4th TCI state

CORESET# 4

5th TCI state

CORESET# 5

## FIG. 17A

Scheduling DCI

CORESET# 1

CORESET# 3

Scheduled
PDSCH

DL

DL

UL

DL

Slot n

Slot n+1

Freq

Time

A threshold

## FIG. 17B

FIG. 18

FIG. 19

Non-SBFD  SBFD

| 1st TCI state |

| CORESET# 0 |

| SS set 0 : Common |

Non-SBFD  SBFD

| 1st TCI state |  | 2nd TCI state |

| CORESET# 0 |  | CORESET# 1 |

| SS set 1 : UE-specific |

## FIG. 20A

Default TCI state:

Scheduling DCI

| SS set 0 | SS set 1 | Scheduled PDSCH |

DL

DL

UL

DL

Slot n

Slot n+1

Freq

Time

A threshold

## FIG. 20B

Non-SBFD                    SBFD                    Non-SBFD                    SBFD

1$^{st}$ TCI state                                      1$^{st}$ TCI state          2$^{nd}$ TCI state

CORESET# 0                              CORESET# 0          CORESET# 1

SS set 0 : Common                       SS set 0 : Common

## FIG. 21

Non-SBFD

```
┌ ─ ─ ─ ─ ─ ─ ─ ─ ┐
│  3ʳᵈ TCI state  │
└ ─ ─ ─ ─ ─ ─ ─ ─ ┘
        ↑
┌ ─ ─ ─ ─ ─ ─ ─ ─ ┐
│   CORESET 2     │
└ ─ ─ ─ ─ ─ ─ ─ ─ ┘
        ↑
┌─────────────────┐
│ SS set 2 : UE-specific │
└─────────────────┘
```

SBFD

```
┌ ─ ─ ─ ─ ─ ─ ─ ─ ┐
│  4ᵗʰ TCI state  │
└ ─ ─ ─ ─ ─ ─ ─ ─ ┘
        ↑
┌ ─ ─ ─ ─ ─ ─ ─ ─ ┐
│   CORESET 4     │
└ ─ ─ ─ ─ ─ ─ ─ ─ ┘
        ↑
┌─────────────────┐
│ SS set 4 : UE-specific │
└─────────────────┘
```

# FIG. 22A

FIG. 22B

**FIG. 23**

Start

S2350 — the latest slot = the latest slot -1

S2310 — Any SS set monitored in the latest slot — No

Yes

S2320 — Whether there is at least one SS set configured with common among the SS set(s) monitored in the latest slot

No {UE-specific only}

Yes {Common}

S2330 — The latest slot is same resource type as PDSCH reception — No

Yes

S2340 — Apply the TCI state associated with the lowest CORESET ID in the latest slot

S2360 — Whether more than one CORESETs associated with common SS set(s) in the latest slot — Yes

No

S2370 — Determined a CORESET from more than one CORESETs according to a priority rule

S2380 — Apply the TCI state used for the CORESET associated with a monitored common SS set in the latest slot

Non-SBFD            SBFD

1st TCI state

CORESET# 0

SS set 0 : Common

## FIG. 24A

Default TCI state:

Scheduling DCI

Scheduled
PDSCH

DL

SS set 0

DL

UL

DL

Slot n          Slot n+1

Freq

Time

A threshold

## FIG. 24B

Non-SBFD       SBFD

1st TCI state       2nd TCI state

CORESET# 0       CORESET# 1

SS set 1 : UE-specific

## FIG. 25A

Default TCI state:

Scheduling DCI

Scheduled PDSCH

DL

UL

DL

SS set 1

DL

Slot n       Slot n+1

Freq

Time

A threshold

## FIG. 25B

Non-SBFD

↑

┌─────────────────┐
│ 3ʳᵈ TCI state   │
└─────────────────┘

↑

┌─────────────────┐
│ CORESET# 2      │
└─────────────────┘

↑

┌─────────────────────────┐
│ SS set 2 : UE-specific  │
└─────────────────────────┘

## FIG. 26A

Default TCI state:

Scheduling DCI

Scheduled
PDSCH

DL

SS set 2

DL

UL

DL

Slot n          Slot n+1

Freq

↑

→ Time

A threshold

## FIG. 26B

Non-SBFD         SBFD        Non-SBFD        SBFD

| $1^{st}$ TCI state |

| CORESET# 0 |

| SS set 0 : Common |

| $1^{st}$ TCI state | | $2^{nd}$ TCI state |

| CORESET# 0 | | CORESET# 1 |

| SS set 1 : UE-specific |

# FIG. 27A

For UE with capability of SBFD

Default TCI state

| SS set 1 | DL | Scheduled PDSCH / DL |
| | UL | DL | UL |
| | DL | | DL |
| | SS set 0 / DL | |

Slot n-1    Slot n    Slot n+1

Freq
Time

A threshold

FIG. 27B

Non-SBFD                    SBFD

┌ ─ ─ ─ ─ ─ ─ ─ ┐
¦  1ˢᵗ TCI state  ¦
└ ─ ─ ─ ─ ─ ─ ─ ┘

┌ ─ ─ ─ ─ ─ ─ ┐
¦  CORESET# 0  ¦
└ ─ ─ ─ ─ ─ ─ ┘

SS set 0 : Common

## FIG. 28A

For UEs with or without capability of SBFD

Default TCI state (1ˢᵗ TCI state)

Scheduling DCI

| SS set 0 | DL | DL | Scheduled PDSCH |
|   |   | UL |   |
|   |   | DL |   |

Slot n              Slot n+1

Freq
↑
└→ Time

A threshold

## FIG. 28B

Non-SBFD       SBFD

1st TCI state     2nd TCI state

CORESET# 2

## FIG. 29A

Default TCI state

Scheduling DCI

CORESET# 2

CORESET# 1

Scheduled PDSCH

DL

UL

DL

DL

DL

UL

DL

Slot n-1      Slot n      Slot n+1

Freq

Time

A threshold

## FIG. 29B

Non-SBFD                     SBFD

┌ ─ ─ ─ ─ ─ ─ ─ ┐    ┌ ─ ─ ─ ─ ─ ─ ─ ┐
│  1st TCI state  │    │  2nd TCI state  │
└ ─ ─ ─ ─ ─ ─ ─ ┘    └ ─ ─ ─ ─ ─ ─ ─ ┘

┌─────────────┐
│   CORESET   │
└─────────────┘

# FIG. 30A

Default TCI state:

Scheduling DCI

| | CORESET | DL | Scheduled PDSCH | |
|---|---|---|---|---|

DL

UL

DL

Slot n          Slot n+1

Freq

Time

A threshold

# FIG. 30B

TCI state Pool Index 0
(Non-SBFD)

TCI state Pool Index 1
(SBFD)

1st TCI state —— CORESET# 1 —— 2nd TCI state

3rd TCI state —— CORESET# 2 —— 4th TCI state

## FIG. 31A

Default TCI state:

Scheduling DCI

CORESET#1

DL

Scheduled
PDSCH

DL

UL

DL

Slot n

Slot n+1

Freq

Time

A threshold

## FIG. 31B

Non-SBFD          SBFD

1st TCI state

CORESET

# FIG. 32A

Default TCI state:

Scheduling DCI

Scheduled
PDSCH

DL

CORESET

DL

UL

DL

Slot n          Slot n+1

Freq

Time

A threshold

# FIG. 32B

TCI state Pool Index 0
(Non-SBFD)

TCI state Pool Index 1
(SBFD)

1$^{st}$ TCI state —————— CORESET# 1 ———— 1$^{st}$ TCI state

2$^{nd}$ TCI state —————— CORESET# 2 ———— 3$^{rd}$ TCI state

CORESET# 3 ———— 4$^{th}$ TCI state

Default TCI state

Scheduling DCI

Scheduled
PDSCH

DL

CORESET#1

DL

UL

DL

Slot n

Slot n+1

Freq

Time

A threshold

# FIG. 33

Non-SBFD          SBFD

1st TCI state

CORESET 0

SS set 0 : Common

Non-SBFD          SBFD

2nd TCI state    3rd TCI state

CORESET

SS set 1 : UE-specific

## FIG. 34A

Default TCI state:

Scheduling DCI

CORESET#0

CORESET#1

DL

Scheduled PDSCH

DL

UL

DL

Slot n          Slot n+1

Freq

Time

A threshold

## FIG. 34B

Non-SBFD       SBFD        Non-SBFD       SBFD

| 1st TCI state |

| CORESET 0 |

| SS set 0 : Common |

| 1st TCI state |    | 2nd TCI state |

| CORESET 0 |

| SS set 1 : Common |

FIG. 35

Non-SBFD

```
┌ ─ ─ ─ ─ ─ ─ ─ ┐
│  3ʳᵈ TCI state  │
└ ─ ─ ─ ─ ─ ─ ─ ┘
        ↑
┌ ─ ─ ─ ─ ─ ─ ─ ┐
│  CORESET 2    │
└ ─ ─ ─ ─ ─ ─ ─ ┘
        ↑
┌───────────────┐
│ SS set 2 : UE-specific │
└───────────────┘
```

SBFD

```
┌ ─ ─ ─ ─ ─ ─ ─ ┐
│  4ᵗʰ TCI state  │
└ ─ ─ ─ ─ ─ ─ ─ ┘
        ↑
┌ ─ ─ ─ ─ ─ ─ ─ ┐
│  CORESET 4    │
└ ─ ─ ─ ─ ─ ─ ─ ┘
        ↑
┌───────────────┐
│ SS set 4 : UE-specific │
└───────────────┘
```

## FIG. 36A

FIG. 36B

Non-SBFD        SBFD

1st TCI state

CORESET 0

SS set 0 : Common

## FIG. 37A

Default TCI state:

Scheduling DCI

Scheduled
PDSCH

DL

SS set 0

DL

UL

DL

Slot n        Slot n+1

Freq

Time

A threshold

## FIG. 37B

Non-SBFD SBFD

```
         ↑                    ↑
┌ ─ ─ ─ ─ ─ ─ ─ ┐   ┌─────────────┐
│ 2ⁿᵈ TCI state │   │ 3ʳᵈ TCI state│
└ ─ ─ ─ ─ ─ ─ ─ ┘   └─────────────┘
         ↑                  ↗
┌ ─ ─ ─ ─ ─ ─ ─ ┐
│  CORESET 1    │
└ ─ ─ ─ ─ ─ ─ ─ ┘
         ↑
┌───────────────────┐
│ SS set 1 : UE-specific │
└───────────────────┘
```

# FIG. 38A

Default TCI state:

Scheduling DCI

```
┌──────────────┬────────────────────────┐
│          ┌─┐ │  ┌──────────────┐       │
│          │ │ │  │  Scheduled   │       │
│       S  │ │ │  │   PDSCH      │       │
│       S  │ │ │  └──────────────┘       │
│       s  │ │ │                     DL  │
│       e  │ │ │  ├────────────────────┤ │
│       t  │ │ │                     UL │
│       1  └─┘ │  ├────────────────────┤ │
│              │                     DL │
│          DL  │                        │
└──────────────┴────────────────────────┘
   Slot n            Slot n+1
```

Freq

↑

└→ Time

A threshold

# FIG. 38B

Non-SBFD             SBFD

1st Reference RS       2nd Reference RS

1st TCI state

CORESET# 2

## FIG. 39A

Default TCI state

Scheduling DCI

CORESET# 2

CORESET#1

Scheduled PDSCH

DL

UL

DL

DL

DL

UL

DL

Slot n-1        Slot n        Slot n+1

Freq

Time

A threshold

## FIG. 39B

Non-SBFD

SBFD

1st Reference RS

2nd Reference RS

1st TCI state

CORESET# 2

FIG. 40A

Default TCI state:

Scheduling DCI

CORESET

DL

Scheduled
PDSCH

DL

UL

DL

Slot n

Slot n+1

Freq

Time

A threshold

FIG. 40B

1st Reference RS group index 0
(Non-SBFD)

1st Reference RS group index 1
(SBFD)

Reference RS# 1 ——— 1st TCI state ——— Reference RS# 2

CORESET# 1

Reference RS# 3 ——— 2nd TCI state ——— Reference RS# 4

CORESET# 2

## FIG. 41A

Default TCI state:

Scheduling DCI

CORESET# 1

Scheduled
PDSCH

DL

DL

UL

DL

Slot n

Slot n+1

Freq

Time

A threshold

## FIG. 41B

1ˢᵗ Reference RS group index 0
(Non-SBFD)

1ˢᵗ Reference RS group index 1
(SBFD)

Reference RS# 1 —— 1ˢᵗ TCI state —— Reference RS# 2

CORESET# 1

Reference RS# 3 —— 2ⁿᵈ TCI state —— Reference RS# 4

CORESET# 2

Default TCI state

Scheduling DCI

CORESET#1

DL

Scheduled PDSCH

DL

UL

DL

Slot n

Slot n+1

Freq

Time

A threshold

# FIG. 42

Non-SBFD        SBFD        Non-SBFD        SBFD

```
┌──────────────┐   ┌──────────────┐   ┌──────────────┐   ┌──────────────┐
│ 1st Reference RS │ │ 2nd Reference RS │ │ 1st Reference RS │ │ 2nd Reference RS │
└──────────────┘   └──────────────┘   └──────────────┘   └──────────────┘
          ┌──────────────┐                      ┌──────────────┐
          │  1st TCI state │                    │  2nd TCI state │
          └──────────────┘                      └──────────────┘
          ┌──────────────┐                      ┌──────────────┐
          │  CORESET 0   │                      │   CORESET    │
          └──────────────┘                      └──────────────┘
          ┌──────────────────┐                  ┌──────────────────┐
          │ SS set 0 : Common │                 │ SS set 1 : UE-specific │
          └──────────────────┘                  └──────────────────┘
```

# FIG. 43A

Default TCI state:

Scheduling DCI

```
┌──────────────────────────────────────────────────┐
│        ┌───┐                ┌──────────────────┐  │
│ SS set 0│SS │               │   Scheduled      │  │
│        │set│               │     PDSCH        │  │
│        │ 1 │               └──────────────────┘  │
│        │   │                              DL      │
│        │   │               ├──────────────────────┤
│        │DL │                              UL      │
│        └───┘               ├──────────────────────┤
│                                            DL      │
└──────────────────────────────────────────────────┘
   Slot n                    Slot n+1
```

Freq

↑
└→ Time

A threshold

# FIG. 43B

Non-SBFD

3rd TCI state

CORESET 2

SS set 2 : UE-specific

SBFD

4th TCI state

CORESET 4

SS set 4 : UE-specific

## FIG. 44A

Default TCI state

Scheduling DCI

SS set 4

DL

UL

DL

SS set 2

DL

Scheduled PDSCH

DL

UL

DL

Slot n-1

Slot n

Slot n+1

Freq

Time

A threshold

## FIG. 44B

FIG. 45A

FIG. 45B

Non-SBFD                                    SBFD

┌ ─ ─ ─ ─ ─ ─ ─ ─ ─ ┐        ┌ ─ ─ ─ ─ ─ ─ ─ ─ ─ ─ ┐
│ 1ˢᵗ Reference RS  │        │ 2ⁿᵈ Reference RS   │
└ ─ ─ ─ ─ ─ ─ ─ ─ ─ ┘        └ ─ ─ ─ ─ ─ ─ ─ ─ ─ ─ ┘

                    ┌ ─ ─ ─ ─ ─ ─ ─ ┐
                    │  1ˢᵗ TCI state │
                    └ ─ ─ ─ ─ ─ ─ ─ ┘

                    ┌───────────────┐
                    │    CORESET    │
                    └───────────────┘

                ┌───────────────────────┐
                │  SS set 1 : UE-specific │
                └───────────────────────┘

# FIG. 46A

Default TCI state:

Scheduling DCI

| SS set 1 | DL | Scheduled PDSCH | DL |
| | | | UL |
| | | | DL |

Slot n                          Slot n+1

Freq

Time

A threshold

# FIG. 46B

Non-SBFD          SBFD
     ↑               ↑
Rx beam# 1      Rx beam# 2
      ↖         ↗
   ┌ ─ ─ ─ ─ ─ ─ ─ ┐
   │ 1st Reference RS │
   └ ─ ─ ─ ─ ─ ─ ─ ┘
           ↑
   ┌ ─ ─ ─ ─ ─ ─ ┐
   │  1st TCI state │
   └ ─ ─ ─ ─ ─ ─ ┘
           ↑
   ┌───────────────┐
   │  CORESET ID   │
   └───────────────┘

## FIG. 47A

1st TCI state with 1st Rx beam # 1

Scheduling DCI

| CORESET# 2 | | | Scheduled PDSCH |
| | DL | CORESET#1 | DL |
| UL | | DL | UL |
| DL | | | DL |

Slot n-1        Slot n          Slot n+1

Freq
↑
└→ Time

A threshold

## FIG. 47B

Non-SBFD          SBFD

↑                ↑

Rx beam# 1    Rx beam# 2    (maintained by UE)

↖                ↗

┌ ─ ─ ─ ─ ─ ─ ─ ─ ┐
│  1st Reference RS │
└ ─ ─ ─ ─ ─ ─ ─ ─ ┘

↑

┌ ─ ─ ─ ─ ─ ─ ─ ┐
│   1st TCI state  │
└ ─ ─ ─ ─ ─ ─ ─ ┘

↑

┌───────────────┐
│  CORESET ID   │
└───────────────┘

# FIG. 48A

1st TCI state with e.g., Rx beam # 2

Scheduling DCI

| CORESET | DL | Scheduled PDSCH |
| | | DL |
| | | UL |
| | | DL |

Slot n          Slot n+1

Freq

↑
└→ Time

A threshold

# FIG. 48B

Non-SBFD      SBFD    (maintained by UE)

Rx beam# 1

Reference RS, e.g., SSB

1ˢᵗ TCI state

CORESET ID

## FIG. 49A

1ˢᵗ TCI state with e.g., Rx beam # 1

Scheduling DCI

CORESET

Scheduled PDSCH

DL

DL

UL

DL

Slot n       Slot n+1

Freq

Time

A threshold

## FIG. 49B

1st CSI report configuration
(Non-SBFD)

2nd CSI report configuration
(SBFD)

1st TCI state ——— CORESET# 1

CORESET# 2 ——— 2nd TCI state

CORESET# 3 ——— 3rd TCI state

Default TCI state

Scheduling DCI

Scheduled
PDSCH

CORESET#1

DL

DL

UL

DL

Slot n

Slot n+1

Freq

Time

A threshold

FIG. 50

Non-SBFD          SBFD                    SBFD          Non-SBFD
    ↑               ↑                       ↑               ↑
Rx beam# 1      Rx beam# 2              Rx beam# 3      Rx beam# 4
        ↖       ↗                               ↖       ↗
    ┌ ─ ─ ─ ─ ─ ┐                           ┌ ─ ─ ─ ─ ─ ┐
    ┊ 1st TCI state ┊                       ┊ 2nd TCI state ┊
    └ ─ ─ ─ ─ ─ ┘                           └ ─ ─ ─ ─ ─ ┘
          ↑                                       ↑
    ┌───────────┐                           ┌───────────┐
    │ CORESET 0 │                           │ CORESET   │
    └───────────┘                           └───────────┘
          ↑                                       ↑
┌───────────────────┐                   ┌───────────────────┐
│ SS set 0 : Common │                   │ SS set 1 : UE-specific │
└───────────────────┘                   └───────────────────┘

## FIG. 51A

Default TCI state e.g., 1st TCI state with Rx beam # 1

Scheduling DCI

Slot n          Slot n+1

A threshold

Freq
↑
└→ Time

## FIG. 51B

EP 4 648 339 A1

**FIG. 52A**

**FIG. 52B**

92

Non-SBFD

1st TCI state

CORESET 0

SS set 0 : Common

# FIG. 53A

Scheduling DCI

Default TCI state

SS set 0

Scheduled PDSCH

DL

UL

DL

DL

DL

UL

DL

Slot n-1

Slot n

Slot n+1

Freq

Time

A threshold

# FIG. 53B

Non-SBFD      SBFD

1st TCI state      2nd TCI state

CORESET

## FIG. 54A

Scheduling DCI

Default TCI state

| CORESET | | DL | | | Scheduled PDSCH | DL |

DL | UL

DL | DL | UL

DL

Slot n-1     Slot n     Slot n+1

Freq

A threshold

Time

## FIG. 54B

2nd TCI state

| CORESET# 2 | {☑ SBFD} |

## FIG. 55A

Scheduling DCI

Default TCI state

| CORESET# 2 | | Scheduled PDSCH |
| | DL | | DL |
| | UL | DL | UL |
| | DL | | DL |
| Slot n-1 | Slot n | Slot n+1 |

Freq
↑
└→ Time

|← A threshold →|

## FIG. 55B

Default TCI state according to a pre-determined rule ———┐

Scheduling DCI

CORESET#1

DL

Scheduled PDSCH

DL

UL

DL

Slot n

Slot n+1

Freq

Time

A threshold

# FIG. 56

DCI : TCI field e.g., for PDSCH reception

| Codepoint of TCI field | TCI state ID |
|---|---|
| 0 | TCI state ID$_{0,0}$ |
| 1 | TCI state ID$_{0,1}$ |
| ... | ... |
| 7 | TCI state ID$_{0,7}$ |

TCI state ID used for PDSCH reception in non-SBFD symbols

| Codepoint of TCI field | TCI state ID |
|---|---|
| 0 | TCI state ID$_{1,0}$ |
| 1 | TCI state ID$_{1,1}$ |
| ... | ... |
| 7 | TCI state ID$_{1,7}$ |

TCI state ID used for PDSCH reception in SBFD symbols

MAC CE : TCI states activation

| | |
|---|---|
| C$_0$='0' | TCI state ID$_{0,0}$ |
| C$_1$='0' | TCI state ID$_{0,1}$ |
| ... | ... |
| C$_7$='0' | TCI state ID$_{0,7}$ |
| C$_8$='1' | TCI state ID$_{1,0}$ |
| C$_9$='1' | TCI state ID$_{1,1}$ |
| ... | ... |
| C$_{15}$='1' | TCI state ID$_{1,7}$ |

FIG. 57

TCI state field for SBFD symbols

| Codepoint of TCI field | TCI state ID |
|:---:|:---:|
| 0 | TCI state $ID_{1,0}$ |
| 1 | TCI state $ID_{1,1}$ |
| ... | ... |
| 7 | TCI state $ID_{1,7}$ |

Default TCI state may be indicated by the lowest codepoint of TCI state field

Scheduling DCI

CORESET#1

Scheduled PDSCH

DL

DL

UL

DL

Slot n    Slot n+1

A threshold

Freq

Time

## FIG. 58

DCI : TCI field e.g., for PDSCH reception

| Codepoint of TCI field | 1st TCI state associated with non-SBFD symbols | 2nd TCI state associated with SBFD symbols |
|---|---|---|
| 0 | TCI state $ID_{0,1}$ | TCI state $ID_{0,2}$ |
| 1 | TCI state $ID_{1,1}$ | TCI state $ID_{1,2}$ |

MAC CE : TCI states activation

| $C_0$='1' | TCI state $ID_{0,1}$ |
|---|---|
| R | TCI state $ID_{0,2}$ |
| $C_1$='1' | TCI state $ID_{1,1}$ |
| R | TCI state $ID_{1,2}$ |

FIG. 59

FIG. 60

EP 4 648 339 A1

MAC CE : TCI states activation

| $C_0$='0' | TCI state $ID_{0,0}$ |
|---|---|
| $C_1$='0' | TCI state $ID_{0,1}$ |
| ... | ... |
| $C_7$='0' | TCI state $ID_{0,7}$ |
| $C_8$='1' | TCI state $ID_{1,0}$ |
| $C_9$='1' | TCI state $ID_{1,1}$ |
| ... | ... |
| $C_{15}$='1' | TCI state $ID_{1,7}$ |

## FIG. 61A

DCI : TCI field

| Codepoint of TCI field | 1st TCI state ID (For e.g., non-SBFD symbols) | 2nd TCI state ID (For e.g., SBFD symbols) |
|---|---|---|
| 0 | TCI state $ID_{0,0}$ | TCI state $ID_{1,0}$ |
| 1 | TCI state $ID_{0,1}$ | TCI state $ID_{1,1}$ |
| ... | ... | ... |
| 7 | TCI state $ID_{0,7}$ | TCI state $ID_{1,7}$ |

## FIG. 61B

MAC CE activation/deactivation

| Codepoint of TCI field | 1st TCI state ID (For e.g., non-SBFD symbols) | 2nd TCI state ID (For e.g., SBFD symbols) |
|---|---|---|
| 0 | TCI state $ID_{0,0}$ | TCI state $ID_{1,0}$ |
| 1 | TCI state $ID_{0,1}$ | TCI state $ID_{1,1}$ |
| ... | ... | ... |
| 7 | TCI state $ID_{0,7}$ | TCI state $ID_{1,7}$ |

# FIG. 62A

DCI# 1

TCI field: Codepoint '1'

PUCCH including HARQ-ACK corresponding to DCI# 1

Time for beam application

Applied TCI state

| TCI state $ID_{0,0}$ TCI state $ID_{1,0}$ | TCI state $ID_{0,1}$ TCI state $ID_{1,1}$ |
|---|---|

Time

# FIG. 62B

| Applied TCI states | 1st TCI state ID (non-SBFD symbols) | 2nd TCI state ID (SBFD symbols) |
|---|---|---|
| | TCI state # 0 | TCI state # 1 |

Case 1

Serving cell

((o))

Non-SBFD

SBFD

TCI state # 0

TCI state # 1

UE

Default TCI state

Scheduling DCI

Scheduled PDSCH

DL

CORESET#1

DL

UL

DL

Freq

Time

Slot n     Slot n+1

A threshold (e.g., a time for decoding DCI)

FIG. 63

Case 2

Serving cell        Non-serving cell

Non-SBFD     SBFD

TCI state # 0          TCI state # 1

UE

| Applied TCI states | 1st TCI state ID (non-SBFD symbols) | 2nd TCI state ID (SBFD symbols) |
|---|---|---|
| | TCI state # 0 | TCI state # 1 |

Default TCI state

Scheduling DCI

CORESET # 2

Scheduled PDSCH

DL

UL      DL

DL

Slot n       Slot n+1

Freq

Time

A threshold

# FIG. 64

Case 2

Serving cell                    Non-serving cell

Non-SBFD          SBFD

TCI state # 0                              TCI state # 1

UE

| Applied TCI states | 1st TCI state ID (non-SBFD symbols) | 2nd TCI state ID (SBFD symbols) |
|---|---|---|
| | TCI state # 0 | TCI state # 1 |

Indicated TCI state

Scheduling DCI

| CORESET#1 | | Scheduled PDSCH | Scheduled PDSCH |
|---|---|---|---|
| | | DL | DL |
| | DL | UL | UL |
| | | DL | DL |

Freq

Time

Slot n              Slot n+1              Slot n+2

A threshold

FIG. 65

Case 2

| Applied TCI states | 1st TCI state ID (non-SBFD symbols) | 2nd TCI state ID (SBFD symbols) |
|---|---|---|
| | TCI state # 0 | TCI state # 1 |

FIG. 66

CSI-RS # a for non-SBFD

CSI-RS # a for SBFD

CRB #(1$^{st}$ startingRB+ 1$^{st}$ nrofRBs-1)

CRB #(1$^{st}$ startingRB+ 1$^{st}$ nrofRBs-1)

DL SB

CRB #(2$^{nd}$ startingRB+ 2$^{nd}$ nrofRBs+1)

CRB #(2$^{nd}$ startingRB+ 2$^{nd}$ nrofRBs)

CRB #(2$^{nd}$ startingRB+ 2$^{nd}$ nrofRBs-1)

DL SB

Outside DL SB(s) may include guard band

CRB #(2$^{nd}$ startingRB)

CRB #(2$^{nd}$ startingRB-1)

DL SB

CRB #(1$^{st}$ startingRB+1)

CRB #(1$^{st}$ startingRB)

CRB #(1$^{st}$ startingRB+1)

CRB #(1$^{st}$ startingRB)

FIG. 67

MAC CE : Activation of the frequency location of outside the DL subbands

| | | | | | | | |
|---|---|---|---|---|---|---|---|
| CSI-RS resource configuration ID | | | | | | | |
| $F_1$ | $F_2$ | $F_3$ | $F_4$ | $F_5$ | $F_6$ | $F_7$ | $F_8$ |

## FIG. 68

csi-ReportingBand
        subbands6 ="110011

## FIG. 69A

csi-ReportingBand
        subbands6 ="110011

## FIG. 69B

FIG. 70A

FIG. 70B

FIG. 70C

Rotated CSI-RS resource with
CRB index $N_{outside}^{start} + N_{outside}^{size} + 1$
Bandwidth $N_{CSI-RS}^{size}$

Outside DL SB(s)
CRB index $N_{outside}^{start}$
Bandwidth $N_{outside}^{size}$

BMP
CRB index $N_{BWP}^{start}$
Bandwidth $N_{BWP}^{size}$

CSI-RS resource with
Initial CRB index $N_{CSI-RS}^{start}$
Bandwidth $N_{CSI-RS}^{size}$

$\chi$

FIG. 71

EP 4 648 339 A1

BMP
  CRB index $N_{BWP}^{start}$
  Bandwidth $N_{BWP}^{size}$

Outside DL SB(s)
  CRB index $N_{outside}^{start}$
  Bandwidth $N_{outside}^{size}$

$\chi$

$\chi$

Rotated CSI-RS resource with
CRB index $N_{outside}^{start} + N_{outside}^{size} +1$
Bandwidth $\{N_{BWP}^{start} + N_{BWP}^{size}\}$ -
$\{N_{outside}^{start} + N_{outside}^{size}\}$

Rotated CSI-RS resource with
CRB index $N_{BWP}^{start}$
Bandwidth $N_{CSI\text{-}RS}^{size}$ - $\{N_{BWP}^{start} +$
$N_{BWP}^{size}\}$ - $\{N_{outside}^{start} + N_{outside}^{size}\}$

CSI-RS resource with
  Initial CRB index $N_{CSI\text{-}RS}^{start}$
  Bandwidth $N_{CSI\text{-}RS}^{size}$

FIG. 72

Rotated CSI-RS resource with
CRB index $N_{outside}^{start} + N_{outside}^{size} +1$
Bandwidth $\{N_{BWP}^{start} + N_{BWP}^{size}\} - \{N_{outside}^{start} + N_{outside}^{size}\}$

BMP
CRB index $N_{BWP}^{start}$
Bandwidth $N_{BWP}^{size}$

Outside DL SB(s)
CRB index $N_{outside}^{start}$
Bandwidth $N_{outside}^{size}$

$\chi$

Rotated CSI-RS resource with
CRB index $N_{BWP}^{start}$
Bandwidth $N_{BWP}^{start} - N_{outside}^{start}$

CSI-RS resource with
Initial CRB index $N_{CSI\text{-}RS}^{start}$
Bandwidth $N_{CSI\text{-}RS}^{size}$

FIG. 73

Possible CSI-RS resource allocated in frequency domain

(a) (b) (c) (d) (e) (f)

Outside DL SB(s)

RB $N_{outside}^{start} + N_{outside}^{size} - 1$

$\cdots$

RB $N_{outside}^{start} + 1$

RB $N_{outside}^{start}$

BWP

RB $N_{BWP}^{size} - 1$

$\cdots$

RB1

RB0

CSI-RS resource with
Initial CRB index $N_{CSI\text{-}RS}^{start}$
Bandwidth $N_{CSI\text{-}RS}^{size}$

FIG. 74

| | $N_{outside}^{start} > N_{CSI\text{-}RS}^{start}$ | $N_{outside}^{start} + N_{outside}^{size} -1 \geq N_{CSI\text{-}RS}^{start} \geq N_{outside}^{start}$ | $N_{CSI\text{-}RS}^{start} \geq N_{outside}^{start} + N_{outside}^{size} -1$ |
|---|---|---|---|
| $N_{CSI\text{-}RS}^{start} + N_{CSI\text{-}RS}^{size} -1 > N_{outside}^{start} + N_{outside}^{size} -1$ | Case (a) | Case (d) | Case (f) |
| $N_{outside}^{start} + N_{outside}^{size} -1 \geq N_{CSI\text{-}RS}^{start} + N_{CSI\text{-}RS}^{size} -1 \geq N_{outside}^{start}$ | Case (b) | Case (e) | ✕ |
| $N_{outside}^{start} > N_{CSI\text{-}RS}^{start} + N_{CSI\text{-}RS}^{size} -1$ | Case (c) | ✕ | ✕ |

$$\text{FIG. 75A}$$

Case (a)

CSI-RS resource in non-SBFD with
Initial CRB index $N_{CSI\text{-}RS}^{start}$
Bandwidth $N_{CSI\text{-}RS}^{size}$

Outside DL SB(s) with
Initial CRB index $N_{outside}^{start}$
Bandwidth $N_{outside}^{size}$

$2^{nd}$ CSI-RS resource in SBFD with
$N_{CSI\text{-}RS,SBFD,2}^{start} = N_{outside}^{start} + N_{outside}^{size}$
$N_{CSI\text{-}RS,SBFD,2}^{start} = \{N_{CSI\text{-}RS}^{start} + N_{CSI\text{-}RS}^{size}\} - \{N_{outside}^{start} + N_{outside}^{size}\}$

$1^{st}$ CSI-RS resource in SBFD with
$N_{CSI\text{-}RS,SBFD,1}^{start} = N_{CSI\text{-}RS}^{start}$
$N_{CSI\text{-}RS,SBFD,1}^{start} = N_{outside}^{start} - N_{CSI\text{-}RS}^{start}$

$$\text{FIG. 75B}$$

Case (b)

Outside DL SB(s) with

Initial CRB index $N^{start}_{outside}$

Bandwidth $N^{size}_{outside}$

CSI-RS resource in SBFD with

$N^{start}_{CSI-RS,SBFD} = N^{start}_{CSI-RS}$

$N^{size}_{CSI-RS,SBFD} = N^{start}_{outside} - N^{start}_{CSI-RS}$

CSI-RS resource in non-SBFD with

Initial CRB index $N^{start}_{CSI-RS}$

Bandwidth $N^{size}_{CSI-RS}$

## FIG. 75C

Case (c)

Outside DL SB(s) with

Initial CRB index $N^{start}_{outside}$

Bandwidth $N^{size}_{outside}$

CSI-RS resource in SBFD =
CSI-RS resource in non-SBFD

CSI-RS resource in SBFD with

$N^{start}_{CSI-RS,SBFD} = N^{start}_{CSI-RS}$

$N^{size}_{CSI-RS,SBFD} = N^{start}_{outside} - N^{start}_{CSI-RS}$

CSI-RS resource in non-SBFD with

Initial CRB index $N^{start}_{CSI-RS}$

Bandwidth $N^{size}_{CSI-RS}$

## FIG. 75D

Case (d)

CSI-RS resource in non-SBFD with

Initial CRB index $N^{start}_{CSI-RS}$

Bandwidth $N^{size}_{CSI-RS}$

CSI-RS resource in SBFD with

$N^{start}_{CSI-RS,SBFD} = N^{start}_{outside} + N^{size}_{outside}$

$N^{size}_{CSI-RS,SBFD} = \{N^{start}_{CSI-RS} + N^{size}_{CSI-RS}\} - \{N^{start}_{outside} + N^{size}_{outside}\}$

Outside DL SB(s) with

Initial CRB index $N^{start}_{outside}$

Bandwidth $N^{size}_{outside}$

## FIG. 75E

Case (e)

CSI-RS resource in non-SBFD with
Initial CRB index $N_{CSI\text{-}RS}^{start}$
Bandwidth $N_{CSI\text{-}RS}^{size}$

CSI-RS resource in SBFD may not
be transmitted

Outside DL SB(s) with
Initial CRB index $N_{outside}^{start}$
Bandwidth $N_{outside}^{size}$

## FIG. 75F

CSI-RS resource in SBFD = CSI-RS
resource in non-SBFD

Case (f)

CSI-RS resource in non-SBFD with
Initial CRB index $N_{CSI\text{-}RS}^{start}$
Bandwidth $N_{CSI\text{-}RS}^{size}$

CSI-RS resource in SBFD with
$N_{CSI\text{-}RS,SBFD}^{start} = N_{CSI\text{-}RS}^{start}$
$N_{CSI\text{-}RS,SBFD}^{size} = N_{CSI\text{-}RS}^{size}$

Outside DL SB(s) with
Initial CRB index $N_{outside}^{start}$
Bandwidth $N_{outside}^{size}$

## FIG. 75G

CSI-RS # a for non-SBFD

CSI-RS # a for SBFD

| CRB #(1$^{st}$ startingRB+ 1$^{st}$ nrofRBs-1) |
|---|

| CRB #(2$^{nd}$ startingRB+ 3$^{rd}$ nrofRBs-1) |
|---|

⋮

DL SB ⎰

| CRB #(2$^{nd}$ startingRB+1) |
|---|
| CRB #(2$^{nd}$ startingRB) |

DL SB

UL SB may include guard band

⋮

| CRB #(1$^{st}$ startingRB+ 2$^{nd}$ nrofRBs-1) |
|---|

⋮

DL SB ⎰

| CRB #(1$^{st}$ startingRB+1) |
|---|
| CRB #(1$^{st}$ startingRB) |

| CRB #(1$^{st}$ startingRB+1) |
|---|
| CRB #(1$^{st}$ startingRB) |

FIG. 76

CSI-RS # a for non-SBFD

CSI-RS # b for SBFD    CSI-RS # c for SBFD

CRB #($1^{st}$ startingRB+ $1^{st}$ nrofRBs-1)

CRB #($3^{rd}$ startingRB+ $3^{rd}$ nrofRBs-1)

DL SB

CRB #($3^{rd}$ startingRB+1)

CRB #($3^{rd}$ startingRB)

DL SB

UL SB may include guard band

CRB #($2^{nd}$ startingRB+ $2^{nd}$ nrofRBs-1)

DL SB

CRB #($1^{st}$ startingRB+1)

CRB #($1^{st}$ startingRB)

CRB #($2^{nd}$ startingRB+1)

CRB #($2^{nd}$ startingRB)

FIG. 77

CSI-Report Config

resources For Channel Measurement report —— CSI-Resource Config
Config Type {periodic}
CSI-Report Periodicity And Offset          csi-RS-Resource Set List —— nzp-CSI-RS-Resource Set
                                           resource Type {periodic}
                                                                      Repetition trs-Info

Option 2: One CSI-RS resource
Option 2-1: Non-contiguous CSI-RS resource allocation

nzp-CSI-RS-Resource

periodicity And Offset
qcl-Info Periodic CSI-RS ⟶ TCI-State Id

non-SBFD Type (legacy configuration)          SBFD Type (Option B)

1$^{st}$ resource Mapping                     2$^{nd}$ resource Mapping

FIG. 78

EP 4 648 339 A1

| CSI-Report Config |
|---|

resources For Channel Measurement report —— CSI-Resource Config
Config Type {periodic}
CSI-Report Periodicity And Offset

csi-RS-Resource Set List —— nzp-CSI-RS-Resource Set
resource Type {periodic}

Repetition trs-Info

Option 2: One CSI-RS resource
Option 2-2

| nzp-CSI-RS-Resource |
|---|

periodicity And Offset
qcl-Info Periodic CSI-RS → TCI-State Id

non-SBFD Type (legacy configuration)

| $1^{st}$ resource Mapping |
|---|

FIG. 79

The most recent CSI-RS for CSI reporting

## FIG. 80

## FIG. 81

| | |
|---|---|
| Subband PMI/CQI may be from measurement result of SBFD CSI-RS | The frequency resources INSIDE DL subband(s) |
| Subband PMI/CQI may be from measurement result of Non-SBFD CSI-RS | The frequency resources OUTSIDE DL subband(s) |
| Subband PMI/CQI may be from measurement result of SBFD CSI-RS | The frequency resources INSIDE DL subband(s) |

## FIG. 82

Bandwidth part e.g., 24 PRBs
Subband size $N_{PRB}^{SB}$

$N_{BWP}^{start} = 2,$
$N_{BWP}^{size} = 24$

| | |
|---|---|
| 27 | |
| 26 | 4RBs |
| 25 | |
| 24 | |
| 23 | |
| 22 | 4RBs |
| 21 | |
| 20 | |
| 19 | |
| 18 | 4RBs |
| 17 | |
| 16 | |
| 15 | |
| 14 | 4RBs |
| 13 | |
| 12 | |
| 11 | |
| 10 | 4RBs |
| 9 | |
| 8 | |
| 7 | |
| 6 | 4RBs |
| 5 | |
| 4 | |
| 3 | |
| 2 | |
| 1 | 4RBs |
| CRB | |
| 0 | |

Last subband $A_6$

Subband $A_5$

Subband $A_4$

Subband $A_3$

Subband $A_2$

Subband $A_1$

First subband $A_0$

csi-ReportingBand CHOISE
{subbands7 BIT STRING(SIZE(7)) ="$A_0$ $A_1$ $A_2$ $A_3$ $A_4$ $A_5$ $A_6$" }

## FIG. 83

| | |
|---|---|
| Subband PMI/CQI may be from measurement result of SBFD CSI-RS | The frequency resources INSIDE DL subband(s) |
| Subband CQI Index may be set to "0" | The frequency resources OUTSIDE DL subband(s) |
| Subband PMI/CQI may be from measurement result of SBFD CSI-RS | The frequency resources INSIDE DL subband(s) |

## FIG. 84

| | |
|---|---|
| Subband PMI/CQI may be from measurement result of SBFD CSI-RS | The frequency resources INSIDE DL subband(s) |
| Sub-band differential CQI value may be set to "3" | The frequency resources OUTSIDE DL subband(s) |
| Subband PMI/CQI may be from measurement result of SBFD CSI-RS | The frequency resources INSIDE DL subband(s) |

## FIG. 85

## FIG. 86

| | |
|---|---|
| Subband PMI/CQI may be from measurement result of Non-SBFD CSI-RS | The frequency resources INSIDE DL subband(s) |
| Subband PMI/CQI may be from measurement result of Non-SBFD CSI-RS | The frequency resources INSIDE DL subband(s) |
| Subband PMI/CQI may be from measurement result of Non-SBFD CSI-RS | The frequency resources INSIDE DL subband(s) |

## FIG. 87

| D |
|---|
| U |
| D |

| D |
|---|
| D |
| D |

PDSCH carrying SP CSI-RS activation command or P CSI-RS resource reconfiguration

↑ HARQ-ACK

CSI-RS SBFD

↑ CSI Reporting

CSI-RS Non-SBFD

↑ CSI Reporting

→ Time

## FIG. 88

| | |
|---|---|
| Subband PMI/CQI may be from measurement result of SBFD CSI-RS | The frequency resources INSIDE DL subband(s) |
| Subband CQI Index may be set to "0" or Sub-band differential CQI value may be set to "3" | The frequency resources OUTSIDE DL subband(s) |
| Subband PMI/CQI may be from measurement result of SBFD CSI-RS | The frequency resources INSIDE DL subband(s) |

FIG. 89

CSI-Report Config

resources For Channel Measurement report —— CSI-Resource Config
Config Type {periodic}
CSI-Report Periodicity And Offset                           csi-RS-Resource Set List —— nzp-CSI-RS-Resource Set
                                                            resource Type {periodic}

                                                                    Repetition trs-Info

nzp-CSI-RS-Resource

periodicity And Offset

non-SBFD Type (legacy configuration)                SBFD Type (Option A)

1st resource Mapping                                2nd resource Mapping
qcl-Info Periodic CSI-RS $\rightarrow$ 1st TCI-State Id    qcl-Info Periodic CSI-RS $\rightarrow$ 1st or 2nd TCI-State Id

FIG. 90

FIG. 91

CSI Reporting Instance | CSI-RS Non-SBFD | CSI-RS SBFD | CSI Reporting Instance CSI of non-SBFD CSI-RS CSI of SBFD CSI-RS → Time

## FIG. 92A

CSI Reporting Instance | CSI-RS SBFD | CSI-RS SBFD | CSI Reporting Instance ⊠ CSI of non-SBFD CSI-RS → May not be reported since no updating CSI of SBFD CSI-RS → Time

## FIG. 92B

CSI Reporting Instance | CSI-RS Non-SBFD | CSI-RS Non-SBFD | CSI Reporting Instance CSI of non-SBFD CSI-RS ⊠ CSI of SBFD CSI-RS → May not be reported since no updating → Time

## FIG. 92C

EP 4 648 339 A1

CSI Reporting Instance

CSI Reporting Instance     CSI-RS SBFD     CSI Reporting Instance
CSI selection indicator value: "3"
CSI of SBFD CSI-RS
⊗ CSI of non-SBFD CSI-RS
→ Time     ⟶ Since no updating

## FIG. 93A

CSI Reporting Instance     CSI-RS Non-SBFD     CSI Reporting Instance
CSI selection indicator value: "2"
CSI of non-SBFD CSI-RS
⊗ CSI of SBFD CSI-RS
→ Time     ⟶ Since no updating

## FIG. 93B

EP 4 648 339 A1

CSI Reporting Instance

↑ CSI Reporting Instance      | CSI-RS    ↑    CSI selection indicator value: "1"
                        | SBFD            CSI of SBFD CSI-RS
                                    CSI of non-SBFD CSI-RS

——→ Since no updating

——————————————→ Time

## FIG. 94A

CSI Reporting Instance

↑ CSI Reporting Instance      | CSI-RS    ↑    CSI selection indicator value: "0"
                        | Non-SBFD     CSI of non-SBFD CSI-RS
                                    CSI of SBFD CSI-RS

——→ Since no updating

——————————————→ Time

## FIG. 94B

Dropped, due to low priority

CSI-RS
Non-SBFD

CSI Reporting Instance
CSI of non-SBFD CSI-RS

CSI-RS
SBFD

CSI Reporting Instance
CSI selection indicator value: "3"
CSI of SBFD CSI-RS
CSI of non-SBFD CSI-RS

Time

FIG. 95

transmitting a DL information configuration — S9610

transmitting the DL information for scheduling PDSCH — S9620

transmitting the PDSCH according to the DL information and a first TCI state — S9630

# FIG. 96

Communication device
9700

Memory
9720

Processor
9710

Transceiver
9730

# FIG. 97

# EUROPEAN SEARCH REPORT

**Application Number**

EP 25 17 1753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/388081 A1 (KIM HYUNGTAE [KR] ET AL) 30 November 2023 (2023-11-30) * paragraphs [0052] - [0192], [0281] - [0488] * * figures 1-22 * | 1-19 | INV. H04L5/00 H04B7/08 H04W72/23 H04L5/14 |
| X | US 2021/400700 A1 (WANG GUOTONG [CN] ET AL) 23 December 2021 (2021-12-23) * paragraphs [0013] - [0015], [0021] - [0069] * * figures 1-5 * | 1-19 | |
| A | PRAVJYOT SINGH DEOGUN ET AL: "Discussion on subband non-overlapping full duplex Tx-Rx and measurement operations", 3GPP DRAFT; R1-2402824; TYPE DISCUSSION; NR_DUPLEX_EVO-CORE , vol. RAN WG1, no. Changsha, Hunan Province, CN; 20240415 - 20240419 5 April 2024 (2024-04-05), XP052586817, Retrieved from the Internet: URL:https://www.3gpp.org/ftp/TSG_RAN/WG1_R L1/TSGR1_116b/Docs/R1-2402824.zip R1-2402824 Discussion on subband non-overlapping full duplex TxRx and measurement operations.docx [retrieved on 2024-04-05] * the whole document * | 1-19 | |

**TECHNICAL FIELDS SEARCHED (IPC)**

H04L
H04W
H04B

The present search report has been drawn up for all claims

| Place of search | Date of completion of the search | Examiner |
|---|---|---|
| The Hague | 26 September 2025 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1753

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | Publication date | Patent family member(s) | Publication date |
|---|---|---|---|
| US 2023388081 A1 | 30-11-2023 | CN 115053614 A | 13-09-2022 |
| | | EP 4106467 A1 | 21-12-2022 |
| | | JP 7346748 B2 | 19-09-2023 |
| | | JP 2023511920 A | 23-03-2023 |
| | | KR 20220141279 A | 19-10-2022 |
| | | US 2023047603 A1 | 16-02-2023 |
| | | US 2023388081 A1 | 30-11-2023 |
| | | WO 2021162334 A1 | 19-08-2021 |
| US 2021400700 A1 | 23-12-2021 | DE 112019005612 T5 | 12-08-2021 |
| | | US 2021400700 A1 | 23-12-2021 |
| | | WO 2020096852 A1 | 14-05-2020 |

EPO FORM P0459

For more details about this annex : see Official Journal of the European Patent Office, No. 12/82